(19) Europäisches Patentamt
European Patent Office
Office européen des brevets

(11) EP 4 410 100 A2

(12) EUROPEAN PATENT APPLICATION

(43) Date of publication:
**07.08.2024 Bulletin 2024/32**

(21) Application number: **24175261.7**

(22) Date of filing: **04.02.2009**

(51) International Patent Classification (IPC):
***A01N 59/26*** *(2006.01)*

(52) Cooperative Patent Classification (CPC):
(C-Sets available)
**A01N 43/56** (Cont.)

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**RS**

(30) Priority: **05.02.2008 PCT/EP2008/051375**
**01.08.2008 EP 08161623**

(62) Document number(s) of the earlier application(s) in accordance with Art. 76 EPC:
**19182326.9 / 3 586 631**
**09707307.6 / 2 240 027**

(71) Applicant: **BASF SE**
**67056 Ludwigshafen am Rhein (DE)**

(72) Inventors:
- **WILHELM, Ronald**
**65719 Hofheim (DE)**
- **PRADE GUTTENKUNST, Alexander**
**SP 09851-550 Sao Bernardo do Campo (BR)**
- **MERCK, Michael**
**20020 Arese (IT)**
- **BEGLIOMINI, Edson**
**SP 04362-030 Sao Paolo (BR)**
- **ECCO, Marlon**
**78740-205 Rondonopolis, Mato Grosso (BR)**
- **TAVARES-RODRIGUES, Marco Antonio**
**SP 04317-180 Jabaquara - Sao Paulo (BR)**
- **VOESTE, Dirk**
**67117 Limburgerhof (DE)**

(74) Representative: **Meissner Bolte Partnerschaft mbB**
**Patentanwälte Rechtsanwälte**
**Postfach 86 06 24**
**81633 München (DE)**

Remarks:
This application was filed on 10-05-2024 as a divisional application to the application mentioned under INID code 62.

# (54) PLANT HEALTH COMPOSITION

(57) The present invention relates to mixtures comprising a specific amide compound as defined in the claims and the description and a further fungicide as defined in the claims and the description, and to the use of these mixtures for combatting pests.

EP 4 410 100 A2

(52) Cooperative Patent Classification (CPC): (Cont.)

C-Sets
**A01N 43/56, A01N 37/38, A01N 37/46,**
**A01N 37/50, A01N 43/36, A01N 43/50,**
**A01N 43/54, A01N 43/56, A01N 43/653,**
**A01N 43/76, A01N 43/78, A01N 43/80,**
**A01N 43/88, A01N 47/02, A01N 47/24,**
**A01N 47/26, A01N 47/34, A01N 47/38,**
**A01N 55/00, A01N 57/12, A01N 59/26;**
**A01N 43/56, A01N 2300/00**

## Description

The present invention relates to a method for improving the plant health of at least one plant variety, which method comprises treating the plant propagules with an amide having the formula I (compound I)

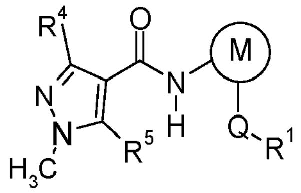

I

in which the substituents are as defined below:

$R^4$ is methyl, difluoromethyl or trifluoromethyl;
$R^5$ is hydrogen or fluorine;

M is a thienyl ring or a phenyl ring, wherein the phenylring is substituted or not substituted with a fluorine atom;

Q is a direct bond, a cyclopropylene or an anellated bicyclo[2.2.1]heptane ring;

$R^1$ is cyclopropyl, 1,3-dimethylbutyl, isopropyl, phenyl substituted with two or three halogen atoms or a trifluoromethylthio radical.

In addition, the present invention relates to a method for improving the plant health of at least one plant variety, which method comprises treating the plant propagules with a secondary mixture comprising an amide of the formula I (compound I) and a further fungicide II (compound II) or an insecticide (compound III).

The present invention also relates to a method for improving the plant health of at least one plant variety, which method comprises treating the plant propagules with a ternary mixture comprising an amide of the formula I (compound I) and a further fungicide II (compound II) and as a third component either a further fungicide III (compound IIb) or an insecticide (compound III).

The present invention also relates to the use of an amide having the formula I (compound I) for improving the plant health of at least one plant variety.

In crop protection, there is a continuous need for compositions that improve the health of plants. Healthier plants are desirable since they result among others in better crop yields and/or a better quality of the plants, plant parts and/or their products. Healthier plants also better resist to abiotic stress.

It was therefore an object of the present invention to provide a pesticidal composition which solves the problems outlined above, and which should, in particular, improve plant health.

Surprisingly, we have found that this object is achieved by treating plant propagules with an amide of the formula I (compound I)

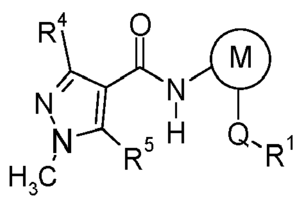

I

in which the substituents are as defined below:

$R^4$ is methyl, difluoromethyl, or trifluoromethyl;
$R^5$ is hydrogen or fluorine;

M is a thienyl ring or a phenyl ring, wherein the phenylring is substituted or not substituted with a fluorine atom;

Q is a direct bond, a cyclopropylene or an anellated bicyclo[2.2.1]heptane ring;

$R^1$ is cyclopropyl, 1,3-dimethylbutyl, isopropyl, phenyl substituted with two or three halogen atoms or a trifluoromethylthio radical.

It was also found that certain mixtures with further fungicides (compound II or IIb) or insecticides (compound III) showed synergistic plant health effects in the method of the present invention. Within these mixtures, also synergistic mixtures with synergistic activity have been found.

WO 01/82701 discloses a method for inducing resistance of plants against virus infection by repeated application of strobilurin type active compounds. However, repeated application of fungicides may select resistant populations of the harmful fungi.

PCT/EP/2008/051672 discloses that certain anilids induce virus tolerance.

WO 07/104658 comprises a method of inducing tolerance of plants against bacterioses by application of strobilurins with anilid compounds to plants.

WO 05/018324 discloses plant health effects of certain anilid compounds. The particular anilid compounds of formula I are not explicitly disclosed therein.

Combinations comprising a specific amide of formula I and strobilurine fungicides are disclosed in WO 07/017416. However, this publication is silent about potential plant health effects.

Combinations of amides of formula I with several fungicides are disclosed in WO 07/017416, PCT/EP2008/051331, PCT/EP2008/051375, WO 08/000377,WO 07/128756, EP application No. 08152059.5, EP application No. 08155881.9, EP application No. 07119858.4 and PCT/EP2008/051955. However, herein no hints towards synergistic plant health effects are given.

In addition, none of these references discloses the synergistic plant health effects of the mixtures as defined at the outset or describes the synergistic fungicidal mixtures in detail.

The amides of formula I (compound I) are known as fungicides (cf., for example, EP-A 545 099, EP-A 589 301, EP-A 737682, EP-A 824099, WO 99/09013, WO 03/010149, WO 03/070705, WO 03/074491, WO 04/005242, WO 04/035589, WO 04/067515, WO 06/087343, ). They can be prepared in the manner described therein.

The further fungicides (compound II or IIb) or the insecticides (compound III) as well as their pesticidal action and methods for producing them are generally known. For instance, the commercially available compounds may be found in The Pesticide Manual, 13th Edition, British Crop Protection Council (2003) among other publications.

The below remarks as to preferred embodiments of the compounds selected from the group consisting of compounds (I), (II), (IIb) and (III) and respective mixtures comprising the compounds selected from the group consisting of compounds (I), (II), (IIb) and (III), to their preferred use and methods of using them are to be understood either each on their own or preferably in combination with each other.

In a preferred embodiment, the amide (compound I) is a compound of the formula Ia

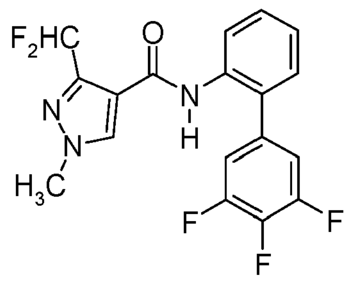

Ia

which is N-(3',4',5'-trifluorobiphenyl-2-yl)- 3-difluoromethyl-1-methyl-1H-pyrazole-4-carboxamide, herein after referred to as "Ia".

According to another preferred embodiment, the amide (compound I) is a compound of the formula Ib

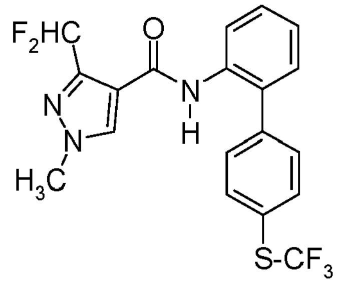

Ib

which is N-[2-(4'-trifluoromethylthio)-biphenyl]-3-difluoromethyl-1-methyl-1H-pyrazole-4-carboxamide, herein after referred to as "Ib"

According to a further preferred embodiment, the amide (compound I) is a compound of the formula Ic

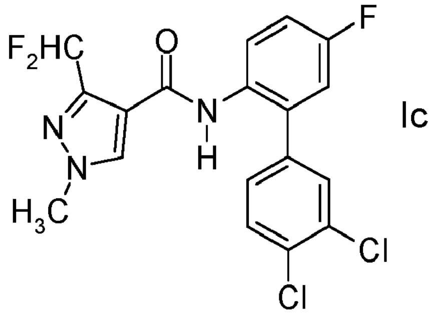

Ic

which is N-(3',4'-dichloro-5-fluorobiphenyl-2-yl)-3-difluoromethyl-1-methylpyrazole-4-carboxamide (common name: bixafen), herein after referred to as "Ic".

According to a further preferred embodiment, the amide (compound I) is a compound of the formula Id

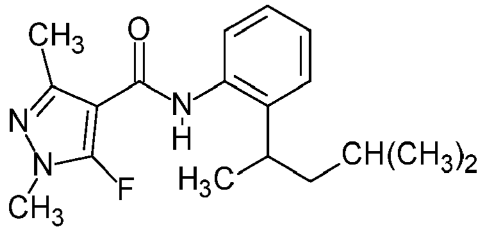

Id

which is N-[2-(1,3-dimethylbutyl)-phenyl]-1,3-dimethyl-5-fluoro-1H-pyrazole-4-carboxamide, herein after referred to as "Id".

According to a further preferred embodiment, the amide (compound I) is a compound of the formula Ie

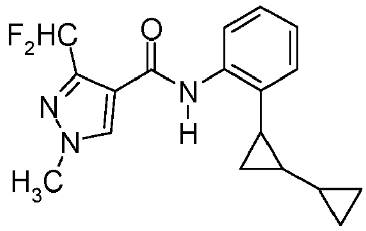

Ie

which is N-(2-bicyclopropyl-2-yl-phenyl)-3-difluoromethyl-1-methyl-1H-pyrazole-4-carboxamide, wherein this compound can be found in its cis-isomers and trans-isomers (common name: sedaxane).

According to a further preferred embodiment, the amide (compound I) is a compound of the formula If

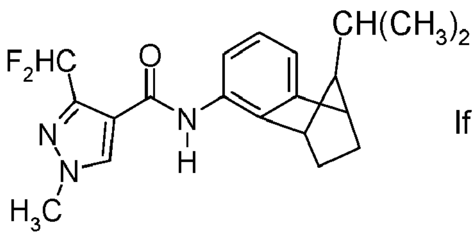

If

which is N-[1,2,3,4-tetrahydro-9-(1-methylethyl)-1,4-methanonaphthalen-5-yl]-3-(difluoromethyl)-1-methyl-1H-pyrazole-4-carboxamide (common name: isopyrazam), herein after referred to as "If".

According to a further preferred embodiment, the amide (compound I) is a compound of the formula Ig

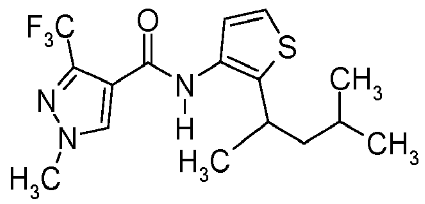

Ig

which is *N*-[2-(1,3-dimethylbutyl)-3-thienyl]-1-methyl-3-(trifluoromethyl)-1*H*-pyrazole-4-carboxamide (common name: penthiopyrad), herein after referred to as "Ig".

In a more preferred embodiment, compound (I) is selected from the group consisting of Ia, Ic, If and Ig.

In a another more preferred embodiment, compound (I) is selected from the group consisting of Ia, Id, Ie and Ig, most preferably compound (I) is compound Ia.

As mentioned at the outset, the present invention also relates to a method for improving the plant health of at least one plant variety, which method comprises treating the plant propagules with a specified mixture. In one embodiment, this mixture comprises

(1) an amide of the formula I (compound I); and

(2) a further fungicide II (compound II), wherein compound (II) is selected from the group consisting of

(i) strobilurines, selected from azoxystrobin (S1), dimoxystrobin (S2), fluoxastrobin (S3), kresoxim-methyl (S4), metominostrobin (S5), orysastrobin (S6), picoxystrobin (S7), pyraclostrobin (S8), trifloxystrobin (S9), enestroburin (S10), pyribencarb (S11), (E)-2-[2-(2,5-Dimethyl-phenoxymethyl)-phenyl]-3-methoxy-acrylic acid methyl ester (S12) and 2-{2-[(E)-3-(2,6-Dichloro-phenyl)-1-methyl-prop-2-en-(E)-ylideneaminooxymethyl]-phenyl}-2-[(E)-methoxyimino]-N-methylacetamide (S13);

(ii) azoles, selected from cyproconazole (A1), difenoconazole (A2), epoxiconazole (A3), flusilazole (A4), fluquinconazole (A5), flutriafol (A6), ipconazole (A7), metconazole (A8), propiconazole (A9), prothioconazole (A10), tebuconazole (A11), cyazofamid (A12), prochloraz (A13), ethaboxam (A14), triazoxide (A15), tetraconazole (A16), triadimefon (A17), triadimenol (A18), triticonazole (A19), uniconazole (A20), 1-(4-chloro-phenyl)-2-([1,2,4]triazol-1-yl)-cycloheptanol (A21), azaconazole (A22), bitertanol (A23), bromuconazole (A24), cifenoconazole (A25), diniconazole (A26), diniconazole-M (A27), fenbuconazole (A28), hexaconazole (A29), imibenconazole (A30), myclobutanil (A31), oxpoconazole (A32), paclobutrazole (A33), penconazole (A34), simeconazole (A35), imazalil (A36), pefurazoate (A37), triflumizol (A38), etridiazole (A39), hymexazole (A40) and 2-(4-chloro-phenyl)-N-[4-(3,4-dimethoxy-phenyl)-isoxazol-5-yl]-2-prop-2-yn-yloxy-acetamide (A41);

(iii) various, selected from metalaxyl (V1), metalaxyl-M (mefenoxam) (V2), silthiofam (V3), pyrimethanil (V4), dimethomorph (V5), iprodione (V6), fludioxonil (V7), thiram (V8), thiophanate-methyl (V9), carbendazim (V10), fosetyl-aluminium (V11), phosphorous acid and its salts (V12), metiram (V13), mancozeb (V14), famoxadone (V15) and fenamidone (V16);

(3) and optionally as a third component a further fungicide III (compound IIb), wherein compound (IIb) is selected from the group consisting of

(ii) azoles, selected from cyproconazole (A1), difenoconazole (A2), epoxiconazole (A3), flusilazole (A4), fluquinconazole (A5), flutriafol (A6), ipconazole (A7), metconazole (A8), propiconazole (A9), prothioconazole (A10), tebuconazole (A11), cyazofamid (A12), prochloraz (A13), ethaboxam (A14), triazoxide (A15), tetraconazole (A16), triadimefon (A17), triadimenol (A18), triticonazole (A19), uniconazole (A20), 1-(4-chloro-phenyl)-2-([1,2,4]triazol-1-yl)-cycloheptanol (A21), azaconazole (A22), bitertanol (A23), bromuconazole (A24), cifenoconazole (A25), diniconazole (A26), diniconazole-M (A27), fenbuconazole (A28), hexaconazole (A29), imibenconazole (A30), myclobutanil (A31), oxpoconazole (A32), paclobutrazole (A33), penconazole (A34), simeconazole (A35), imazalil (A36), pefurazoate (A37), triflumizol (A38), etridiazole (A39), hymexazole (A40) and 2-(4-chloro-phenyl)-N-[4-(3,4-dimethoxy-phenyl)-isoxazol-5-yl]-2-prop-2-yn-yloxy-acetamide (A41);

(iii) various, selected from metalaxyl (V1), metalaxyl-M (mefenoxam) (V2), silthiofam (V3), pyrimethanil (V4), dimethomorph (V5), iprodione (V6), fludioxonil (V7), thiram (V8), thiophanate-methyl (V9), carbendazim (V10), fosetyl-aluminium (V11), phosphorous acid and its salts (V12), metiram (V13), mancozeb (V14), famoxadone (V15) and fenamidone (V16);

(4) or optionally as a third component an insecticide (compound III), wherein compound (III) is selected from the group consisting of chloranthraniliprole (Ch), fipronil (Fip) and ethiprole (Ethi).

in plant health synergistically effective amounts.

The term "plant health effective amount" denotes an amount of the compound (I) or the mixtures of compound (I) and at least one compound selected from the group consisting of compounds (II), (IIb) and (III), which is sufficient for achieving plant health effects as defined herein below. More exemplary information about amounts, ways of application and suitable ratios to be used is given below. Anyway, the skilled artisan is well aware of the fact that such an amount can vary in a broad range and is dependent on various factors, e.g. the treated cultivated plant or material and the climatic conditions.

The term "synergistic" means that the simultaneous, that is joint or separate, application of the compound (I) and at least one compound selected from the group consisting of compounds (II), (IIb) and (III), or the successive application of the compound (I) and at least one compound selected from the group consisting of compounds (II), (IIb) and (III), provides enhanced plant health effects compared to the plant health effects that are possible with the individual compounds.

Preferably, compound (II) is selected from the group consisting of

(i) strobilurines selected from azoxystrobin (S1), dimoxystrobin (S2), fluoxastrobin (S3), kresoxim-methyl (S4), metominostrobin (S5), orysastrobin (S6), picoxystrobin (S7), pyraclostrobin (S8), trifloxystrobin (S9) and enestroburin (S10);

(ii) azoles selected from cyproconazole (A1), difenoconazole (A2), epoxiconazole (A3), flusilazole (A4), fluquinconazole (A5), flutriafol (A6), ipconazole (A7), metconazole (A8), propiconazole (A9), prothioconazole (A10), tebuconazole (A11), cyazofamid (A12), prochloraz (A13), ethaboxam (A14), triazoxide (A15), triadimenol (A18), triticonazole (A19), myclobutanil (A31), imazalil (A36) and hymexazole (A40);

(iii) various selected from metalaxyl (V1), metalaxyl-M (mefenoxam) (V2), silthiofam (V3), pyrimethanil (V4), dimethomorph (V5), iprodione (V6), fludioxonil (V7), thiram (V8), thiophanate-methyl (V9), carbendazim (V10), fosetyl-aluminium (V11), phosphorous acid and its salts (V12), metiram (V13), mancozeb (V14), famoxadone (V15) and fenamidone (V16).

In another embodiment, compound (II) is preferably selected from the group consisting of

(i) strobilurines selected from azoxystrobin (S1), fluoxastrobin (S3), orysastrobin (S6), picoxystrobin (S7), pyraclostrobin (S8), trifloxystrobin (S9) and enestroburin (S10);

(ii) azoles, selected fromdifenoconazole (A2), epoxiconazole (A3), fluquinconazole (A5), flutriafol (A6), ipconazole (A7), metconazole (A8), prothioconazole (A10), tebuconazole (A11), prochloraz (A13), ethaboxam (A14), triadimenol (A18), triticonazole (A19), myclobutanil (A31), imazalil (A36) and hymexazole (A40);

(iii) various, selected from metalaxyl (V1), metalaxyl-M (mefenoxam) (V2), silthiofam (V3), pyrimethanil (V4), dimethomorph (V5), iprodione (V6), fludioxonil (V7), thiram (V8), thiophanate-methyl (V9), carbendazim (V10), fosetyl-aluminium (V11), phosphorous acid and its salts (V12), metiram (V13) and mancozeb (V14).

More preferably, compound (II) is selected from the group consisting of azoxystrobin (S1), orysastrobin (S6), pyraclostrobin (S8), trifloxystrobin (S9), difenoconazole (A2), epoxiconazole (A3), fluquinconazole (A5), flutriafol (A6), metconazole (A8), prothioconazole (A10), tebuconazole (A11), prochloraz (A13), triticonazole (A19), metalaxyl (V1), metalaxyl-M (mefenoxam) (V2), silthiofam (V3), pyrimethanil (V4), dimethomorph (V5), fludioxonil (V7), thiram (V8), thiophanate-methyl (V9), fosetyl-aluminium (V11) and phosphorous acid and its salts (V12).

Most preferably, compound (II) is selected from the group consisting of azoxystrobin (S1), orysastrobin (S6), pyraclostrobin (S8), and trifloxystrobin (S9), wherein orysastrobin (S6) is the utmost preferred fungicide II.

In the terms of the present invention "mixture" is not restricted to a physical mixture comprising compound (I) and at least one compound selected form the group consisting of compounds (II), (IIb) and (III) but refers to any preparation form of compound (I) and at least one compound selected from the group consisting of compounds (II), (IIb) and (III), the use of which is time- and locus-related. In one embodiment of the invention "mixture" refers to a physical mixture of the compound (I) (= one compound I) and one compound selected form the group consisting of compounds (II), (IIb) and (III) (= one of the specific fungicides II or one of the specific fungicides IIb or one of the insecticides III as defined).

In another embodiment of the invention, "mixture" refers to ternary mixtures comprising a compound (I) and one compound (II) and one compound selected from the group consisting of compounds (IIb) and (III).

In another embodiment of the invention, "mixture" refers to one comound (I) and at least one compound selected from the group consisting of compounds (II), (IIb) and (III) formulated separately but applied to the same plant propagule in a temporal relationship, i.e. simultaneously or subsequently, the subsequent application having a time interval which allows a combined action of the compounds.

In another embodiment of the invention, the amide compound of the formula I (compound I) and at least one further compound selected from the group consisting of compounds (II), (IIb) and (III) are applied simultaneously, either

as a mixture or separately, or subsequently to the plant propagules.

Furthermore, the individual compounds of the mixtures according to the invention such as parts of a kit or parts of the binary mixture may be mixed by the user himself in a spray tank and further auxiliaries may be added, if appropriate (tank mix). This applies also in case ternary mixtures are used according to the invention.

In another embodiment, these mixtures comprise

(1) an amide of the formula I (compound I) and

(2) an insecticide (compound III) selected from the group consisting of chloranthraniliprole (Ch), fipronil (Fip) and ethiprole (Ethi).

in synergistically plant health effective amounts.

The preferred insecticides (compound III) are fipronil (Fip) or chloranthraniliprole (Ch).

Preferably, all above-mentioned mixtures comprise either Ia, Ib, Ic, Id, Ie, If or Ig as compound (I). More preferably, these mixtures comprise either Ia, Id, Ie or Ig as compound (I). Most preferably, these mixtures comprise either Ia, Id or Ie. In a particular preferred embodiment, these mixtures comprise Ia as compound (I).

Thus, with respect to their intended use in the methods of the present invention, the following secondary mixtures listed in table 1 comprising one compound (I) and one compound (II) or one compound (III) are a preferred embodiment of the present invention.

Table 1

| No. | (I) | (II) or (III) |
|---|---|---|
| M-1 | Ia | orysastrobin |
| M-2 | Ia | pyraclostrobin |
| M-3 | Ia | trifloxystrobin |
| M-4 | Ia | azoxystrobin |
| M-5 | Ia | difenoconazole |
| M-6 | Ia | epoxiconazole |
| M-7 | Ia | fluquinconazole |
| M-8 | Ia | flutriafol |
| M-9 | Ia | metconazole |
| M-10 | Ia | prothioconazole |
| M-11 | Ia | tebuconazole |
| M-12 | Ia | triticonazole |
| M-13 | Ia | prochloraz |
| M-14 | Ia | metalaxyl |
| M-15 | Ia | mefenoxam |
| M-16 | Ia | silthiofam |
| M-17 | Ia | pyrimethanil |
| M-18 | Ia | dimethomorph |
| M-19 | Ia | fludioxonil |
| M-20 | Ia | thiram |
| M-21 | Ia | thiophanate-methyl |
| M-22 | Id | orysastrobin |
| M-23 | Id | pyraclostrobin |
| M-24 | Id | trifloxystrobin |
| M-25 | Id | azoxystrobin |

(continued)

| No. | (I) | (II) or (III) |
|---|---|---|
| M-26 | Id | difenoconazole |
| M-27 | Id | epoxiconazole |
| M-28 | Id | fluquinconazole |
| M-29 | Id | flutriafol |
| M-30 | Id | metconazole |
| M-31 | Id | prothioconazole |
| M-32 | Id | tebuconazole |
| M-33 | Id | triticonazole |
| M-34 | Id | prochloraz |
| M-35 | Id | metalaxyl |
| M-36 | Id | mefenoxam |
| M-37 | Id | silthiofam |
| M-38 | Id | pyrimethanil |
| M-39 | Id | dimethomorph |
| M-40 | Id | fludioxonil |
| M-41 | Id | thiram |
| M-42 | Id | thiophanate-methyl |
| M-43 | Ie | orysastrobin |
| M-44 | Ie | pyraclostrobin |
| M-45 | Ie | trifloxystrobin |
| M-46 | Ie | azoxystrobin |
| M-47 | Ie | difenoconazole |
| M-48 | Ie | epoxiconazole |
| M-49 | Ie | fluquinconazole |
| M-50 | Ie | flutriafol |
| M-51 | Ie | metconazole |
| M-52 | Ie | prothioconazole |
| M-53 | Ie | tebuconazole |
| M-54 | Ie | triticonazole |
| M-55 | Ie | prochloraz |
| M-56 | Ie | metalaxyl |
| M-57 | Ie | mefenoxam |
| M-58 | Ie | silthiofam |
| M-59 | Ie | pyrimethanil |
| M-60 | Ie | dimethomorph |
| M-61 | Ie | fludioxonil |
| M-62 | Ie | thiram |
| M-63 | Ie | thiophanate-methyl |

(continued)

| No. | (I) | (II) or (III) |
|---|---|---|
| M-64 | Ig | orysastrobin |
| M-65 | Ig | pyraclostrobin |
| M-66 | Ig | trifloxystrobin |
| M-67 | Ig | azoxystrobin |
| M-68 | Ig | difenoconazole |
| M-69 | Ig | epoxiconazole |
| M-70 | Ig | fluquinconazole |
| M-71 | Ig | flutriafol |
| M-72 | Ig | metconazole |
| M-73 | Ig | prothioconazole |
| M-74 | Ig | tebuconazole |
| M-75 | Ig | triticonazole |
| M-76 | Ig | prochloraz |
| M-77 | Ig | metalaxyl |
| M-78 | Ig | mefenoxam |
| M-79 | Ig | silthiofam |
| M-80 | Ig | pyrimethanil |
| M-81 | Ig | dimethomorph |
| M-82 | Ig | fludioxonil |
| M-83 | Ig | thiram |
| M-84 | Ig | thiophanate-methyl |
| M-85 | Ia | fipronil |
| M-86 | Ia | chloranthraniliprole |
| M-87 | Id | fipronil |
| M-88 | Id | chloranthraniliprole |
| M-89 | Ie | fipronil |
| M-90 | Ie | chloranthraniliprole |
| M-91 | Ig | fipronil |
| M-92 | Ig | chloranthraniliprole |
| M-93 | Ia | fosetyl-aluminium |
| M-94 | Id | fosetyl-aluminium |
| M-95 | Ie | fosetyl-aluminium |
| M-96 | Ig | fosetyl-aluminium |
| M-97 | Ia | phosphorous acid and its salts |
| M-98 | Id | phosphorous acid and its salts |
| M-99 | Ie | phosphorous acid and its salts |
| M-100 | Ig | phosphorous acid and its salts |
| M-101 | Ic | orysastrobin |

(continued)

| No. | (I) | (II) or (III) |
|---|---|---|
| M-102 | Ic | pyraclostrobin |
| M-103 | Ic | trifloxystrobin |
| M-104 | Ic | azoxystrobin |
| M-105 | Ic | difenoconazole |
| M-106 | Ic | epoxiconazole |
| M-107 | Ic | fluquinconazole |
| M-108 | Ic | flutriafol |
| M-109 | Ic | metconazole |
| M-110 | Ic | prothioconazole |
| M-111 | Ic | tebuconazole |
| M-112 | Ic | triticonazole |
| M-113 | Ic | prochloraz |
| M-114 | Ic | metalaxyl |
| M-115 | Ic | mefenoxam |
| M-116 | Ic | silthiofam |
| M-117 | Ic | pyrimethanil |
| M-118 | Ic | dimethomorph |
| M-119 | Ic | fludioxonil |
| M-120 | Ic | thiram |
| M-121 | Ic | thiophanate-methyl |
| M-122 | Ic | fipronil |
| M-123 | Ic | chloranthraniliprole |
| M-124 | Ic | fosetyl-aluminium |
| M-125 | Ic | phosphorous acid and its salts |
| M-126 | If | orysastrobin |
| M-127 | If | pyraclostrobin |
| M-128 | If | trifloxystrobin |
| M-129 | If | azoxystrobin |
| M-130 | If | difenoconazole |
| M-131 | If | epoxiconazole |
| M-132 | If | fluquinconazole |
| M-133 | If | flutriafol |
| M-134 | If | metconazole |
| M-135 | If | prothioconazole |
| M-136 | If | tebuconazole |
| M-137 | If | triticonazole |
| M-138 | If | prochloraz |
| M-139 | If | metalaxyl |

(continued)

| No. | (I) | (II) or (III) |
|---|---|---|
| M-140 | If | mefenoxam |
| M-141 | If | silthiofam |
| M-142 | If | pyrimethanil |
| M-143 | If | dimethomorph |
| M-144 | If | fludioxonil |
| M-145 | If | thiram |
| M-146 | If | thiophanate-methyl |
| M-147 | If | fipronil |
| M-148 | If | chloranthraniliprole |
| M-149 | If | fosetyl-aluminium |
| M-150 | If | phosphorous acid and its salts |

Within the mixtures of table 1, the following mixtures are especially preferred: M-1, M-2, M-3, M-4, M-5, M-6, M-7, M-8, M-9, M-10, M-11, M-12, M-13, M-14, M-15, M-16, M-17, M-18, M-19, M-20, M-21, M-22, M-23, M-24, M-25, M-43, M-44, M-45, M-46, M-64, M-65, M-66, M-67, M-85, M-86, M-87, M-88, M-89, M-90, M-91, M-92, M-93 and M-97. Within this subset, the following mixtures are preferred: M-1, M-2, M-3, M-4, M-22, M-23, M-24, M-25, M-43, M-44, M-45, M-46, M-64, M-65, M-66, M-67, M-85, M-86, M-87, M-88, M-89, M-90, M-91 and M-92.

The following mixtures are more preferred: M-1, M-2, M-3, M-4, M-22, M-23, M-24, M-25, M-43, M-44, M-45, M-46, M-64, M-65, M-66 and M-67.

The following mixtures are most preferred: M-1, M-22, M-43 and M-64.

Utmost preference is given to mixture M1.

Within the mixtures of table 1, the following mixtures are also especially preferred: M-101, M-102, M-103, M-104, M-112, M-122, M-123, M-126, M-127, M-128, M-129, M-137, M-147 and M-148.

Within this subset, the following mixtures are preferred: M-101, M-102, M-103, M-104, M-126, M-127, M-128 and M-129.

Within this subset, the following mixtures are more preferred: M-101, M-102, M-126 and M-127.

With respect to their intended use within the methods of the present invention, the following ternary mixtures listed in table 2, comprising one compound (I) and one compound (II) and as a third component either one compound (IIb) or one compound (III) are a prefered embodiment of the present invention.

The mixtures disclosed in table 2 are also a further embodiment of the present invention.

Table 2

| No. | (I) | (II) | (IIb) or (III) |
|---|---|---|---|
| N-1 | Ia | S1 | A1 |
| N-2 | Ia | S1 | A2 |
| N-3 | Ia | S1 | A3 |
| N-4 | Ia | S1 | A4 |
| N-5 | Ia | S1 | A5 |
| N-6 | Ia | S1 | A6 |
| N-7 | Ia | S1 | A7 |
| N-8 | Ia | S1 | A8 |
| N-9 | Ia | S1 | A9 |
| N-10 | Ia | S1 | A10 |
| N-11 | Ia | S1 | A11 |

(continued)

| No. | (I) | (II) | (IIb) or (III) |
|---|---|---|---|
| N-12 | Ia | S1 | A12 |
| N-13 | Ia | S1 | A13 |
| N-14 | Ia | S1 | A14 |
| N-15 | Ia | S1 | A15 |
| N-16 | Ia | S1 | A19 |
| N-17 | Ia | S2 | A1 |
| N-18 | Ia | S2 | A2 |
| N-19 | Ia | S2 | A3 |
| N-20 | Ia | S2 | A4 |
| N-21 | Ia | S2 | A5 |
| N-22 | Ia | S2 | A6 |
| N-23 | Ia | S2 | A7 |
| N-24 | Ia | S2 | A8 |
| N-25 | Ia | S2 | A9 |
| N-26 | Ia | S2 | A10 |
| N-27 | Ia | S2 | A11 |
| N-28 | Ia | S2 | A12 |
| N-29 | Ia | S2 | A13 |
| N-30 | Ia | S2 | A14 |
| N-31 | Ia | S2 | A15 |
| N-32 | Ia | S2 | A19 |
| N-33 | Ia | S3 | A1 |
| N-34 | Ia | S3 | A2 |
| N-35 | Ia | S3 | A3 |
| N-36 | Ia | S3 | A4 |
| N-37 | Ia | S3 | A5 |
| N-38 | Ia | S3 | A6 |
| N-39 | Ia | S3 | A7 |
| N-40 | Ia | S3 | A8 |
| N-41 | Ia | S3 | A9 |
| N-42 | Ia | S3 | A10 |
| N-43 | Ia | S3 | A11 |
| N-44 | Ia | S3 | A12 |
| N-45 | Ia | S3 | A13 |
| N-46 | Ia | S3 | A14 |
| N-47 | Ia | S3 | A15 |
| N-48 | Ia | S3 | A19 |
| N-49 | Ia | S4 | A1 |

(continued)

| No. | (I) | (II) | (IIb) or (III) |
|---|---|---|---|
| N-50 | Ia | S4 | A2 |
| N-51 | Ia | S4 | A3 |
| N-52 | Ia | S4 | A4 |
| N-53 | Ia | S4 | A5 |
| N-54 | Ia | S4 | A6 |
| N-55 | Ia | S4 | A7 |
| N-56 | Ia | S4 | A8 |
| N-57 | Ia | S4 | A9 |
| N-58 | Ia | S4 | A10 |
| N-59 | Ia | S4 | A11 |
| N-60 | Ia | S4 | A12 |
| N-61 | Ia | S4 | A13 |
| N-62 | Ia | S4 | A14 |
| N-63 | Ia | S4 | A15 |
| N-64 | Ia | S4 | A19 |
| N-65 | Ia | S5 | A1 |
| N-66 | Ia | S5 | A2 |
| N-67 | Ia | S5 | A3 |
| N-68 | Ia | S5 | A4 |
| N-69 | Ia | S5 | A5 |
| N-70 | Ia | S5 | A6 |
| N-71 | Ia | S5 | A7 |
| N-72 | Ia | S5 | A8 |
| N-73 | Ia | S5 | A9 |
| N-74 | Ia | S5 | A10 |
| N-75 | Ia | S5 | A11 |
| N-76 | Ia | S5 | A12 |
| N-77 | Ia | S5 | A13 |
| N-78 | Ia | S5 | A14 |
| N-79 | Ia | S5 | A15 |
| N-80 | Ia | S5 | A19 |
| N-81 | Ia | S6 | A1 |
| N-82 | Ia | S6 | A2 |
| N-83 | Ia | S6 | A3 |
| N-84 | Ia | S6 | A4 |
| N-85 | Ia | S6 | A5 |
| N-86 | Ia | S6 | A6 |
| N-87 | Ia | S6 | A7 |

(continued)

| No. | (I) | (II) | (IIb) or (III) |
|---|---|---|---|
| N-88 | Ia | S6 | A8 |
| N-89 | Ia | S6 | A9 |
| N-90 | Ia | S6 | A10 |
| N-91 | Ia | S6 | A11 |
| N-92 | Ia | S6 | A12 |
| N-93 | Ia | S6 | A13 |
| N-94 | Ia | S6 | A14 |
| N-95 | Ia | S6 | A15 |
| N-96 | Ia | S6 | A19 |
| N-97 | Ia | S7 | A1 |
| N-98 | Ia | S7 | A2 |
| N-99 | Ia | S7 | A3 |
| N-100 | Ia | S7 | A4 |
| N-101 | Ia | S7 | A5 |
| N-102 | Ia | S7 | A6 |
| N-103 | Ia | S7 | A7 |
| N-104 | Ia | S7 | A8 |
| N-105 | Ia | S7 | A9 |
| N-106 | Ia | S7 | A10 |
| N-107 | Ia | S7 | A11 |
| N-108 | Ia | S7 | A12 |
| N-109 | Ia | S7 | A13 |
| N-110 | Ia | S7 | A14 |
| N-111 | Ia | S7 | A15 |
| N-112 | Ia | S7 | A19 |
| N-113 | Ia | S8 | A1 |
| N-114 | Ia | S8 | A2 |
| N-115 | Ia | S8 | A3 |
| N-116 | Ia | S8 | A4 |
| N-117 | Ia | S8 | A5 |
| N-118 | Ia | S8 | A6 |
| N-119 | Ia | S8 | A7 |
| N-120 | Ia | S8 | A8 |
| N-121 | Ia | S8 | A9 |
| N-122 | Ia | S8 | A10 |
| N-123 | Ia | S8 | A11 |
| N-124 | Ia | S8 | A12 |
| N-125 | Ia | S8 | A13 |

(continued)

| No. | (I) | (II) | (IIb) or (III) |
|---|---|---|---|
| N-126 | Ia | S8 | A14 |
| N-127 | Ia | S8 | A15 |
| N-128 | Ia | S8 | A19 |
| N-129 | Ia | S9 | A1 |
| N-130 | Ia | S9 | A2 |
| N-131 | Ia | S9 | A3 |
| N-132 | Ia | S9 | A4 |
| N-133 | Ia | S9 | A5 |
| N-134 | Ia | S9 | A6 |
| N-135 | Ia | S9 | A7 |
| N-136 | Ia | S9 | A8 |
| N-137 | Ia | S9 | A9 |
| N-138 | Ia | S9 | A10 |
| N-139 | Ia | S9 | A11 |
| N-140 | Ia | S9 | A12 |
| N-141 | Ia | S9 | A13 |
| N-142 | Ia | S9 | A14 |
| N-143 | Ia | S9 | A15 |
| N-144 | Ia | S9 | A19 |
| N-145 | Id | S1 | A1 |
| N-146 | Id | S1 | A2 |
| N-147 | Id | S1 | A3 |
| N-148 | Id | S1 | A4 |
| N-149 | Id | S1 | A5 |
| N-150 | Id | S1 | A6 |
| N-151 | Id | S1 | A7 |
| N-152 | Id | S1 | A8 |
| N-153 | Id | S1 | A9 |
| N-154 | Id | S1 | A10 |
| N-155 | Id | S1 | A11 |
| N-156 | Id | S1 | A12 |
| N-157 | Id | S1 | A13 |
| N-158 | Id | S1 | A14 |
| N-159 | Id | S1 | A15 |
| N-160 | Id | S1 | A19 |
| N-161 | Id | S2 | A1 |
| N-162 | Id | S2 | A2 |
| N-163 | Id | S2 | A3 |

(continued)

| No. | (I) | (II) | (IIb) or (III) |
|---|---|---|---|
| N-164 | Id | S2 | A4 |
| N-165 | Id | S2 | A5 |
| N-166 | Id | S2 | A6 |
| N-167 | Id | S2 | A7 |
| N-168 | Id | S2 | A8 |
| N-169 | Id | S2 | A9 |
| N-170 | Id | S2 | A10 |
| N-171 | Id | S2 | A11 |
| N-172 | Id | S2 | A12 |
| N-173 | Id | S2 | A13 |
| N-174 | Id | S2 | A14 |
| N-175 | Id | S2 | A15 |
| N-176 | Id | S2 | A19 |
| N-177 | Id | S3 | A1 |
| N-178 | Id | S3 | A2 |
| N-179 | Id | S3 | A3 |
| N-180 | Id | S3 | A4 |
| N-181 | Id | S3 | A5 |
| N-182 | Id | S3 | A6 |
| N-183 | Id | S3 | A7 |
| N-184 | Id | S3 | A8 |
| N-185 | Id | S3 | A9 |
| N-186 | Id | S3 | A10 |
| N-187 | Id | S3 | A11 |
| N-188 | Id | S3 | A12 |
| N-189 | Id | S3 | A13 |
| N-190 | Id | S3 | A14 |
| N-191 | Id | S3 | A15 |
| N-192 | Id | S3 | A19 |
| N-193 | Id | S4 | A1 |
| N-194 | Id | S4 | A2 |
| N-195 | Id | S4 | A3 |
| N-196 | Id | S4 | A4 |
| N-197 | Id | S4 | A5 |
| N-198 | Id | S4 | A6 |
| N-199 | Id | S4 | A7 |
| N-200 | Id | S4 | A8 |
| N-201 | Id | S4 | A9 |

(continued)

| No. | (I) | (II) | (IIb) or (III) |
|---|---|---|---|
| N-202 | Id | S4 | A10 |
| N-203 | Id | S4 | A11 |
| N-204 | Id | S4 | A12 |
| N-205 | Id | S4 | A13 |
| N-206 | Id | S4 | A14 |
| N-207 | Id | S4 | A15 |
| N-208 | Id | S4 | A19 |
| N-209 | Id | S5 | A1 |
| N-210 | Id | S5 | A2 |
| N-211 | Id | S5 | A3 |
| N-212 | Id | S5 | A4 |
| N-213 | Id | S5 | A5 |
| N-214 | Id | S5 | A6 |
| N-215 | Id | S5 | A7 |
| N-216 | Id | S5 | A8 |
| N-217 | Id | S5 | A9 |
| N-218 | Id | S5 | A10 |
| N-219 | Id | S5 | A11 |
| N-220 | Id | S5 | A12 |
| N-221 | Id | S5 | A13 |
| N-222 | Id | S5 | A14 |
| N-223 | Id | S5 | A15 |
| N-224 | Id | S5 | A19 |
| N-225 | Id | S6 | A1 |
| N-226 | Id | S6 | A2 |
| N-227 | Id | S6 | A3 |
| N-228 | Id | S6 | A4 |
| N-229 | Id | S6 | A5 |
| N-230 | Id | S6 | A6 |
| N-231 | Id | S6 | A7 |
| N-232 | Id | S6 | A8 |
| N-233 | Id | S6 | A9 |
| N-234 | Id | S6 | A10 |
| N-235 | Id | S6 | A11 |
| N-236 | Id | S6 | A12 |
| N-237 | Id | S6 | A13 |
| N-238 | Id | S6 | A14 |
| N-239 | Id | S6 | A15 |

(continued)

| No. | (I) | (II) | (IIb) or (III) |
|---|---|---|---|
| N-240 | Id | S6 | A19 |
| N-241 | Id | S7 | A1 |
| N-242 | Id | S7 | A2 |
| N-243 | Id | S7 | A3 |
| N-244 | Id | S7 | A4 |
| N-245 | Id | S7 | A5 |
| N-246 | Id | S7 | A6 |
| N-247 | Id | S7 | A7 |
| N-248 | Id | S7 | A8 |
| N-249 | Id | S7 | A9 |
| N-250 | Id | S7 | A10 |
| N-251 | Id | S7 | A11 |
| N-252 | Id | S7 | A12 |
| N-253 | Id | S7 | A13 |
| N-254 | Id | S7 | A14 |
| N-255 | Id | S7 | A15 |
| N-256 | Id | S7 | A19 |
| N-257 | Id | S8 | A1 |
| N-258 | Id | S8 | A2 |
| N-259 | Id | S8 | A3 |
| N-260 | Id | S8 | A4 |
| N-261 | Id | S8 | A5 |
| N-262 | Id | S8 | A6 |
| N-263 | Id | S8 | A7 |
| N-264 | Id | S8 | A8 |
| N-265 | Id | S8 | A9 |
| N-266 | Id | S8 | A10 |
| N-267 | Id | S8 | A11 |
| N-268 | Id | S8 | A12 |
| N-269 | Id | S8 | A13 |
| N-270 | Id | S8 | A14 |
| N-271 | Id | S8 | A15 |
| N-272 | Id | S8 | A19 |
| N-273 | Id | S9 | A1 |
| N-274 | Id | S9 | A2 |
| N-275 | Id | S9 | A3 |
| N-276 | Id | S9 | A4 |
| N-277 | Id | S9 | A5 |

(continued)

| No. | (I) | (II) | (IIb) or (III) |
|---|---|---|---|
| N-278 | Id | S9 | A6 |
| N-279 | Id | S9 | A7 |
| N-280 | Id | S9 | A8 |
| N-281 | Id | S9 | A9 |
| N-282 | Id | S9 | A10 |
| N-283 | Id | S9 | A11 |
| N-284 | Id | S9 | A12 |
| N-285 | Id | S9 | A13 |
| N-286 | Id | S9 | A14 |
| N-287 | Id | S9 | A15 |
| N-288 | Id | S9 | A19 |
| N-289 | Ie | S1 | A1 |
| N-290 | Ie | S1 | A2 |
| N-291 | Ie | S1 | A3 |
| N-292 | Ie | S1 | A4 |
| N-293 | Ie | S1 | A5 |
| N-294 | Ie | S1 | A6 |
| N-295 | Ie | S1 | A7 |
| N-296 | Ie | S1 | A8 |
| N-297 | Ie | S1 | A9 |
| N-298 | Ie | S1 | A10 |
| N-299 | Ie | S1 | A11 |
| N-300 | Ie | S1 | A12 |
| N-301 | Ie | S1 | A13 |
| N-302 | Ie | S1 | A14 |
| N-303 | Ie | S1 | A15 |
| N-304 | Ie | S1 | A19 |
| N-305 | Ie | S2 | A1 |
| N-306 | Ie | S2 | A2 |
| N-307 | Ie | S2 | A3 |
| N-308 | Ie | S2 | A4 |
| N-309 | Ie | S2 | A5 |
| N-310 | Ie | S2 | A6 |
| N-311 | Ie | S2 | A7 |
| N-312 | Ie | S2 | A8 |
| N-313 | Ie | S2 | A9 |
| N-314 | Ie | S2 | A10 |
| N-315 | Ie | S2 | A11 |

(continued)

| No. | (I) | (II) | (IIb) or (III) |
|---|---|---|---|
| N-316 | Ie | S2 | A12 |
| N-317 | Ie | S2 | A13 |
| N-318 | Ie | S2 | A14 |
| N-319 | Ie | S2 | A15 |
| N-320 | Ie | S2 | A19 |
| N-321 | Ie | S3 | A1 |
| N-322 | Ie | S3 | A2 |
| N-323 | Ie | S3 | A3 |
| N-324 | Ie | S3 | A4 |
| N-325 | Ie | S3 | A5 |
| N-326 | Ie | S3 | A6 |
| N-327 | Ie | S3 | A7 |
| N-328 | Ie | S3 | A8 |
| N-329 | Ie | S3 | A9 |
| N-330 | Ie | S3 | A10 |
| N-331 | Ie | S3 | A11 |
| N-332 | Ie | S3 | A12 |
| N-333 | Ie | S3 | A13 |
| N-334 | Ie | S3 | A14 |
| N-335 | Ie | S3 | A15 |
| N-336 | Ie | S3 | A19 |
| N-337 | Ie | S4 | A1 |
| N-338 | Ie | S4 | A2 |
| N-339 | Ie | S4 | A3 |
| N-340 | Ie | S4 | A4 |
| N-341 | Ie | S4 | A5 |
| N-342 | Ie | S4 | A6 |
| N-343 | Ie | S4 | A7 |
| N-344 | Ie | S4 | A8 |
| N-345 | Ie | S4 | A9 |
| N-346 | Ie | S4 | A10 |
| N-347 | Ie | S4 | A11 |
| N-348 | Ie | S4 | A12 |
| N-349 | Ie | S4 | A13 |
| N-350 | Ie | S4 | A14 |
| N-351 | Ie | S4 | A15 |
| N-352 | Ie | S4 | A19 |
| N-353 | Ie | S5 | A1 |

(continued)

| No. | (I) | (II) | (IIb) or (III) |
|---|---|---|---|
| N-354 | Ie | S5 | A2 |
| N-355 | Ie | S5 | A3 |
| N-356 | Ie | S5 | A4 |
| N-357 | Ie | S5 | A5 |
| N-358 | Ie | S5 | A6 |
| N-359 | Ie | S5 | A7 |
| N-360 | Ie | S5 | A8 |
| N-361 | Ie | S5 | A9 |
| N-362 | Ie | S5 | A10 |
| N-363 | Ie | S5 | A11 |
| N-364 | Ie | S5 | A12 |
| N-365 | Ie | S5 | A13 |
| N-366 | Ie | S5 | A14 |
| N-367 | Ie | S5 | A15 |
| N-368 | Ie | S5 | A19 |
| N-369 | Ie | S6 | A1 |
| N-370 | Ie | S6 | A2 |
| N-371 | Ie | S6 | A3 |
| N-372 | Ie | S6 | A4 |
| N-373 | Ie | S6 | A5 |
| N-374 | Ie | S6 | A6 |
| N-375 | Ie | S6 | A7 |
| N-376 | Ie | S6 | A8 |
| N-377 | Ie | S6 | A9 |
| N-378 | Ie | S6 | A10 |
| N-379 | Ie | S6 | A11 |
| N-380 | Ie | S6 | A12 |
| N-381 | Ie | S6 | A13 |
| N-382 | Ie | S6 | A14 |
| N-383 | Ie | S6 | A15 |
| N-384 | Ie | S6 | A19 |
| N-385 | Ie | S7 | A1 |
| N-386 | Ie | S7 | A2 |
| N-387 | Ie | S7 | A3 |
| N-388 | Ie | S7 | A4 |
| N-389 | Ie | S7 | A5 |
| N-390 | Ie | S7 | A6 |
| N-391 | Ie | S7 | A7 |

(continued)

| No. | (I) | (II) | (IIb) or (III) |
|---|---|---|---|
| N-392 | Ie | S7 | A8 |
| N-393 | Ie | S7 | A9 |
| N-394 | Ie | S7 | A10 |
| N-395 | Ie | S7 | A11 |
| N-396 | Ie | S7 | A12 |
| N-397 | Ie | S7 | A13 |
| N-398 | Ie | S7 | A14 |
| N-399 | Ie | S7 | A15 |
| N-400 | Ie | S7 | A19 |
| N-401 | Ie | S8 | A1 |
| N-402 | Ie | S8 | A2 |
| N-403 | Ie | S8 | A3 |
| N-404 | Ie | S8 | A4 |
| N-405 | Ie | S8 | A5 |
| N-406 | Ie | S8 | A6 |
| N-407 | Ie | S8 | A7 |
| N-408 | Ie | S8 | A8 |
| N-409 | Ie | S8 | A9 |
| N-410 | Ie | S8 | A10 |
| N-411 | Ie | S8 | A11 |
| N-412 | Ie | S8 | A12 |
| N-413 | Ie | S8 | A13 |
| N-414 | Ie | S8 | A14 |
| N-415 | Ie | S8 | A15 |
| N-416 | Ie | S8 | A19 |
| N-417 | Ie | S9 | A1 |
| N-418 | Ie | S9 | A2 |
| N-419 | Ie | S9 | A3 |
| N-420 | Ie | S9 | A4 |
| N-421 | Ie | S9 | A5 |
| N-422 | Ie | S9 | A6 |
| N-423 | Ie | S9 | A7 |
| N-424 | Ie | S9 | A8 |
| N-425 | Ie | S9 | A9 |
| N-426 | Ie | S9 | A10 |
| N-427 | Ie | S9 | A11 |
| N-428 | Ie | S9 | A12 |
| N-429 | Ie | S9 | A13 |

(continued)

| No. | (I) | (II) | (IIb) or (III) |
|---|---|---|---|
| N-430 | Ie | S9 | A14 |
| N-431 | Ie | S9 | A15 |
| N-432 | Ie | S9 | A19 |
| N-433 | Ig | S1 | A1 |
| N-434 | Ig | S1 | A2 |
| N-435 | Ig | S1 | A3 |
| N-436 | Ig | S1 | A4 |
| N-437 | Ig | S1 | A5 |
| N-438 | Ig | S1 | A6 |
| N-439 | Ig | S1 | A7 |
| N-440 | Ig | S1 | A8 |
| N-441 | Ig | S1 | A9 |
| N-442 | Ig | S1 | A10 |
| N-443 | Ig | S1 | A11 |
| N-444 | Ig | S1 | A12 |
| N-445 | Ig | S1 | A13 |
| N-446 | Ig | S1 | A14 |
| N-447 | Ig | S1 | A15 |
| N-448 | Ig | S1 | A19 |
| N-449 | Ig | S2 | A1 |
| N-450 | Ig | S2 | A2 |
| N-451 | Ig | S2 | A3 |
| N-452 | Ig | S2 | A4 |
| N-453 | Ig | S2 | A5 |
| N-454 | Ig | S2 | A6 |
| N-455 | Ig | S2 | A7 |
| N-456 | Ig | S2 | A8 |
| N-457 | Ig | S2 | A9 |
| N-458 | Ig | S2 | A10 |
| N-459 | Ig | S2 | A11 |
| N-460 | Ig | S2 | A12 |
| N-461 | Ig | S2 | A13 |
| N-462 | Ig | S2 | A14 |
| N-463 | Ig | S2 | A15 |
| N-464 | Ig | S2 | A19 |
| N-465 | Ig | S3 | A1 |
| N-466 | Ig | S3 | A2 |
| N-467 | Ig | S3 | A3 |

(continued)

| No. | (I) | (II) | (IIb) or (III) |
|---|---|---|---|
| N-468 | Ig | S3 | A4 |
| N-469 | Ig | S3 | A5 |
| N-470 | Ig | S3 | A6 |
| N-471 | Ig | S3 | A7 |
| N-472 | Ig | S3 | A8 |
| N-473 | Ig | S3 | A9 |
| N-474 | Ig | S3 | A10 |
| N-475 | Ig | S3 | A11 |
| N-476 | Ig | S3 | A12 |
| N-477 | Ig | S3 | A13 |
| N-478 | Ig | S3 | A14 |
| N-479 | Ig | S3 | A15 |
| N-480 | Ig | S3 | A19 |
| N-481 | Ig | S4 | A1 |
| N-482 | Ig | S4 | A2 |
| N-483 | Ig | S4 | A3 |
| N-484 | Ig | S4 | A4 |
| N-485 | Ig | S4 | A5 |
| N-486 | Ig | S4 | A6 |
| N-487 | Ig | S4 | A7 |
| N-488 | Ig | S4 | A8 |
| N-489 | Ig | S4 | A9 |
| N-490 | Ig | S4 | A10 |
| N-491 | Ig | S4 | A11 |
| N-492 | Ig | S4 | A12 |
| N-493 | Ig | S4 | A13 |
| N-494 | Ig | S4 | A14 |
| N-495 | Ig | S4 | A15 |
| N-496 | Ig | S4 | A19 |
| N-497 | Ig | S5 | A1 |
| N-498 | Ig | S5 | A2 |
| N-499 | Ig | S5 | A3 |
| N-500 | Ig | S5 | A4 |
| N-501 | Ig | S5 | A5 |
| N-502 | Ig | S5 | A6 |
| N-503 | Ig | S5 | A7 |
| N-504 | Ig | S5 | A8 |
| N-505 | Ig | S5 | A9 |

(continued)

| No. | (I) | (II) | (IIb) or (III) |
|---|---|---|---|
| N-506 | Ig | S5 | A10 |
| N-507 | Ig | S5 | A11 |
| N-508 | Ig | S5 | A12 |
| N-509 | Ig | S5 | A13 |
| N-510 | Ig | S5 | A14 |
| N-511 | Ig | S5 | A15 |
| N-512 | Ig | S5 | A19 |
| N-513 | Ig | S6 | A1 |
| N-514 | Ig | S6 | A2 |
| N-515 | Ig | S6 | A3 |
| N-516 | Ig | S6 | A4 |
| N-517 | Ig | S6 | A5 |
| N-518 | Ig | S6 | A6 |
| N-519 | Ig | S6 | A7 |
| N-520 | Ig | S6 | A8 |
| N-521 | Ig | S6 | A9 |
| N-522 | Ig | S6 | A10 |
| N-523 | Ig | S6 | A11 |
| N-524 | Ig | S6 | A12 |
| N-525 | Ig | S6 | A13 |
| N-526 | Ig | S6 | A14 |
| N-527 | Ig | S6 | A15 |
| N-528 | Ig | S6 | A19 |
| N-529 | Ig | S7 | A1 |
| N-530 | Ig | S7 | A2 |
| N-531 | Ig | S7 | A3 |
| N-532 | Ig | S7 | A4 |
| N-533 | Ig | S7 | A5 |
| N-534 | Ig | S7 | A6 |
| N-535 | Ig | S7 | A7 |
| N-536 | Ig | S7 | A8 |
| N-537 | Ig | S7 | A9 |
| N-538 | Ig | S7 | A10 |
| N-539 | Ig | S7 | A11 |
| N-540 | Ig | S7 | A12 |
| N-541 | Ig | S7 | A13 |
| N-542 | Ig | S7 | A14 |
| N-543 | Ig | S7 | A15 |

(continued)

| No. | (I) | (II) | (IIb) or (III) |
|---|---|---|---|
| N-544 | Ig | S7 | A19 |
| N-545 | Ig | S8 | A1 |
| N-546 | Ig | S8 | A2 |
| N-547 | Ig | S8 | A3 |
| N-548 | Ig | S8 | A4 |
| N-549 | Ig | S8 | A5 |
| N-550 | Ig | S8 | A6 |
| N-551 | Ig | S8 | A7 |
| N-552 | Ig | S8 | A8 |
| N-553 | Ig | S8 | A9 |
| N-554 | Ig | S8 | A10 |
| N-555 | Ig | S8 | A11 |
| N-556 | Ig | S8 | A12 |
| N-557 | Ig | S8 | A13 |
| N-558 | Ig | S8 | A14 |
| N-559 | Ig | S8 | A15 |
| N-560 | Ig | S8 | A19 |
| N-561 | Ig | S9 | A1 |
| N-562 | Ig | S9 | A2 |
| N-563 | Ig | S9 | A3 |
| N-564 | Ig | S9 | A4 |
| N-565 | Ig | S9 | A5 |
| N-566 | Ig | S9 | A6 |
| N-567 | Ig | S9 | A7 |
| N-568 | Ig | S9 | A8 |
| N-569 | Ig | S9 | A9 |
| N-570 | Ig | S9 | A10 |
| N-571 | Ig | S9 | A11 |
| N-572 | Ig | S9 | A12 |
| N-573 | Ig | S9 | A13 |
| N-574 | Ig | S9 | A14 |
| N-575 | Ig | S9 | A15 |
| N-576 | Ig | S9 | A19 |
| N-577 | Ia | S1 | V1 |
| N-578 | Ia | S1 | V2 |
| N-579 | Ia | S1 | V3 |
| N-580 | Ia | S1 | V4 |
| N-581 | Ia | S1 | V5 |

(continued)

| No. | (I) | (II) | (IIb) or (III) |
|---|---|---|---|
| N-582 | Ia | S1 | V6 |
| N-583 | Ia | S1 | V7 |
| N-584 | Ia | S1 | V8 |
| N-585 | Ia | S1 | V9 |
| N-586 | Ia | S1 | V10 |
| N-587 | Ia | S1 | V11 |
| N-588 | Ia | S1 | V12 |
| N-589 | Ia | S1 | V13 |
| N-590 | Ia | S1 | V14 |
| N-591 | Ia | S1 | V15 |
| N-592 | Ia | S1 | V16 |
| N-593 | Ia | S2 | V1 |
| N-594 | Ia | S2 | V2 |
| N-595 | Ia | S2 | V3 |
| N-596 | Ia | S2 | V4 |
| N-597 | Ia | S2 | V5 |
| N-598 | Ia | S2 | V6 |
| N-599 | Ia | S2 | V7 |
| N-600 | Ia | S2 | V8 |
| N-601 | Ia | S2 | V9 |
| N-602 | Ia | S2 | V10 |
| N-603 | Ia | S2 | V11 |
| N-604 | Ia | S2 | V12 |
| N-605 | Ia | S2 | V13 |
| N-606 | Ia | S2 | V14 |
| N-607 | Ia | S2 | V15 |
| N-608 | Ia | S2 | V16 |
| N-609 | Ia | S3 | V1 |
| N-610 | Ia | S3 | V2 |
| N-611 | Ia | S3 | V3 |
| N-612 | Ia | S3 | V4 |
| N-613 | Ia | S3 | V5 |
| N-614 | Ia | S3 | V6 |
| N-615 | Ia | S3 | V7 |
| N-616 | Ia | S3 | V8 |
| N-617 | Ia | S3 | V9 |
| N-618 | Ia | S3 | V10 |
| N-619 | Ia | S3 | V11 |

(continued)

| No. | (I) | (II) | (IIb) or (III) |
|---|---|---|---|
| N-620 | Ia | S3 | V12 |
| N-621 | Ia | S3 | V13 |
| N-622 | Ia | S3 | V14 |
| N-623 | Ia | S3 | V15 |
| N-624 | Ia | S3 | V16 |
| N-625 | Ia | S4 | V1 |
| N-626 | Ia | S4 | V2 |
| N-627 | Ia | S4 | V3 |
| N-628 | Ia | S4 | V4 |
| N-629 | Ia | S4 | V5 |
| N-630 | Ia | S4 | V6 |
| N-631 | Ia | S4 | V7 |
| N-632 | Ia | S4 | V8 |
| N-633 | Ia | S4 | V9 |
| N-634 | Ia | S4 | V10 |
| N-635 | Ia | S4 | V11 |
| N-636 | Ia | S4 | V12 |
| N-637 | Ia | S4 | V13 |
| N-638 | Ia | S4 | V14 |
| N-639 | Ia | S4 | V15 |
| N-640 | Ia | S4 | V16 |
| N-641 | Ia | S5 | V1 |
| N-642 | Ia | S5 | V2 |
| N-643 | Ia | S5 | V3 |
| N-644 | Ia | S5 | V4 |
| N-645 | Ia | S5 | V5 |
| N-646 | Ia | S5 | V6 |
| N-647 | Ia | S5 | V7 |
| N-648 | Ia | S5 | V8 |
| N-649 | Ia | S5 | V9 |
| N-650 | Ia | S5 | V10 |
| N-651 | Ia | S5 | V11 |
| N-652 | Ia | S5 | V12 |
| N-653 | Ia | S5 | V13 |
| N-654 | Ia | S5 | V14 |
| N-655 | Ia | S5 | V15 |
| N-656 | Ia | S5 | V16 |
| N-657 | Ia | S6 | V1 |

(continued)

| No. | (I) | (II) | (IIb) or (III) |
|---|---|---|---|
| N-658 | Ia | S6 | V2 |
| N-659 | Ia | S6 | V3 |
| N-660 | Ia | S6 | V4 |
| N-661 | Ia | S6 | V5 |
| N-662 | Ia | S6 | V6 |
| N-663 | Ia | S6 | V7 |
| N-664 | Ia | S6 | V8 |
| N-665 | Ia | S6 | V9 |
| N-666 | Ia | S6 | V10 |
| N-667 | Ia | S6 | V11 |
| N-668 | Ia | S6 | V12 |
| N-669 | Ia | S6 | V13 |
| N-670 | Ia | S6 | V14 |
| N-671 | Ia | S6 | V15 |
| N-672 | Ia | S6 | V16 |
| N-673 | Ia | S7 | V1 |
| N-674 | Ia | S7 | V2 |
| N-675 | Ia | S7 | V3 |
| N-676 | Ia | S7 | V4 |
| N-677 | Ia | S7 | V5 |
| N-678 | Ia | S7 | V6 |
| N-679 | Ia | S7 | V7 |
| N-680 | Ia | S7 | V8 |
| N-681 | Ia | S7 | V9 |
| N-682 | Ia | S7 | V10 |
| N-683 | Ia | S7 | V11 |
| N-684 | Ia | S7 | V12 |
| N-685 | Ia | S7 | V13 |
| N-686 | Ia | S7 | V14 |
| N-687 | Ia | S7 | V15 |
| N-688 | Ia | S7 | V16 |
| N-689 | Ia | S8 | V1 |
| N-690 | Ia | S8 | V2 |
| N-691 | Ia | S8 | V3 |
| N-692 | Ia | S8 | V4 |
| N-693 | Ia | S8 | V5 |
| N-694 | Ia | S8 | V6 |
| N-695 | Ia | S8 | V7 |

(continued)

| No. | (I) | (II) | (IIb) or (III) |
|---|---|---|---|
| N-696 | Ia | S8 | V8 |
| N-697 | Ia | S8 | V9 |
| N-698 | Ia | S8 | V10 |
| N-699 | Ia | S8 | V11 |
| N-700 | Ia | S8 | V12 |
| N-701 | Ia | S8 | V13 |
| N-702 | Ia | S8 | V14 |
| N-703 | Ia | S8 | V15 |
| N-704 | Ia | S8 | V16 |
| N-705 | Ia | S9 | V1 |
| N-706 | Ia | S9 | V2 |
| N-707 | Ia | S9 | V3 |
| N-708 | Ia | S9 | V4 |
| N-709 | Ia | S9 | V5 |
| N-710 | Ia | S9 | V6 |
| N-711 | Ia | S9 | V7 |
| N-712 | Ia | S9 | V8 |
| N-713 | Ia | S9 | V9 |
| N-714 | Ia | S9 | V10 |
| N-715 | Ia | S9 | V11 |
| N-716 | Ia | S9 | V12 |
| N-717 | Ia | S9 | V13 |
| N-718 | Ia | S9 | V14 |
| N-719 | Ia | S9 | V15 |
| N-720 | Ia | S9 | V16 |
| N-721 | Id | S1 | V1 |
| N-722 | Id | S1 | V2 |
| N-723 | Id | S1 | V3 |
| N-724 | Id | S1 | V4 |
| N-725 | Id | S1 | V5 |
| N-726 | Id | S1 | V6 |
| N-727 | Id | S1 | V7 |
| N-728 | Id | S1 | V8 |
| N-729 | Id | S1 | V9 |
| N-730 | Id | S1 | V10 |
| N-731 | Id | S1 | V11 |
| N-732 | Id | S1 | V12 |
| N-733 | Id | S1 | V13 |

(continued)

| No. | (I) | (II) | (IIb) or (III) |
|---|---|---|---|
| N-734 | Id | S1 | V14 |
| N-735 | Id | S1 | V15 |
| N-736 | Id | S1 | V16 |
| N-737 | Id | S2 | V1 |
| N-738 | Id | S2 | V2 |
| N-739 | Id | S2 | V3 |
| N-740 | Id | S2 | V4 |
| N-741 | Id | S2 | V5 |
| N-742 | Id | S2 | V6 |
| N-743 | Id | S2 | V7 |
| N-744 | Id | S2 | V8 |
| N-745 | Id | S2 | V9 |
| N-746 | Id | S2 | V10 |
| N-747 | Id | S2 | V11 |
| N-748 | Id | S2 | V12 |
| N-749 | Id | S2 | V13 |
| N-750 | Id | S2 | V14 |
| N-751 | Id | S2 | V15 |
| N-752 | Id | S2 | V16 |
| N-753 | Id | S3 | V1 |
| N-754 | Id | S3 | V2 |
| N-755 | Id | S3 | V3 |
| N-756 | Id | S3 | V4 |
| N-757 | Id | S3 | V5 |
| N-758 | Id | S3 | V6 |
| N-759 | Id | S3 | V7 |
| N-760 | Id | S3 | V8 |
| N-761 | Id | S3 | V9 |
| N-762 | Id | S3 | V10 |
| N-763 | Id | S3 | V11 |
| N-764 | Id | S3 | V12 |
| N-765 | Id | S3 | V13 |
| N-766 | Id | S3 | V14 |
| N-767 | Id | S3 | V15 |
| N-768 | Id | S3 | V16 |
| N-769 | Id | S4 | V1 |
| N-770 | Id | S4 | V2 |
| N-771 | Id | S4 | V3 |

(continued)

| No. | (I) | (II) | (IIb) or (III) |
|---|---|---|---|
| N-772 | Id | S4 | V4 |
| N-773 | Id | S4 | V5 |
| N-774 | Id | S4 | V6 |
| N-775 | Id | S4 | V7 |
| N-776 | Id | S4 | V8 |
| N-777 | Id | S4 | V9 |
| N-778 | Id | S4 | V10 |
| N-779 | Id | S4 | V11 |
| N-780 | Id | S4 | V12 |
| N-781 | Id | S4 | V13 |
| N-782 | Id | S4 | V14 |
| N-783 | Id | S4 | V15 |
| N-784 | Id | S4 | V16 |
| N-785 | Id | S5 | V1 |
| N-786 | Id | S5 | V2 |
| N-787 | Id | S5 | V3 |
| N-788 | Id | S5 | V4 |
| N-789 | Id | S5 | V5 |
| N-790 | Id | S5 | V6 |
| N-791 | Id | S5 | V7 |
| N-792 | Id | S5 | V8 |
| N-793 | Id | S5 | V9 |
| N-794 | Id | S5 | V10 |
| N-795 | Id | S5 | V11 |
| N-796 | Id | S5 | V12 |
| N-797 | Id | S5 | V13 |
| N-798 | Id | S5 | V14 |
| N-799 | Id | S5 | V15 |
| N-800 | Id | S5 | V16 |
| N-801 | Id | S6 | V1 |
| N-802 | Id | S6 | V2 |
| N-803 | Id | S6 | V3 |
| N-804 | Id | S6 | V4 |
| N-805 | Id | S6 | V5 |
| N-806 | Id | S6 | V6 |
| N-807 | Id | S6 | V7 |
| N-808 | Id | S6 | V8 |
| N-809 | Id | S6 | V9 |

(continued)

| No. | (I) | (II) | (IIb) or (III) |
|---|---|---|---|
| N-810 | Id | S6 | V10 |
| N-811 | Id | S6 | V11 |
| N-812 | Id | S6 | V12 |
| N-813 | Id | S6 | V13 |
| N-814 | Id | S6 | V14 |
| N-815 | Id | S6 | V15 |
| N-816 | Id | S6 | V16 |
| N-817 | Id | S7 | V1 |
| N-818 | Id | S7 | V2 |
| N-819 | Id | S7 | V3 |
| N-820 | Id | S7 | V4 |
| N-821 | Id | S7 | V5 |
| N-822 | Id | S7 | V6 |
| N-823 | Id | S7 | V7 |
| N-824 | Id | S7 | V8 |
| N-825 | Id | S7 | V9 |
| N-826 | Id | S7 | V10 |
| N-827 | Id | S7 | V11 |
| N-828 | Id | S7 | V12 |
| N-829 | Id | S7 | V13 |
| N-830 | Id | S7 | V14 |
| N-831 | Id | S7 | V15 |
| N-832 | Id | S7 | V16 |
| N-833 | Id | S8 | V1 |
| N-834 | Id | S8 | V2 |
| N-835 | Id | S8 | V3 |
| N-836 | Id | S8 | V4 |
| N-837 | Id | S8 | V5 |
| N-838 | Id | S8 | V6 |
| N-839 | Id | S8 | V7 |
| N-840 | Id | S8 | V8 |
| N-841 | Id | S8 | V9 |
| N-842 | Id | S8 | V10 |
| N-843 | Id | S8 | V11 |
| N-844 | Id | S8 | V12 |
| N-845 | Id | S8 | V13 |
| N-846 | Id | S8 | V14 |
| N-847 | Id | S8 | V15 |

(continued)

| No. | (I) | (II) | (IIb) or (III) |
|---|---|---|---|
| N-848 | Id | S8 | V16 |
| N-849 | Id | S9 | V1 |
| N-850 | Id | S9 | V2 |
| N-851 | Id | S9 | V3 |
| N-852 | Id | S9 | V4 |
| N-853 | Id | S9 | V5 |
| N-854 | Id | S9 | V6 |
| N-855 | Id | S9 | V7 |
| N-856 | Id | S9 | V8 |
| N-857 | Id | S9 | V9 |
| N-858 | Id | S9 | V10 |
| N-859 | Id | S9 | V11 |
| N-860 | Id | S9 | V12 |
| N-861 | Id | S9 | V13 |
| N-862 | Id | S9 | V14 |
| N-863 | Id | S9 | V15 |
| N-864 | Id | S9 | V16 |
| N-865 | Ie | S1 | V1 |
| N-866 | Ie | S1 | V2 |
| N-867 | Ie | S1 | V3 |
| N-868 | Ie | S1 | V4 |
| N-869 | Ie | S1 | V5 |
| N-870 | Ie | S1 | V6 |
| N-871 | Ie | S1 | V7 |
| N-872 | Ie | S1 | V8 |
| N-873 | Ie | S1 | V9 |
| N-874 | Ie | S1 | V10 |
| N-875 | Ie | S1 | V11 |
| N-876 | Ie | S1 | V12 |
| N-877 | Ie | S1 | V13 |
| N-878 | Ie | S1 | V14 |
| N-879 | Ie | S1 | V15 |
| N-880 | Ie | S1 | V16 |
| N-881 | Ie | S2 | V1 |
| N-882 | Ie | S2 | V2 |
| N-883 | Ie | S2 | V3 |
| N-884 | Ie | S2 | V4 |
| N-885 | Ie | S2 | V5 |

(continued)

| No. | (I) | (II) | (IIb) or (III) |
|---|---|---|---|
| N-886 | Ie | S2 | V6 |
| N-887 | Ie | S2 | V7 |
| N-888 | Ie | S2 | V8 |
| N-889 | Ie | S2 | V9 |
| N-890 | Ie | S2 | V10 |
| N-891 | Ie | S2 | V11 |
| N-892 | Ie | S2 | V12 |
| N-893 | Ie | S2 | V13 |
| N-894 | Ie | S2 | V14 |
| N-895 | Ie | S2 | V15 |
| N-896 | Ie | S2 | V16 |
| N-897 | Ie | S3 | V1 |
| N-898 | Ie | S3 | V2 |
| N-899 | Ie | S3 | V3 |
| N-900 | Ie | S3 | V4 |
| N-901 | Ie | S3 | V5 |
| N-902 | Ie | S3 | V6 |
| N-903 | Ie | S3 | V7 |
| N-904 | Ie | S3 | V8 |
| N-905 | Ie | S3 | V9 |
| N-906 | Ie | S3 | V10 |
| N-907 | Ie | S3 | V11 |
| N-908 | Ie | S3 | V12 |
| N-909 | Ie | S3 | V13 |
| N-910 | Ie | S3 | V14 |
| N-911 | Ie | S3 | V15 |
| N-912 | Ie | S3 | V16 |
| N-913 | Ie | S4 | V1 |
| N-914 | Ie | S4 | V2 |
| N-915 | Ie | S4 | V3 |
| N-916 | Ie | S4 | V4 |
| N-917 | Ie | S4 | V5 |
| N-918 | Ie | S4 | V6 |
| N-919 | Ie | S4 | V7 |
| N-920 | Ie | S4 | V8 |
| N-921 | Ie | S4 | V9 |
| N-922 | Ie | S4 | V10 |
| N-923 | Ie | S4 | V11 |

(continued)

| No. | (I) | (II) | (IIb) or (III) |
|---|---|---|---|
| N-924 | Ie | S4 | V12 |
| N-925 | Ie | S4 | V13 |
| N-926 | Ie | S4 | V14 |
| N-927 | Ie | S4 | V15 |
| N-928 | Ie | S4 | V16 |
| N-929 | Ie | S5 | V1 |
| N-930 | Ie | S5 | V2 |
| N-931 | Ie | S5 | V3 |
| N-932 | Ie | S5 | V4 |
| N-933 | Ie | S5 | V5 |
| N-934 | Ie | S5 | V6 |
| N-935 | Ie | S5 | V7 |
| N-936 | Ie | S5 | V8 |
| N-937 | Ie | S5 | V9 |
| N-938 | Ie | S5 | V10 |
| N-939 | Ie | S5 | V11 |
| N-940 | Ie | S5 | V12 |
| N-941 | Ie | S5 | V13 |
| N-942 | Ie | S5 | V14 |
| N-943 | Ie | S5 | V15 |
| N-944 | Ie | S5 | V16 |
| N-945 | Ie | S6 | V1 |
| N-946 | Ie | S6 | V2 |
| N-947 | Ie | S6 | V3 |
| N-948 | Ie | S6 | V4 |
| N-949 | Ie | S6 | V5 |
| N-950 | Ie | S6 | V6 |
| N-951 | Ie | S6 | V7 |
| N-952 | Ie | S6 | V8 |
| N-953 | Ie | S6 | V9 |
| N-954 | Ie | S6 | V10 |
| N-955 | Ie | S6 | V11 |
| N-956 | Ie | S6 | V12 |
| N-957 | Ie | S6 | V13 |
| N-958 | Ie | S6 | V14 |
| N-959 | Ie | S6 | V15 |
| N-960 | Ie | S6 | V16 |
| N-961 | Ie | S7 | V1 |

(continued)

| No. | (I) | (II) | (IIb) or (III) |
|---|---|---|---|
| N-962 | Ie | S7 | V2 |
| N-963 | Ie | S7 | V3 |
| N-964 | Ie | S7 | V4 |
| N-965 | Ie | S7 | V5 |
| N-966 | Ie | S7 | V6 |
| N-967 | Ie | S7 | V7 |
| N-968 | Ie | S7 | V8 |
| N-969 | Ie | S7 | V9 |
| N-970 | Ie | S7 | V10 |
| N-971 | Ie | S7 | V11 |
| N-972 | Ie | S7 | V12 |
| N-973 | Ie | S7 | V13 |
| N-974 | Ie | S7 | V14 |
| N-975 | Ie | S7 | V15 |
| N-976 | Ie | S7 | V16 |
| N-977 | Ie | S8 | V1 |
| N-978 | Ie | S8 | V2 |
| N-979 | Ie | S8 | V3 |
| N-980 | Ie | S8 | V4 |
| N-981 | Ie | S8 | V5 |
| N-982 | Ie | S8 | V6 |
| N-983 | Ie | S8 | V7 |
| N-984 | Ie | S8 | V8 |
| N-985 | Ie | S8 | V9 |
| N-986 | Ie | S8 | V10 |
| N-987 | Ie | S8 | V11 |
| N-988 | Ie | S8 | V12 |
| N-989 | Ie | S8 | V13 |
| N-990 | Ie | S8 | V14 |
| N-991 | Ie | S8 | V15 |
| N-992 | Ie | S8 | V16 |
| N-993 | Ie | S9 | V1 |
| N-994 | Ie | S9 | V2 |
| N-995 | Ie | S9 | V3 |
| N-996 | Ie | S9 | V4 |
| N-997 | Ie | S9 | V5 |
| N-998 | Ie | S9 | V6 |
| N-999 | Ie | S9 | V7 |

(continued)

| No. | (I) | (II) | (IIb) or (III) |
|---|---|---|---|
| V-1000 | Ie | S9 | V8 |
| V-1001 | Ie | S9 | V9 |
| V-1002 | Ie | S9 | V10 |
| N-1003 | Ie | S9 | V11 |
| N-1004 | Ie | S9 | V12 |
| N-1005 | Ie | S9 | V13 |
| N-1006 | Ie | S9 | V14 |
| N-1007 | Ie | S9 | V15 |
| N-1008 | Ie | S9 | V16 |
| N-1009 | Ig | S1 | V1 |
| N-1010 | Ig | S1 | V2 |
| N-1011 | Ig | S1 | V3 |
| N-1012 | Ig | S1 | V4 |
| N-1013 | Ig | S1 | V5 |
| N-1014 | Ig | S1 | V6 |
| N-1015 | Ig | S1 | V7 |
| N-1016 | Ig | S1 | V8 |
| N-1017 | Ig | S1 | V9 |
| N-1018 | Ig | S1 | V10 |
| N-1019 | Ig | S1 | V11 |
| N-1020 | Ig | S1 | V12 |
| N-1021 | Ig | S1 | V13 |
| N-1022 | Ig | S1 | V14 |
| N-1023 | Ig | S1 | V15 |
| N-1024 | Ig | S1 | V16 |
| N-1025 | Ig | S2 | V1 |
| N-1026 | Ig | S2 | V2 |
| N-1027 | Ig | S2 | V3 |
| N-1028 | Ig | S2 | V4 |
| N-1029 | Ig | S2 | V5 |
| N-1030 | Ig | S2 | V6 |
| N-1031 | Ig | S2 | V7 |
| N-1032 | Ig | S2 | V8 |
| N-1033 | Ig | S2 | V9 |
| N-1034 | Ig | S2 | V10 |
| N-1035 | Ig | S2 | V11 |
| N-1036 | Ig | S2 | V12 |
| N-1037 | Ig | S2 | V13 |

(continued)

| No. | (I) | (II) | (IIb) or (III) |
|---|---|---|---|
| N-1038 | Ig | S2 | V14 |
| N-1039 | Ig | S2 | V15 |
| N-1040 | Ig | S2 | V16 |
| N-1041 | Ig | S3 | V1 |
| N-1042 | Ig | S3 | V2 |
| N-1043 | Ig | S3 | V3 |
| N-1044 | Ig | S3 | V4 |
| N-1045 | Ig | S3 | V5 |
| N-1046 | Ig | S3 | V6 |
| N-1047 | Ig | S3 | V7 |
| N-1048 | Ig | S3 | V8 |
| N-1049 | Ig | S3 | V9 |
| N-1050 | Ig | S3 | V10 |
| N-1051 | Ig | S3 | V11 |
| N-1052 | Ig | S3 | V12 |
| N-1053 | Ig | S3 | V13 |
| N-1054 | Ig | S3 | V14 |
| N-1055 | Ig | S3 | V15 |
| N-1056 | Ig | S3 | V16 |
| N-1057 | Ig | S4 | V1 |
| N-1058 | Ig | S4 | V2 |
| N-1059 | Ig | S4 | V3 |
| N-1060 | Ig | S4 | V4 |
| N-1061 | Ig | S4 | V5 |
| N-1062 | Ig | S4 | V6 |
| N-1063 | Ig | S4 | V7 |
| N-1064 | Ig | S4 | V8 |
| N-1065 | Ig | S4 | V9 |
| N-1066 | Ig | S4 | V10 |
| N-1067 | Ig | S4 | V11 |
| N-1068 | Ig | S4 | V12 |
| N-1069 | Ig | S4 | V13 |
| N-1070 | Ig | S4 | V14 |
| N-1071 | Ig | S4 | V15 |
| N-1072 | Ig | S4 | V16 |
| N-1073 | Ig | S5 | V1 |
| N-1074 | Ig | S5 | V2 |
| N-1075 | Ig | S5 | V3 |

(continued)

| No. | (I) | (II) | (IIb) or (III) |
|---|---|---|---|
| N-1076 | Ig | S5 | V4 |
| N-1077 | Ig | S5 | V5 |
| N-1078 | Ig | S5 | V6 |
| N-1079 | Ig | S5 | V7 |
| N-1080 | Ig | S5 | V8 |
| N-1081 | Ig | S5 | V9 |
| N-1082 | Ig | S5 | V10 |
| N-1083 | Ig | S5 | V11 |
| N-1084 | Ig | S5 | V12 |
| N-1085 | Ig | S5 | V13 |
| N-1086 | Ig | S5 | V14 |
| N-1087 | Ig | S5 | V15 |
| N-1088 | Ig | S5 | V16 |
| N-1089 | Ig | S6 | V1 |
| N-1090 | Ig | S6 | V2 |
| N-1091 | Ig | S6 | V3 |
| N-1092 | Ig | S6 | V4 |
| N-1093 | Ig | S6 | V5 |
| N-1094 | Ig | S6 | V6 |
| N-1095 | Ig | S6 | V7 |
| N-1096 | Ig | S6 | V8 |
| N-1097 | Ig | S6 | V9 |
| N-1098 | Ig | S6 | V10 |
| N-1099 | Ig | S6 | V11 |
| N-1100 | Ig | S6 | V12 |
| N-1101 | Ig | S6 | V13 |
| N-1102 | Ig | S6 | V14 |
| N-1103 | Ig | S6 | V15 |
| N-1104 | Ig | S6 | V16 |
| N-1105 | Ig | S7 | V1 |
| N-1106 | Ig | S7 | V2 |
| N-1107 | Ig | S7 | V3 |
| N-1108 | Ig | S7 | V4 |
| N-1109 | Ig | S7 | V5 |
| N-1110 | Ig | S7 | V6 |
| N-1111 | Ig | S7 | V7 |
| N-1112 | Ig | S7 | V8 |
| N-1113 | Ig | S7 | V9 |

(continued)

| No. | (I) | (II) | (IIb) or (III) |
|---|---|---|---|
| N-1114 | Ig | S7 | V10 |
| N-1115 | Ig | S7 | V11 |
| N-1116 | Ig | S7 | V12 |
| N-1117 | Ig | S7 | V13 |
| N-1118 | Ig | S7 | V14 |
| N-1119 | Ig | S7 | V15 |
| N-1120 | Ig | S7 | V16 |
| N-1121 | Ig | S8 | V1 |
| N-1122 | Ig | S8 | V2 |
| N-1123 | Ig | S8 | V3 |
| N-1124 | Ig | S8 | V4 |
| N-1125 | Ig | S8 | V5 |
| N-1126 | Ig | S8 | V6 |
| N-1127 | Ig | S8 | V7 |
| N-1128 | Ig | S8 | V8 |
| N-1129 | Ig | S8 | V9 |
| N-1130 | Ig | S8 | V10 |
| N-1131 | Ig | S8 | V11 |
| N-1132 | Ig | S8 | V12 |
| N-1133 | Ig | S8 | V13 |
| N-1134 | Ig | S8 | V14 |
| N-1135 | Ig | S8 | V15 |
| N-1136 | Ig | S8 | V16 |
| N-1137 | Ig | S9 | V1 |
| N-1138 | Ig | S9 | V2 |
| N-1139 | Ig | S9 | V3 |
| N-1140 | Ig | S9 | V4 |
| N-1141 | Ig | S9 | V5 |
| N-1142 | Ig | S9 | V6 |
| N-1143 | Ig | S9 | V7 |
| N-1144 | Ig | S9 | V8 |
| N-1145 | Ig | S9 | V9 |
| N-1146 | Ig | S9 | V10 |
| N-1147 | Ig | S9 | V11 |
| N-1148 | Ig | S9 | V12 |
| N-1149 | Ig | S9 | V13 |
| N-1150 | Ig | S9 | V14 |
| N-1151 | Ig | S9 | V15 |

(continued)

| No. | (I) | (II) | (IIb) or (III) |
|---|---|---|---|
| N-1152 | Ig | S9 | V16 |
| N-1153 | Ia | A1 | V1 |
| N-1154 | Ia | A1 | V2 |
| N-1155 | Ia | A1 | V3 |
| N-1156 | Ia | A1 | V4 |
| N-1157 | Ia | A1 | V5 |
| N-1158 | Ia | A1 | V6 |
| N-1159 | Ia | A1 | V7 |
| N-1160 | Ia | A1 | V8 |
| N-1161 | Ia | A1 | V9 |
| N-1162 | Ia | A1 | V10 |
| N-1163 | Ia | A1 | V11 |
| N-1164 | Ia | A1 | V12 |
| N-1165 | Ia | A1 | V13 |
| N-1166 | Ia | A1 | V14 |
| N-1167 | Ia | A1 | V15 |
| N-1168 | Ia | A1 | V16 |
| N-1169 | Ia | A2 | V1 |
| N-1170 | Ia | A2 | V2 |
| N-1171 | Ia | A2 | V3 |
| N-1172 | Ia | A2 | V4 |
| N-1173 | Ia | A2 | V5 |
| N-1174 | Ia | A2 | V6 |
| N-1175 | Ia | A2 | V7 |
| N-1176 | Ia | A2 | V8 |
| N-1177 | Ia | A2 | V9 |
| N-1178 | Ia | A2 | V10 |
| N-1179 | Ia | A2 | V11 |
| N-1180 | Ia | A2 | V12 |
| N-1181 | Ia | A2 | V13 |
| N-1182 | Ia | A2 | V14 |
| N-1183 | Ia | A2 | V15 |
| N-1184 | Ia | A2 | V16 |
| N-1185 | Ia | A3 | V1 |
| N-1186 | Ia | A3 | V2 |
| N-1187 | Ia | A3 | V3 |
| N-1188 | Ia | A3 | V4 |
| N-1189 | Ia | A3 | V5 |

(continued)

| No. | (I) | (II) | (IIb) or (III) |
|---|---|---|---|
| N-1190 | Ia | A3 | V6 |
| N-1191 | Ia | A3 | V7 |
| N-1192 | Ia | A3 | V8 |
| N-1193 | Ia | A3 | V9 |
| N-1194 | Ia | A3 | V10 |
| N-1195 | Ia | A3 | V11 |
| N-1196 | Ia | A3 | V12 |
| N-1197 | Ia | A3 | V13 |
| N-1198 | Ia | A3 | V14 |
| N-1199 | Ia | A3 | V15 |
| N-1200 | Ia | A3 | V16 |
| N-1201 | Ia | A4 | V1 |
| N-1202 | Ia | A4 | V2 |
| N-1203 | Ia | A4 | V3 |
| N-1204 | Ia | A4 | V4 |
| N-1205 | Ia | A4 | V5 |
| N-1206 | Ia | A4 | V6 |
| N-1207 | Ia | A4 | V7 |
| N-1208 | Ia | A4 | V8 |
| N-1209 | Ia | A4 | V9 |
| N-1210 | Ia | A4 | V10 |
| N-1211 | Ia | A4 | V11 |
| N-1212 | Ia | A4 | V12 |
| N-1213 | Ia | A4 | V13 |
| N-1214 | Ia | A4 | V14 |
| N-1215 | Ia | A4 | V15 |
| N-1216 | Ia | A4 | V16 |
| N-1217 | Ia | A5 | V1 |
| N-1218 | Ia | A5 | V2 |
| N-1219 | Ia | A5 | V3 |
| N-1220 | Ia | A5 | V4 |
| N-1221 | Ia | A5 | V5 |
| N-1222 | Ia | A5 | V6 |
| N-1223 | Ia | A5 | V7 |
| N-1224 | Ia | A5 | V8 |
| N-1225 | Ia | A5 | V9 |
| N-1226 | Ia | A5 | V10 |
| N-1227 | Ia | A5 | V11 |

(continued)

| No. | (I) | (II) | (IIb) or (III) |
|---|---|---|---|
| N-1228 | Ia | A5 | V12 |
| N-1229 | Ia | A5 | V13 |
| N-1230 | Ia | A5 | V14 |
| N-1231 | Ia | A5 | V15 |
| N-1232 | Ia | A5 | V16 |
| N-1233 | Ia | A6 | V1 |
| N-1234 | Ia | A6 | V2 |
| N-1235 | Ia | A6 | V3 |
| N-1236 | Ia | A6 | V4 |
| N-1237 | Ia | A6 | V5 |
| N-1238 | Ia | A6 | V6 |
| N-1239 | Ia | A6 | V7 |
| N-1240 | Ia | A6 | V8 |
| N-1241 | Ia | A6 | V9 |
| N-1242 | Ia | A6 | V10 |
| N-1243 | Ia | A6 | V11 |
| N-1244 | Ia | A6 | V12 |
| N-1245 | Ia | A6 | V13 |
| N-1246 | Ia | A6 | V14 |
| N-1247 | Ia | A6 | V15 |
| N-1248 | Ia | A6 | V16 |
| N-1249 | Ia | A7 | V1 |
| N-1250 | Ia | A7 | V2 |
| N-1251 | Ia | A7 | V3 |
| N-1252 | Ia | A7 | V4 |
| N-1253 | Ia | A7 | V5 |
| N-1254 | Ia | A7 | V6 |
| N-1255 | Ia | A7 | V7 |
| N-1256 | Ia | A7 | V8 |
| N-1257 | Ia | A7 | V9 |
| N-1258 | Ia | A7 | V10 |
| N-1259 | Ia | A7 | V11 |
| N-1260 | Ia | A7 | V12 |
| N-1261 | Ia | A7 | V13 |
| N-1262 | Ia | A7 | V14 |
| N-1263 | Ia | A7 | V15 |
| N-1264 | Ia | A7 | V16 |
| N-1265 | Ia | A8 | V1 |

(continued)

| No. | (I) | (II) | (IIb) or (III) |
|---|---|---|---|
| N-1266 | Ia | A8 | V2 |
| N-1267 | Ia | A8 | V3 |
| N-1268 | Ia | A8 | V4 |
| N-1269 | Ia | A8 | V5 |
| N-1270 | Ia | A8 | V6 |
| N-1271 | Ia | A8 | V7 |
| N-1272 | Ia | A8 | V8 |
| N-1273 | Ia | A8 | V9 |
| N-1274 | Ia | A8 | V10 |
| N-1275 | Ia | A8 | V11 |
| N-1276 | Ia | A8 | V12 |
| N-1277 | Ia | A8 | V13 |
| N-1278 | Ia | A8 | V14 |
| N-1279 | Ia | A8 | V15 |
| N-1280 | Ia | A8 | V16 |
| N-1281 | Ia | A9 | V1 |
| N-1282 | Ia | A9 | V2 |
| N-1283 | Ia | A9 | V3 |
| N-1284 | Ia | A9 | V4 |
| N-1285 | Ia | A9 | V5 |
| N-1286 | Ia | A9 | V6 |
| N-1287 | Ia | A9 | V7 |
| N-1288 | Ia | A9 | V8 |
| N-1289 | Ia | A9 | V9 |
| N-1290 | Ia | A9 | V10 |
| N-1291 | Ia | A9 | V11 |
| N-1292 | Ia | A9 | V12 |
| N-1293 | Ia | A9 | V13 |
| N-1294 | Ia | A9 | V14 |
| N-1295 | Ia | A9 | V15 |
| N-1296 | Ia | A9 | V16 |
| N-1297 | Ia | A10 | V1 |
| N-1298 | Ia | A10 | V2 |
| N-1299 | Ia | A10 | V3 |
| N-1300 | Ia | A10 | V4 |
| N-1301 | Ia | A10 | V5 |
| N-1302 | Ia | A10 | V6 |
| N-1303 | Ia | A10 | V7 |

(continued)

| No. | (I) | (II) | (IIb) or (III) |
|---|---|---|---|
| N-1304 | Ia | A10 | V8 |
| N-1305 | Ia | A10 | V9 |
| N-1306 | Ia | A10 | V10 |
| N-1307 | Ia | A10 | V11 |
| N-1308 | Ia | A10 | V12 |
| N-1309 | Ia | A10 | V13 |
| N-1310 | Ia | A10 | V14 |
| N-1311 | Ia | A10 | V15 |
| N-1312 | Ia | A10 | V16 |
| N-1313 | Ia | A11 | V1 |
| N-1314 | Ia | A11 | V2 |
| N-1315 | Ia | A11 | V3 |
| N-1316 | Ia | A11 | V4 |
| N-1317 | Ia | A11 | V5 |
| N-1318 | Ia | A11 | V6 |
| N-1319 | Ia | A11 | V7 |
| N-1320 | Ia | A11 | V8 |
| N-1321 | Ia | A11 | V9 |
| N-1322 | Ia | A11 | V10 |
| N-1323 | Ia | A11 | V11 |
| N-1324 | Ia | A11 | V12 |
| N-1325 | Ia | A11 | V13 |
| N-1326 | Ia | A11 | V14 |
| N-1327 | Ia | A11 | V15 |
| N-1328 | Ia | A11 | V16 |
| N-1329 | Ia | A12 | V1 |
| N-1330 | Ia | A12 | V2 |
| N-1331 | Ia | A12 | V3 |
| N-1332 | Ia | A12 | V4 |
| N-1333 | Ia | A12 | V5 |
| N-1334 | Ia | A12 | V6 |
| N-1335 | Ia | A12 | V7 |
| N-1336 | Ia | A12 | V8 |
| N-1337 | Ia | A12 | V9 |
| N-1338 | Ia | A12 | V10 |
| N-1339 | Ia | A12 | V11 |
| N-1340 | Ia | A12 | V12 |
| N-1341 | Ia | A12 | V13 |

(continued)

| No. | (I) | (II) | (IIb) or (III) |
|---|---|---|---|
| N-1342 | Ia | A12 | V14 |
| N-1343 | Ia | A12 | V15 |
| N-1344 | Ia | A12 | V16 |
| N-1345 | Ia | A13 | V1 |
| N-1346 | Ia | A13 | V2 |
| N-1347 | Ia | A13 | V3 |
| N-1348 | Ia | A13 | V4 |
| N-1349 | Ia | A13 | V5 |
| N-1350 | Ia | A13 | V6 |
| N-1351 | Ia | A13 | V7 |
| N-1352 | Ia | A13 | V8 |
| N-1353 | Ia | A13 | V9 |
| N-1354 | Ia | A13 | V10 |
| N-1355 | Ia | A13 | V11 |
| N-1356 | Ia | A13 | V12 |
| N-1357 | Ia | A13 | V13 |
| N-1358 | Ia | A13 | V14 |
| N-1359 | Ia | A13 | V15 |
| N-1360 | Ia | A13 | V16 |
| N-1361 | Ia | A14 | V1 |
| N-1362 | Ia | A14 | V2 |
| N-1363 | Ia | A14 | V3 |
| N-1364 | Ia | A14 | V4 |
| N-1365 | Ia | A14 | V5 |
| N-1366 | Ia | A14 | V6 |
| N-1367 | Ia | A14 | V7 |
| N-1368 | Ia | A14 | V8 |
| N-1369 | Ia | A14 | V9 |
| N-1370 | Ia | A14 | V10 |
| N-1371 | Ia | A14 | V11 |
| N-1372 | Ia | A14 | V12 |
| N-1373 | Ia | A14 | V13 |
| N-1374 | Ia | A14 | V14 |
| N-1375 | Ia | A14 | V15 |
| N-1376 | Ia | A14 | V16 |
| N-1377 | Ia | A15 | V1 |
| N-1378 | Ia | A15 | V2 |
| N-1379 | Ia | A15 | V3 |

(continued)

| No. | (I) | (II) | (IIb) or (III) |
|---|---|---|---|
| N-1380 | Ia | A15 | V4 |
| N-1381 | Ia | A15 | V5 |
| N-1382 | Ia | A15 | V6 |
| N-1383 | Ia | A15 | V7 |
| N-1384 | Ia | A15 | V8 |
| N-1385 | Ia | A15 | V9 |
| N-1386 | Ia | A15 | V10 |
| N-1387 | Ia | A15 | V11 |
| N-1388 | Ia | A15 | V12 |
| N-1389 | Ia | A15 | V13 |
| N-1390 | Ia | A15 | V14 |
| N-1391 | Ia | A15 | V15 |
| N-1392 | Ia | A15 | V16 |
| N-1393 | Ia | A19 | V1 |
| N-1394 | Ia | A19 | V2 |
| N-1395 | Ia | A19 | V3 |
| N-1396 | Ia | A19 | V4 |
| N-1397 | Ia | A19 | V5 |
| N-1398 | Ia | A19 | V6 |
| N-1399 | Ia | A19 | V7 |
| N-1400 | Ia | A19 | V8 |
| N-1401 | Ia | A19 | V9 |
| N-1402 | Ia | A19 | V10 |
| N-1403 | Ia | A19 | V11 |
| N-1404 | Ia | A19 | V12 |
| N-1405 | Ia | A19 | V13 |
| N-1406 | Ia | A19 | V14 |
| N-1407 | Ia | A19 | V15 |
| N-1408 | Ia | A19 | V16 |
| N-1409 | Id | A1 | V1 |
| N-1410 | Id | A1 | V2 |
| N-1411 | Id | A1 | V3 |
| N-1412 | Id | A1 | V4 |
| N-1413 | Id | A1 | V5 |
| N-1414 | Id | A1 | V6 |
| N-1415 | Id | A1 | V7 |
| N-1416 | Id | A1 | V8 |
| N-1417 | Id | A1 | V9 |

(continued)

| No. | (I) | (II) | (IIb) or (III) |
|---|---|---|---|
| N-1418 | Id | A1 | V10 |
| N-1419 | Id | A1 | V11 |
| N-1420 | Id | A1 | V12 |
| N-1421 | Id | A1 | V13 |
| N-1422 | Id | A1 | V14 |
| N-1423 | Id | A1 | V15 |
| N-1424 | Id | A1 | V16 |
| N-1425 | Id | A2 | V1 |
| N-1426 | Id | A2 | V2 |
| N-1427 | Id | A2 | V3 |
| N-1428 | Id | A2 | V4 |
| N-1429 | Id | A2 | V5 |
| N-1430 | Id | A2 | V6 |
| N-1431 | Id | A2 | V7 |
| N-1432 | Id | A2 | V8 |
| N-1433 | Id | A2 | V9 |
| N-1434 | Id | A2 | V10 |
| N-1435 | Id | A2 | V11 |
| N-1436 | Id | A2 | V12 |
| N-1437 | Id | A2 | V13 |
| N-1438 | Id | A2 | V14 |
| N-1439 | Id | A2 | V15 |
| N-1440 | Id | A2 | V16 |
| N-1441 | Id | A3 | V1 |
| N-1442 | Id | A3 | V2 |
| N-1443 | Id | A3 | V3 |
| N-1444 | Id | A3 | V4 |
| N-1445 | Id | A3 | V5 |
| N-1446 | Id | A3 | V6 |
| N-1447 | Id | A3 | V7 |
| N-1448 | Id | A3 | V8 |
| N-1449 | Id | A3 | V9 |
| N-1450 | Id | A3 | V10 |
| N-1451 | Id | A3 | V11 |
| N-1452 | Id | A3 | V12 |
| N-1453 | Id | A3 | V13 |
| N-1454 | Id | A3 | V14 |
| N-1455 | Id | A3 | V15 |

(continued)

| No. | (I) | (II) | (IIb) or (III) |
|---|---|---|---|
| N-1456 | Id | A3 | V16 |
| N-1457 | Id | A4 | V1 |
| N-1458 | Id | A4 | V2 |
| N-1459 | Id | A4 | V3 |
| N-1460 | Id | A4 | V4 |
| N-1461 | Id | A4 | V5 |
| N-1462 | Id | A4 | V6 |
| N-1463 | Id | A4 | V7 |
| N-1464 | Id | A4 | V8 |
| N-1465 | Id | A4 | V9 |
| N-1466 | Id | A4 | V10 |
| N-1467 | Id | A4 | V11 |
| N-1468 | Id | A4 | V12 |
| N-1469 | Id | A4 | V13 |
| N-1470 | Id | A4 | V14 |
| N-1471 | Id | A4 | V15 |
| N-1472 | Id | A4 | V16 |
| N-1473 | Id | A5 | V1 |
| N-1474 | Id | A5 | V2 |
| N-1475 | Id | A5 | V3 |
| N-1476 | Id | A5 | V4 |
| N-1477 | Id | A5 | V5 |
| N-1478 | Id | A5 | V6 |
| N-1479 | Id | A5 | V7 |
| N-1480 | Id | A5 | V8 |
| N-1481 | Id | A5 | V9 |
| N-1482 | Id | A5 | V10 |
| N-1483 | Id | A5 | V11 |
| N-1484 | Id | A5 | V12 |
| N-1485 | Id | A5 | V13 |
| N-1486 | Id | A5 | V14 |
| N-1487 | Id | A5 | V15 |
| N-1488 | Id | A5 | V16 |
| N-1489 | Id | A6 | V1 |
| N-1490 | Id | A6 | V2 |
| N-1491 | Id | A6 | V3 |
| N-1492 | Id | A6 | V4 |
| N-1493 | Id | A6 | V5 |

(continued)

| No. | (I) | (II) | (IIb) or (III) |
|---|---|---|---|
| N-1494 | Id | A6 | V6 |
| N-1495 | Id | A6 | V7 |
| N-1496 | Id | A6 | V8 |
| N-1497 | Id | A6 | V9 |
| N-1498 | Id | A6 | V10 |
| N-1499 | Id | A6 | V11 |
| N-1500 | Id | A6 | V12 |
| N-1501 | Id | A6 | V13 |
| N-1502 | Id | A6 | V14 |
| N-1503 | Id | A6 | V15 |
| N-1504 | Id | A6 | V16 |
| N-1505 | Id | A7 | V1 |
| N-1506 | Id | A7 | V2 |
| N-1507 | Id | A7 | V3 |
| N-1508 | Id | A7 | V4 |
| N-1509 | Id | A7 | V5 |
| N-1510 | Id | A7 | V6 |
| N-1511 | Id | A7 | V7 |
| N-1512 | Id | A7 | V8 |
| N-1513 | Id | A7 | V9 |
| N-1514 | Id | A7 | V10 |
| N-1515 | Id | A7 | V11 |
| N-1516 | Id | A7 | V12 |
| N-1517 | Id | A7 | V13 |
| N-1518 | Id | A7 | V14 |
| N-1519 | Id | A7 | V15 |
| N-1520 | Id | A7 | V16 |
| N-1521 | Id | A8 | V1 |
| N-1522 | Id | A8 | V2 |
| N-1523 | Id | A8 | V3 |
| N-1524 | Id | A8 | V4 |
| N-1525 | Id | A8 | V5 |
| N-1526 | Id | A8 | V6 |
| N-1527 | Id | A8 | V7 |
| N-1528 | Id | A8 | V8 |
| N-1529 | Id | A8 | V9 |
| N-1530 | Id | A8 | V10 |
| N-1531 | Id | A8 | V11 |

(continued)

| No. | (I) | (II) | (IIb) or (III) |
|---|---|---|---|
| N-1532 | Id | A8 | V12 |
| N-1533 | Id | A8 | V13 |
| N-1534 | Id | A8 | V14 |
| N-1535 | Id | A8 | V15 |
| N-1536 | Id | A8 | V16 |
| N-1537 | Id | A9 | V1 |
| N-1538 | Id | A9 | V2 |
| N-1539 | Id | A9 | V3 |
| N-1540 | Id | A9 | V4 |
| N-1541 | Id | A9 | V5 |
| N-1542 | Id | A9 | V6 |
| N-1543 | Id | A9 | V7 |
| N-1544 | Id | A9 | V8 |
| N-1545 | Id | A9 | V9 |
| N-1546 | Id | A9 | V10 |
| N-1547 | Id | A9 | V11 |
| N-1548 | Id | A9 | V12 |
| N-1549 | Id | A9 | V13 |
| N-1550 | Id | A9 | V14 |
| N-1551 | Id | A9 | V15 |
| N-1552 | Id | A9 | V16 |
| N-1553 | Id | A10 | V1 |
| N-1554 | Id | A10 | V2 |
| N-1555 | Id | A10 | V3 |
| N-1556 | Id | A10 | V4 |
| N-1557 | Id | A10 | V5 |
| N-1558 | Id | A10 | V6 |
| N-1559 | Id | A10 | V7 |
| N-1560 | Id | A10 | V8 |
| N-1561 | Id | A10 | V9 |
| N-1562 | Id | A10 | V10 |
| N-1563 | Id | A10 | V11 |
| N-1564 | Id | A10 | V12 |
| N-1565 | Id | A10 | V13 |
| N-1566 | Id | A10 | V14 |
| N-1567 | Id | A10 | V15 |
| N-1568 | Id | A10 | V16 |
| N-1569 | Id | A11 | V1 |

(continued)

| No. | (I) | (II) | (IIb) or (III) |
|---|---|---|---|
| N-1570 | Id | A11 | V2 |
| N-1571 | Id | A11 | V3 |
| N-1572 | Id | A11 | V4 |
| N-1573 | Id | A11 | V5 |
| N-1574 | Id | A11 | V6 |
| N-1575 | Id | A11 | V7 |
| N-1576 | Id | A11 | V8 |
| N-1577 | Id | A11 | V9 |
| N-1578 | Id | A11 | V10 |
| N-1579 | Id | A11 | V11 |
| N-1580 | Id | A11 | V12 |
| N-1581 | Id | A11 | V13 |
| N-1582 | Id | A11 | V14 |
| N-1583 | Id | A11 | V15 |
| N-1584 | Id | A11 | V16 |
| N-1585 | Id | A12 | V1 |
| N-1586 | Id | A12 | V2 |
| N-1587 | Id | A12 | V3 |
| N-1588 | Id | A12 | V4 |
| N-1589 | Id | A12 | V5 |
| N-1590 | Id | A12 | V6 |
| N-1591 | Id | A12 | V7 |
| N-1592 | Id | A12 | V8 |
| N-1593 | Id | A12 | V9 |
| N-1594 | Id | A12 | V10 |
| N-1595 | Id | A12 | V11 |
| N-1596 | Id | A12 | V12 |
| N-1597 | Id | A12 | V13 |
| N-1598 | Id | A12 | V14 |
| N-1599 | Id | A12 | V15 |
| N-1600 | Id | A12 | V16 |
| N-1601 | Id | A13 | V1 |
| N-1602 | Id | A13 | V2 |
| N-1603 | Id | A13 | V3 |
| N-1604 | Id | A13 | V4 |
| N-1605 | Id | A13 | V5 |
| N-1606 | Id | A13 | V6 |
| N-1607 | Id | A13 | V7 |

(continued)

| No. | (I) | (II) | (IIb) or (III) |
|---|---|---|---|
| N-1608 | Id | A13 | V8 |
| N-1609 | Id | A13 | V9 |
| N-1610 | Id | A13 | V10 |
| N-1611 | Id | A13 | V11 |
| N-1612 | Id | A13 | V12 |
| N-1613 | Id | A13 | V13 |
| N-1614 | Id | A13 | V14 |
| N-1615 | Id | A13 | V15 |
| N-1616 | Id | A13 | V16 |
| N-1617 | Id | A14 | V1 |
| N-1618 | Id | A14 | V2 |
| N-1619 | Id | A14 | V3 |
| N-1620 | Id | A14 | V4 |
| N-1621 | Id | A14 | V5 |
| N-1622 | Id | A14 | V6 |
| N-1623 | Id | A14 | V7 |
| N-1624 | Id | A14 | V8 |
| N-1625 | Id | A14 | V9 |
| N-1626 | Id | A14 | V10 |
| N-1627 | Id | A14 | V11 |
| N-1628 | Id | A14 | V12 |
| N-1629 | Id | A14 | V13 |
| N-1630 | Id | A14 | V14 |
| N-1631 | Id | A14 | V15 |
| N-1632 | Id | A14 | V16 |
| N-1633 | Id | A15 | V1 |
| N-1634 | Id | A15 | V2 |
| N-1635 | Id | A15 | V3 |
| N-1636 | Id | A15 | V4 |
| N-1637 | Id | A15 | V5 |
| N-1638 | Id | A15 | V6 |
| N-1639 | Id | A15 | V7 |
| N-1640 | Id | A15 | V8 |
| N-1641 | Id | A15 | V9 |
| N-1642 | Id | A15 | V10 |
| N-1643 | Id | A15 | V11 |
| N-1644 | Id | A15 | V12 |
| N-1645 | Id | A15 | V13 |

(continued)

| No. | (I) | (II) | (IIb) or (III) |
|---|---|---|---|
| N-1646 | Id | A15 | V14 |
| N-1647 | Id | A15 | V15 |
| N-1648 | Id | A15 | V16 |
| N-1649 | Id | A19 | V1 |
| N-1650 | Id | A19 | V2 |
| N-1651 | Id | A19 | V3 |
| N-1652 | Id | A19 | V4 |
| N-1653 | Id | A19 | V5 |
| N-1654 | Id | A19 | V6 |
| N-1655 | Id | A19 | V7 |
| N-1656 | Id | A19 | V8 |
| N-1657 | Id | A19 | V9 |
| N-1658 | Id | A19 | V10 |
| N-1659 | Id | A19 | V11 |
| N-1660 | Id | A19 | V12 |
| N-1661 | Id | A19 | V13 |
| N-1662 | Id | A19 | V14 |
| N-1663 | Id | A19 | V15 |
| N-1664 | Id | A19 | V16 |
| N-1665 | Ie | A1 | V1 |
| N-1666 | Ie | A1 | V2 |
| N-1667 | Ie | A1 | V3 |
| N-1668 | Ie | A1 | V4 |
| N-1669 | Ie | A1 | V5 |
| N-1670 | Ie | A1 | V6 |
| N-1671 | Ie | A1 | V7 |
| N-1672 | Ie | A1 | V8 |
| N-1673 | Ie | A1 | V9 |
| N-1674 | Ie | A1 | V10 |
| N-1675 | Ie | A1 | V11 |
| N-1676 | Ie | A1 | V12 |
| N-1677 | Ie | A1 | V13 |
| N-1678 | Ie | A1 | V14 |
| N-1679 | Ie | A1 | V15 |
| N-1680 | Ie | A1 | V16 |
| N-1681 | Ie | A2 | V1 |
| N-1682 | Ie | A2 | V2 |
| N-1683 | Ie | A2 | V3 |

(continued)

| No. | (I) | (II) | (IIb) or (III) |
|---|---|---|---|
| N-1684 | Ie | A2 | V4 |
| N-1685 | Ie | A2 | V5 |
| N-1686 | Ie | A2 | V6 |
| N-1687 | Ie | A2 | V7 |
| N-1688 | Ie | A2 | V8 |
| N-1689 | Ie | A2 | V9 |
| N-1690 | Ie | A2 | V10 |
| N-1691 | Ie | A2 | V11 |
| N-1692 | Ie | A2 | V12 |
| N-1693 | Ie | A2 | V13 |
| N-1694 | Ie | A2 | V14 |
| N-1695 | Ie | A2 | V15 |
| N-1696 | Ie | A2 | V16 |
| N-1697 | Ie | A3 | V1 |
| N-1698 | Ie | A3 | V2 |
| N-1699 | Ie | A3 | V3 |
| N-1700 | Ie | A3 | V4 |
| N-1701 | Ie | A3 | V5 |
| N-1702 | Ie | A3 | V6 |
| N-1703 | Ie | A3 | V7 |
| N-1704 | Ie | A3 | V8 |
| N-1705 | Ie | A3 | V9 |
| N-1706 | Ie | A3 | V10 |
| N-1707 | Ie | A3 | V11 |
| N-1708 | Ie | A3 | V12 |
| N-1709 | Ie | A3 | V13 |
| N-1710 | Ie | A3 | V14 |
| N-1711 | Ie | A3 | V15 |
| N-1712 | Ie | A3 | V16 |
| N-1713 | Ie | A4 | V1 |
| N-1714 | Ie | A4 | V2 |
| N-1715 | Ie | A4 | V3 |
| N-1716 | Ie | A4 | V4 |
| N-1717 | Ie | A4 | V5 |
| N-1718 | Ie | A4 | V6 |
| N-1719 | Ie | A4 | V7 |
| N-1720 | Ie | A4 | V8 |
| N-1721 | Ie | A4 | V9 |

(continued)

| No. | (I) | (II) | (IIb) or (III) |
|---|---|---|---|
| N-1722 | Ie | A4 | V10 |
| N-1723 | Ie | A4 | V11 |
| N-1724 | Ie | A4 | V12 |
| N-1725 | Ie | A4 | V13 |
| N-1726 | Ie | A4 | V14 |
| N-1727 | Ie | A4 | V15 |
| N-1728 | Ie | A4 | V16 |
| N-1729 | Ie | A5 | V1 |
| N-1730 | Ie | A5 | V2 |
| N-1731 | Ie | A5 | V3 |
| N-1732 | Ie | A5 | V4 |
| N-1733 | Ie | A5 | V5 |
| N-1734 | Ie | A5 | V6 |
| N-1735 | Ie | A5 | V7 |
| N-1736 | Ie | A5 | V8 |
| N-1737 | Ie | A5 | V9 |
| N-1738 | Ie | A5 | V10 |
| N-1739 | Ie | A5 | V11 |
| N-1740 | Ie | A5 | V12 |
| N-1741 | Ie | A5 | V13 |
| N-1742 | Ie | A5 | V14 |
| N-1743 | Ie | A5 | V15 |
| N-1744 | Ie | A5 | V16 |
| N-1745 | Ie | A6 | V1 |
| N-1746 | Ie | A6 | V2 |
| N-1747 | Ie | A6 | V3 |
| N-1748 | Ie | A6 | V4 |
| N-1749 | Ie | A6 | V5 |
| N-1750 | Ie | A6 | V6 |
| N-1751 | Ie | A6 | V7 |
| N-1752 | Ie | A6 | V8 |
| N-1753 | Ie | A6 | V9 |
| N-1754 | Ie | A6 | V10 |
| N-1755 | Ie | A6 | V11 |
| N-1756 | Ie | A6 | V12 |
| N-1757 | Ie | A6 | V13 |
| N-1758 | Ie | A6 | V14 |
| N-1759 | Ie | A6 | V15 |

(continued)

| No. | (I) | (II) | (IIb) or (III) |
|---|---|---|---|
| N-1760 | Ie | A6 | V16 |
| N-1761 | Ie | A7 | V1 |
| N-1762 | Ie | A7 | V2 |
| N-1763 | Ie | A7 | V3 |
| N-1764 | Ie | A7 | V4 |
| N-1765 | Ie | A7 | V5 |
| N-1766 | Ie | A7 | V6 |
| N-1767 | Ie | A7 | V7 |
| N-1768 | Ie | A7 | V8 |
| N-1769 | Ie | A7 | V9 |
| N-1770 | Ie | A7 | V10 |
| N-1771 | Ie | A7 | V11 |
| N-1772 | Ie | A7 | V12 |
| N-1773 | Ie | A7 | V13 |
| N-1774 | Ie | A7 | V14 |
| N-1775 | Ie | A7 | V15 |
| N-1776 | Ie | A7 | V16 |
| N-1777 | Ie | A8 | V1 |
| N-1778 | Ie | A8 | V2 |
| N-1779 | Ie | A8 | V3 |
| N-1780 | Ie | A8 | V4 |
| N-1781 | Ie | A8 | V5 |
| N-1782 | Ie | A8 | V6 |
| N-1783 | Ie | A8 | V7 |
| N-1784 | Ie | A8 | V8 |
| N-1785 | Ie | A8 | V9 |
| N-1786 | Ie | A8 | V10 |
| N-1787 | Ie | A8 | V11 |
| N-1788 | Ie | A8 | V12 |
| N-1789 | Ie | A8 | V13 |
| N-1790 | Ie | A8 | V14 |
| N-1791 | Ie | A8 | V15 |
| N-1792 | Ie | A8 | V16 |
| N-1793 | Ie | A9 | V1 |
| N-1794 | Ie | A9 | V2 |
| N-1795 | Ie | A9 | V3 |
| N-1796 | Ie | A9 | V4 |
| N-1797 | Ie | A9 | V5 |

(continued)

| No. | (I) | (II) | (IIb) or (III) |
|---|---|---|---|
| N-1798 | Ie | A9 | V6 |
| N-1799 | Ie | A9 | V7 |
| N-1800 | Ie | A9 | V8 |
| N-1801 | Ie | A9 | V9 |
| N-1802 | Ie | A9 | V10 |
| N-1803 | Ie | A9 | V11 |
| N-1804 | Ie | A9 | V12 |
| N-1805 | Ie | A9 | V13 |
| N-1806 | Ie | A9 | V14 |
| N-1807 | Ie | A9 | V15 |
| N-1808 | Ie | A9 | V16 |
| N-1809 | Ie | A10 | V1 |
| N-1810 | Ie | A10 | V2 |
| N-1811 | Ie | A10 | V3 |
| N-1812 | Ie | A10 | V4 |
| N-1813 | Ie | A10 | V5 |
| N-1814 | Ie | A10 | V6 |
| N-1815 | Ie | A10 | V7 |
| N-1816 | Ie | A10 | V8 |
| N-1817 | Ie | A10 | V9 |
| N-1818 | Ie | A10 | V10 |
| N-1819 | Ie | A10 | V11 |
| N-1820 | Ie | A10 | V12 |
| N-1821 | Ie | A10 | V13 |
| N-1822 | Ie | A10 | V14 |
| N-1823 | Ie | A10 | V15 |
| N-1824 | Ie | A10 | V16 |
| N-1825 | Ie | A11 | V1 |
| N-1826 | Ie | A11 | V2 |
| N-1827 | Ie | A11 | V3 |
| N-1828 | Ie | A11 | V4 |
| N-1829 | Ie | A11 | V5 |
| N-1830 | Ie | A11 | V6 |
| N-1831 | Ie | A11 | V7 |
| N-1832 | Ie | A11 | V8 |
| N-1833 | Ie | A11 | V9 |
| N-1834 | Ie | A11 | V10 |
| N-1835 | Ie | A11 | V11 |

(continued)

| No. | (I) | (II) | (IIb) or (III) |
|---|---|---|---|
| N-1836 | Ie | A11 | V12 |
| N-1837 | Ie | A11 | V13 |
| N-1838 | Ie | A11 | V14 |
| N-1839 | Ie | A11 | V15 |
| N-1840 | Ie | A11 | V16 |
| N-1841 | Ie | A12 | V1 |
| N-1842 | Ie | A12 | V2 |
| N-1843 | Ie | A12 | V3 |
| N-1844 | Ie | A12 | V4 |
| N-1845 | Ie | A12 | V5 |
| N-1846 | Ie | A12 | V6 |
| N-1847 | Ie | A12 | V7 |
| N-1848 | Ie | A12 | V8 |
| N-1849 | Ie | A12 | V9 |
| N-1850 | Ie | A12 | V10 |
| N-1851 | Ie | A12 | V11 |
| N-1852 | Ie | A12 | V12 |
| N-1853 | Ie | A12 | V13 |
| N-1854 | Ie | A12 | V14 |
| N-1855 | Ie | A12 | V15 |
| N-1856 | Ie | A12 | V16 |
| N-1857 | Ie | A13 | V1 |
| N-1858 | Ie | A13 | V2 |
| N-1859 | Ie | A13 | V3 |
| N-1860 | Ie | A13 | V4 |
| N-1861 | Ie | A13 | V5 |
| N-1862 | Ie | A13 | V6 |
| N-1863 | Ie | A13 | V7 |
| N-1864 | Ie | A13 | V8 |
| N-1865 | Ie | A13 | V9 |
| N-1866 | Ie | A13 | V10 |
| N-1867 | Ie | A13 | V11 |
| N-1868 | Ie | A13 | V12 |
| N-1869 | Ie | A13 | V13 |
| N-1870 | Ie | A13 | V14 |
| N-1871 | Ie | A13 | V15 |
| N-1872 | Ie | A13 | V16 |
| N-1873 | Ie | A14 | V1 |

(continued)

| No. | (I) | (II) | (IIb) or (III) |
|---|---|---|---|
| N-1874 | Ie | A14 | V2 |
| N-1875 | Ie | A14 | V3 |
| N-1876 | Ie | A14 | V4 |
| N-1877 | Ie | A14 | V5 |
| N-1878 | Ie | A14 | V6 |
| N-1879 | Ie | A14 | V7 |
| N-1880 | Ie | A14 | V8 |
| N-1881 | Ie | A14 | V9 |
| N-1882 | Ie | A14 | V10 |
| N-1883 | Ie | A14 | V11 |
| N-1884 | Ie | A14 | V12 |
| N-1885 | Ie | A14 | V13 |
| N-1886 | Ie | A14 | V14 |
| N-1887 | Ie | A14 | V15 |
| N-1888 | Ie | A14 | V16 |
| N-1889 | Ie | A15 | V1 |
| N-1890 | Ie | A15 | V2 |
| N-1891 | Ie | A15 | V3 |
| N-1892 | Ie | A15 | V4 |
| N-1893 | Ie | A15 | V5 |
| N-1894 | Ie | A15 | V6 |
| N-1895 | Ie | A15 | V7 |
| N-1896 | Ie | A15 | V8 |
| N-1897 | Ie | A15 | V9 |
| N-1898 | Ie | A15 | V10 |
| N-1899 | Ie | A15 | V11 |
| N-1900 | Ie | A15 | V12 |
| N-1901 | Ie | A15 | V13 |
| N-1902 | Ie | A15 | V14 |
| N-1903 | Ie | A15 | V15 |
| N-1904 | Ie | A15 | V16 |
| N-1905 | Ie | A19 | V1 |
| N-1906 | Ie | A19 | V2 |
| N-1907 | Ie | A19 | V3 |
| N-1908 | Ie | A19 | V4 |
| N-1909 | Ie | A19 | V5 |
| N-1910 | Ie | A19 | V6 |
| N-1911 | Ie | A19 | V7 |

(continued)

| No. | (I) | (II) | (IIb) or (III) |
|---|---|---|---|
| N-1912 | Ie | A19 | V8 |
| N-1913 | Ie | A19 | V9 |
| N-1914 | Ie | A19 | V10 |
| N-1915 | Ie | A19 | V11 |
| N-1916 | Ie | A19 | V12 |
| N-1917 | Ie | A19 | V13 |
| N-1918 | Ie | A19 | V14 |
| N-1919 | Ie | A19 | V15 |
| N-1920 | Ie | A19 | V16 |
| N-1921 | Ig | A1 | V1 |
| N-1922 | Ig | A1 | V2 |
| N-1923 | Ig | A1 | V3 |
| N-1924 | Ig | A1 | V4 |
| N-1925 | Ig | A1 | V5 |
| N-1926 | Ig | A1 | V6 |
| N-1927 | Ig | A1 | V7 |
| N-1928 | Ig | A1 | V8 |
| N-1929 | Ig | A1 | V9 |
| N-1930 | Ig | A1 | V10 |
| N-1931 | Ig | A1 | V11 |
| N-1932 | Ig | A1 | V12 |
| N-1933 | Ig | A1 | V13 |
| N-1934 | Ig | A1 | V14 |
| N-1935 | Ig | A1 | V15 |
| N-1936 | Ig | A1 | V16 |
| N-1937 | Ig | A2 | V1 |
| N-1938 | Ig | A2 | V2 |
| N-1939 | Ig | A2 | V3 |
| N-1940 | Ig | A2 | V4 |
| N-1941 | Ig | A2 | V5 |
| N-1942 | Ig | A2 | V6 |
| N-1943 | Ig | A2 | V7 |
| N-1944 | Ig | A2 | V8 |
| N-1945 | Ig | A2 | V9 |
| N-1946 | Ig | A2 | V10 |
| M-1947 | Ig | A2 | V11 |
| N-1948 | Ig | A2 | V12 |
| N-1949 | Ig | A2 | V13 |

(continued)

| No. | (I) | (II) | (IIb) or (III) |
|---|---|---|---|
| N-1950 | Ig | A2 | V14 |
| N-1951 | Ig | A2 | V15 |
| N-1952 | Ig | A2 | V16 |
| N-1953 | Ig | A3 | V1 |
| N-1954 | Ig | A3 | V2 |
| N-1955 | Ig | A3 | V3 |
| N-1956 | Ig | A3 | V4 |
| N-1957 | Ig | A3 | V5 |
| N-1958 | Ig | A3 | V6 |
| N-1959 | Ig | A3 | V7 |
| N-1960 | Ig | A3 | V8 |
| N-1961 | Ig | A3 | V9 |
| N-1962 | Ig | A3 | V10 |
| N-1963 | Ig | A3 | V11 |
| N-1964 | Ig | A3 | V12 |
| N-1965 | Ig | A3 | V13 |
| N-1966 | Ig | A3 | V14 |
| N-1967 | Ig | A3 | V15 |
| N-1968 | Ig | A3 | V16 |
| N-1969 | Ig | A4 | V1 |
| N-1970 | Ig | A4 | V2 |
| N-1971 | Ig | A4 | V3 |
| N-1972 | Ig | A4 | V4 |
| N-1973 | Ig | A4 | V5 |
| N-1974 | Ig | A4 | V6 |
| N-1975 | Ig | A4 | V7 |
| N-1976 | Ig | A4 | V8 |
| N-1977 | Ig | A4 | V9 |
| N-1978 | Ig | A4 | V10 |
| N-1979 | Ig | A4 | V11 |
| N-1980 | Ig | A4 | V12 |
| N-1981 | Ig | A4 | V13 |
| N-1982 | Ig | A4 | V14 |
| N-1983 | Ig | A4 | V15 |
| N-1984 | Ig | A4 | V16 |
| N-1985 | Ig | A5 | V1 |
| N-1986 | Ig | A5 | V2 |
| N-1987 | Ig | A5 | V3 |

(continued)

| No. | (I) | (II) | (IIb) or (III) |
|---|---|---|---|
| N-1988 | Ig | A5 | V4 |
| N-1989 | Ig | A5 | V5 |
| N-1990 | Ig | A5 | V6 |
| N-1991 | Ig | A5 | V7 |
| N-1992 | Ig | A5 | V8 |
| N-1993 | Ig | A5 | V9 |
| N-1994 | Ig | A5 | V10 |
| N-1995 | Ig | A5 | V11 |
| N-1996 | Ig | A5 | V12 |
| N-1997 | Ig | A5 | V13 |
| N-1998 | Ig | A5 | V14 |
| N-1999 | Ig | A5 | V15 |
| N-2000 | Ig | A5 | V16 |
| N-2001 | Ig | A6 | V1 |
| N-2002 | Ig | A6 | V2 |
| N-2003 | Ig | A6 | V3 |
| N-2004 | Ig | A6 | V4 |
| N-2005 | Ig | A6 | V5 |
| N-2006 | Ig | A6 | V6 |
| N-2007 | Ig | A6 | V7 |
| N-2008 | Ig | A6 | V8 |
| N-2009 | Ig | A6 | V9 |
| N-2010 | Ig | A6 | V10 |
| N-2011 | Ig | A6 | V11 |
| N-2012 | Ig | A6 | V12 |
| N-2013 | Ig | A6 | V13 |
| N-2014 | Ig | A6 | V14 |
| N-2015 | Ig | A6 | V15 |
| N-2016 | Ig | A6 | V16 |
| N-2017 | Ig | A7 | V1 |
| N-2018 | Ig | A7 | V2 |
| N-2019 | Ig | A7 | V3 |
| N-2020 | Ig | A7 | V4 |
| N-2021 | Ig | A7 | V5 |
| N-2022 | Ig | A7 | V6 |
| N-2023 | Ig | A7 | V7 |
| N-2024 | Ig | A7 | V8 |
| N-2025 | Ig | A7 | V9 |

(continued)

| No. | (I) | (II) | (IIb) or (III) |
|---|---|---|---|
| N-2026 | Ig | A7 | V10 |
| N-2027 | Ig | A7 | V11 |
| N-2028 | Ig | A7 | V12 |
| N-2029 | Ig | A7 | V13 |
| N-2030 | Ig | A7 | V14 |
| N-2031 | Ig | A7 | V15 |
| N-2032 | Ig | A7 | V16 |
| N-2033 | Ig | A8 | V1 |
| N-2034 | Ig | A8 | V2 |
| N-2035 | Ig | A8 | V3 |
| N-2036 | Ig | A8 | V4 |
| N-2037 | Ig | A8 | V5 |
| N-2038 | Ig | A8 | V6 |
| N-2039 | Ig | A8 | V7 |
| N-2040 | Ig | A8 | V8 |
| N-2041 | Ig | A8 | V9 |
| N-2042 | Ig | A8 | V10 |
| N-2043 | Ig | A8 | V11 |
| N-2044 | Ig | A8 | V12 |
| N-2045 | Ig | A8 | V13 |
| N-2046 | Ig | A8 | V14 |
| N-2047 | Ig | A8 | V15 |
| N-2048 | Ig | A8 | V16 |
| N-2049 | Ig | A9 | V1 |
| N-2050 | Ig | A9 | V2 |
| N-2051 | Ig | A9 | V3 |
| N-2052 | Ig | A9 | V4 |
| N-2053 | Ig | A9 | V5 |
| N-2054 | Ig | A9 | V6 |
| N-2055 | Ig | A9 | V7 |
| N-2056 | Ig | A9 | V8 |
| N-2057 | Ig | A9 | V9 |
| N-2058 | Ig | A9 | V10 |
| N-2059 | Ig | A9 | V11 |
| N-2060 | Ig | A9 | V12 |
| N-2061 | Ig | A9 | V13 |
| N-2062 | Ig | A9 | V14 |
| N-2063 | Ig | A9 | V15 |

(continued)

| No. | (I) | (II) | (IIb) or (III) |
|---|---|---|---|
| N-2064 | Ig | A9 | V16 |
| N-2065 | Ig | A10 | V1 |
| N-2066 | Ig | A10 | V2 |
| N-2067 | Ig | A10 | V3 |
| N-2068 | Ig | A10 | V4 |
| N-2069 | Ig | A10 | V5 |
| N-2070 | Ig | A10 | V6 |
| N-2071 | Ig | A10 | V7 |
| N-2072 | Ig | A10 | V8 |
| N-2073 | Ig | A10 | V9 |
| N-2074 | Ig | A10 | V10 |
| N-2075 | Ig | A10 | V11 |
| N-2076 | Ig | A10 | V12 |
| N-2077 | Ig | A10 | V13 |
| N-2078 | Ig | A10 | V14 |
| N-2079 | Ig | A10 | V15 |
| N-2080 | Ig | A10 | V16 |
| N-2081 | Ig | A11 | V1 |
| N-2082 | Ig | A11 | V2 |
| N-2083 | Ig | A11 | V3 |
| N-2084 | Ig | A11 | V4 |
| N-2085 | Ig | A11 | V5 |
| N-2086 | Ig | A11 | V6 |
| N-2087 | Ig | A11 | V7 |
| N-2088 | Ig | A11 | V8 |
| N-2089 | Ig | A11 | V9 |
| N-2090 | Ig | A11 | V10 |
| N-2091 | Ig | A11 | V11 |
| N-2092 | Ig | A11 | V12 |
| N-2093 | Ig | A11 | V13 |
| N-2094 | Ig | A11 | V14 |
| N-2095 | Ig | A11 | V15 |
| N-2096 | Ig | A11 | V16 |
| N-2097 | Ig | A12 | V1 |
| N-2098 | Ig | A12 | V2 |
| N-2099 | Ig | A12 | V3 |
| N-2100 | Ig | A12 | V4 |
| N-2101 | Ig | A12 | V5 |

(continued)

| No. | (I) | (II) | (IIb) or (III) |
|---|---|---|---|
| N-2102 | Ig | A12 | V6 |
| N-2103 | Ig | A12 | V7 |
| N-2104 | Ig | A12 | V8 |
| N-2105 | Ig | A12 | V9 |
| N-2106 | Ig | A12 | V10 |
| N-2107 | Ig | A12 | V11 |
| N-2108 | Ig | A12 | V12 |
| N-2109 | Ig | A12 | V13 |
| N-2110 | Ig | A12 | V14 |
| N-2111 | Ig | A12 | V15 |
| N-2112 | Ig | A12 | V16 |
| N-2113 | Ig | A13 | V1 |
| N-2114 | Ig | A13 | V2 |
| N-2115 | Ig | A13 | V3 |
| N-2116 | Ig | A13 | V4 |
| N-2117 | Ig | A13 | V5 |
| N-2118 | Ig | A13 | V6 |
| N-2119 | Ig | A13 | V7 |
| N-2120 | Ig | A13 | V8 |
| N-2121 | Ig | A13 | V9 |
| N-2122 | Ig | A13 | V10 |
| N-2123 | Ig | A13 | V11 |
| N-2124 | Ig | A13 | V12 |
| N-2125 | Ig | A13 | V13 |
| N-2126 | Ig | A13 | V14 |
| N-2127 | Ig | A13 | V15 |
| N-2128 | Ig | A13 | V16 |
| N-2129 | Ig | A14 | V1 |
| N-2130 | Ig | A14 | V2 |
| N-2131 | Ig | A14 | V3 |
| N-2132 | Ig | A14 | V4 |
| N-2133 | Ig | A14 | V5 |
| N-2134 | Ig | A14 | V6 |
| N-2135 | Ig | A14 | V7 |
| N-2136 | Ig | A14 | V8 |
| N-2137 | Ig | A14 | V9 |
| N-2138 | Ig | A14 | V10 |
| N-2139 | Ig | A14 | V11 |

(continued)

| No. | (I) | (II) | (IIb) or (III) |
|---|---|---|---|
| N-2140 | Ig | A14 | V12 |
| N-2141 | Ig | A14 | V13 |
| N-2142 | Ig | A14 | V14 |
| N-2143 | Ig | A14 | V15 |
| N-2144 | Ig | A14 | V16 |
| N-2145 | Ig | A15 | V1 |
| N-2146 | Ig | A15 | V2 |
| N-2147 | Ig | A15 | V3 |
| N-2148 | Ig | A15 | V4 |
| N-2149 | Ig | A15 | V5 |
| N-2150 | Ig | A15 | V6 |
| N-2151 | Ig | A15 | V7 |
| N-2152 | Ig | A15 | V8 |
| N-2153 | Ig | A15 | V9 |
| N-2154 | Ig | A15 | V10 |
| N-2155 | Ig | A15 | V11 |
| N-2156 | Ig | A15 | V12 |
| N-2157 | Ig | A15 | V13 |
| N-2158 | Ig | A15 | V14 |
| N-2159 | Ig | A15 | V15 |
| N-2160 | Ig | A15 | V16 |
| N-2161 | Ig | A19 | V1 |
| N-2162 | Ig | A19 | V2 |
| N-2163 | Ig | A19 | V3 |
| N-2164 | Ig | A19 | V4 |
| N-2165 | Ig | A19 | V5 |
| N-2166 | Ig | A19 | V6 |
| N-2167 | Ig | A19 | V7 |
| N-2168 | Ig | A19 | V8 |
| N-2169 | Ig | A19 | V9 |
| N-2170 | Ig | A19 | V10 |
| N-2171 | Ig | A19 | V11 |
| N-2172 | Ig | A19 | V12 |
| N-2173 | Ig | A19 | V13 |
| N-2174 | Ig | A19 | V14 |
| N-2175 | Ig | A19 | V15 |
| N-2176 | Ig | A19 | V16 |
| N-2177 | Ia | S1 | Fip |

(continued)

| No. | (I) | (II) | (IIb) or (III) |
|---|---|---|---|
| N-2178 | Ia | S2 | Fip |
| N-2179 | Ia | S3 | Fip |
| N-2180 | Ia | S4 | Fip |
| N-2181 | Ia | S5 | Fip |
| N-2182 | Ia | S6 | Fip |
| N-2183 | Ia | S7 | Fip |
| N-2184 | Ia | S8 | Fip |
| N-2185 | Ia | S9 | Fip |
| N-2186 | Ia | S1 | Ch |
| N-2187 | Ia | S2 | Ch |
| N-2188 | Ia | S3 | Ch |
| N-2189 | Ia | S4 | Ch |
| N-2190 | Ia | S5 | Ch |
| N-2191 | Ia | S6 | Ch |
| N-2192 | Ia | S7 | Ch |
| N-2193 | Ia | S8 | Ch |
| N-2194 | Ia | S9 | Ch |
| N-2195 | Id | S1 | Fip |
| N-2196 | Id | S2 | Fip |
| N-2197 | Id | S3 | Fip |
| N-2198 | Id | S4 | Fip |
| N-2199 | Id | S5 | Fip |
| N-2200 | Id | S6 | Fip |
| N-2201 | Id | S7 | Fip |
| N-2202 | Id | S8 | Fip |
| N-2203 | Id | S9 | Fip |
| N-2204 | Id | S1 | Ch |
| N-2205 | Id | S2 | Ch |
| N-2206 | Id | S3 | Ch |
| N-2207 | Id | S4 | Ch |
| N-2208 | Id | S5 | Ch |
| N-2209 | Id | S6 | Ch |
| N-2210 | Id | S7 | Ch |
| N-2211 | Id | S8 | Ch |
| N-2212 | Id | S9 | Ch |
| N-2213 | Ie | S1 | Fip |
| N-2214 | Ie | S2 | Fip |
| N-2215 | Ie | S3 | Fip |

(continued)

| No. | (I) | (II) | (IIb) or (III) |
|---|---|---|---|
| N-2216 | Ie | S4 | Fip |
| N-2217 | Ie | S5 | Fip |
| N-2218 | Ie | S6 | Fip |
| N-2219 | Ie | S7 | Fip |
| N-2220 | Ie | S8 | Fip |
| N-2221 | Ie | S9 | Fip |
| N-2222 | Ie | S1 | Ch |
| N-2223 | Ie | S2 | Ch |
| N-2224 | Ie | S3 | Ch |
| N-2225 | Ie | S4 | Ch |
| N-2226 | Ie | S5 | Ch |
| N-2227 | Ie | S6 | Ch |
| N-2228 | Ie | S7 | Ch |
| N-2229 | Ie | S8 | Ch |
| N-2230 | Ie | S9 | Ch |
| N-2231 | Ig | S1 | Fip |
| N-2232 | Ig | S2 | Fip |
| N-2233 | Ig | S3 | Fip |
| N-2234 | Ig | S4 | Fip |
| N-2235 | Ig | S5 | Fip |
| N-2236 | Ig | S6 | Fip |
| N-2237 | Ig | S7 | Fip |
| N-2238 | Ig | S8 | Fip |
| N-2239 | Ig | S9 | Fip |
| N-2240 | Ig | S1 | Ch |
| N-2241 | Ig | S2 | Ch |
| N-2242 | Ig | S3 | Ch |
| N-2243 | Ig | S4 | Ch |
| N-2244 | Ig | S5 | Ch |
| N-2245 | Ig | S6 | Ch |
| N-2246 | Ig | S7 | Ch |
| N-2247 | Ig | S8 | Ch |
| N-2248 | Ig | S9 | Ch |
| N-2249 | Ia | A1 | Fip |
| N-2250 | Ia | A2 | Fip |
| N-2251 | Ia | A3 | Fip |
| N-2252 | Ia | A4 | Fip |
| N-2253 | Ia | A5 | Fip |

(continued)

| No. | (I) | (II) | (IIb) or (III) |
|---|---|---|---|
| N-2254 | Ia | A6 | Fip |
| N-2255 | Ia | A7 | Fip |
| N-2256 | Ia | A8 | Fip |
| N-2257 | Ia | A9 | Fip |
| N-2258 | Ia | A10 | Fip |
| N-2259 | Ia | A11 | Fip |
| N-2260 | Ia | A12 | Fip |
| N-2261 | Ia | A13 | Fip |
| N-2262 | Ia | A14 | Fip |
| N-2263 | Ia | A15 | Fip |
| N-2264 | Ia | A19 | Fip |
| N-2265 | Ia | A1 | Ch |
| N-2266 | Ia | A2 | Ch |
| N-2267 | Ia | A3 | Ch |
| N-2268 | Ia | A4 | Ch |
| N-2269 | Ia | A5 | Ch |
| N-2270 | Ia | A6 | Ch |
| N-2271 | Ia | A7 | Ch |
| N-2272 | Ia | A8 | Ch |
| N-2273 | Ia | A9 | Ch |
| N-2274 | Ia | A10 | Ch |
| N-2275 | Ia | A11 | Ch |
| N-2276 | Ia | A12 | Ch |
| N-2277 | Ia | A13 | Ch |
| N-2278 | Ia | A14 | Ch |
| N-2279 | Ia | A15 | Ch |
| N-2280 | Ia | A19 | Ch |
| N-2281 | Id | A1 | Fip |
| N-2282 | Id | A2 | Fip |
| N-2283 | Id | A3 | Fip |
| N-2284 | Id | A4 | Fip |
| N-2285 | Id | A5 | Fip |
| N-2286 | Id | A6 | Fip |
| N-2287 | Id | A7 | Fip |
| N-2288 | Id | A8 | Fip |
| N-2289 | Id | A9 | Fip |
| N-2290 | Id | A10 | Fip |
| N-2291 | Id | A11 | Fip |

(continued)

| No. | (I) | (II) | (IIb) or (III) |
|---|---|---|---|
| N-2292 | Id | A12 | Fip |
| N-2293 | Id | A13 | Fip |
| N-2294 | Id | A14 | Fip |
| N-2295 | Id | A15 | Fip |
| N-2296 | Id | A19 | Fip |
| N-2297 | Id | A1 | Ch |
| N-2298 | Id | A2 | Ch |
| N-2299 | Id | A3 | Ch |
| N-2300 | Id | A4 | Ch |
| N-2301 | Id | A5 | Ch |
| N-2302 | Id | A6 | Ch |
| N-2303 | Id | A7 | Ch |
| N-2304 | Id | A8 | Ch |
| N-2305 | Id | A9 | Ch |
| N-2306 | Id | A10 | Ch |
| N-2307 | Id | A11 | Ch |
| N-2308 | Id | A12 | Ch |
| N-2309 | Id | A13 | Ch |
| N-2310 | Id | A14 | Ch |
| N-2311 | Id | A15 | Ch |
| N-2312 | Id | A19 | Ch |
| N-2313 | Ie | A1 | Fip |
| N-2314 | Ie | A2 | Fip |
| N-2315 | Ie | A3 | Fip |
| N-2316 | Ie | A4 | Fip |
| N-2317 | Ie | A5 | Fip |
| N-2318 | Ie | A6 | Fip |
| N-2319 | Ie | A7 | Fip |
| N-2320 | Ie | A8 | Fip |
| N-2321 | Ie | A9 | Fip |
| N-2322 | Ie | A10 | Fip |
| N-2323 | Ie | A11 | Fip |
| N-2324 | Ie | A12 | Fip |
| N-2325 | Ie | A13 | Fip |
| N-2326 | Ie | A14 | Fip |
| N-2327 | Ie | A15 | Fip |
| N-2328 | Ie | A19 | Fip |
| N-2329 | Ie | A1 | Ch |

(continued)

| No. | (I) | (II) | (IIb) or (III) |
|---|---|---|---|
| N-2330 | Ie | A2 | Ch |
| N-2331 | Ie | A3 | Ch |
| N-2332 | Ie | A4 | Ch |
| N-2333 | Ie | A5 | Ch |
| N-2334 | Ie | A6 | Ch |
| N-2335 | Ie | A7 | Ch |
| N-2336 | Ie | A8 | Ch |
| N-2337 | Ie | A9 | Ch |
| N-2338 | Ie | A10 | Ch |
| N-2339 | Ie | A11 | Ch |
| N-2340 | Ie | A12 | Ch |
| N-2341 | Ie | A13 | Ch |
| N-2342 | Ie | A14 | Ch |
| N-2343 | Ie | A15 | Ch |
| N-2344 | Ie | A19 | Ch |
| N-2345 | Ig | A1 | Fip |
| N-2346 | Ig | A2 | Fip |
| N-2347 | Ig | A3 | Fip |
| N-2348 | Ig | A4 | Fip |
| N-2349 | Ig | A5 | Fip |
| N-2350 | Ig | A6 | Fip |
| N-2351 | Ig | A7 | Fip |
| N-2352 | Ig | A8 | Fip |
| N-2353 | Ig | A9 | Fip |
| N-2354 | Ig | A10 | Fip |
| N-2355 | Ig | A11 | Fip |
| N-2356 | Ig | A12 | Fip |
| N-2357 | Ig | A13 | Fip |
| N-2358 | Ig | A14 | Fip |
| N-2359 | Ig | A15 | Fip |
| N-2360 | Ig | A19 | Fip |
| N-2361 | Ig | A1 | Ch |
| N-2362 | Ig | A2 | Ch |
| N-2363 | Ig | A3 | Ch |
| N-2364 | Ig | A4 | Ch |
| N-2365 | Ig | A5 | Ch |
| N-2366 | Ig | A6 | Ch |
| N-2367 | Ig | A7 | Ch |

(continued)

| No. | (I) | (II) | (IIb) or (III) |
|---|---|---|---|
| N-2368 | Ig | A8 | Ch |
| N-2369 | Ig | A9 | Ch |
| N-2370 | Ig | A10 | Ch |
| N-2371 | Ig | A11 | Ch |
| N-2372 | Ig | A12 | Ch |
| N-2373 | Ig | A13 | Ch |
| N-2374 | Ig | A14 | Ch |
| N-2375 | Ig | A15 | Ch |
| N-2376 | Ig | A19 | Ch |

Within the ternary mixtures of table 2, the following mixtures are especially preferred according to the present invention:
N-1, N-2, N-3, N-4, N-5, N-6, N-7, N-8, N-9, N-10, N-11, N-12, N-13, N-14, N-15, N-16, N-17, N-18, N-19, N-20, N-21, N-22, N-23, N-24, N-25, N-26, N-27, N-28, N-29, N-30, N-31, N-32, N-33, N-34, N-35, N-36, N-37, N-38, N-39, N-40, N-41, N-42, N-43, N-44, N-45, N-46, N-47, N-48, N-49, N-50, N-51, N-52, N-53, N-54, N-55, N-56, N-57, N-58, N-59, N-60, N-61, N-62, N-63, N-64, N-65, N-66, N-67, N-68, N-69, N-70, N-71, N-72, N-73, N-74, N-75, N-76, N-77, N-78, N-79, N-80, N-81, N-82, N-83, N-84, N-85, N-86, N-87, N-88, N-89, N-90, N-91, N-92, N-93, N-94, N-95, N-96, N-97, N-98, N-99, N-100, N-101, N-102, N-103, N-104, N-105, N-106, N-107, N-108, N-109, N-110, N-111, N-112, N-113, N-114, N-115, N-116, N-117, N-118, N-119, N-120, N-121, N-122, N-123, N-124, N-125, N-126, N-127, N-128, N-129, N-130, N-131, N-132, N-133, N-134, N-135, N-136, N-137, N-138, N-139, N-140, N-141, N-142, N-143, N-144, N-577, N-578, N-579, N-580, N-581, N-582, N-583, N-584, N-585, N-586, N-587, N-588, N-589, N-590, N-591, N-592, N-593, N-594, N-595, N-596, N-597, N-598, N-599, N-600, N-601, N-602, N-603, N-604, N-605, N-606, N-607, N-608, N-609, N-610, N-611, N-612, N-613, N-614, N-615, N-616, N-617, N-618, N-619, N-620, N-621, N-622, N-623, N-624, N-625, N-626, N-627, N-628, N-629, N-630, N-631, N-632, N-633, N-634, N-635, N-636, N-637, N-638, N-639, N-640, N-641, N-642, N-643, N-644, N-645, N-646, N-647, N-648, N-649, N-650, N-651, N-652, N-653, N-654, N-655, N-656, N-657, N-658, N-659, N-660, N-661, N-662, N-663, N-664, N-665, N-666, N-667, N-668, N-669, N-670, N-671, N-672, N-673, N-674, N-675, N-676, N-677, N-678, N-679, N-680, N-681, N-682, N-683, N-684, N-685, N-686, N-687, N-688, N-689, N-690, N-691, N-692, N-693, N-694, N-695, N-696, N-697, N-698, N-699, N-700, N-701, N-702, N-703, N-704, N-705, N-706, N-707, N-708, N-709, N-710, N-711, N-712, N-713, N-714, N-715, N-716, N-717, N-718, N-719, N-720, N-1153, N-1154, N-1155, N-1156, N-1157, N-1158, N-1159, N-1160, N-1161, N-1162, N-1163, N-1164, N-1165, N-1166, N-1167, N-1168, N-1169, N-1170, N-1171, N-1172, N-1173, N-1174, N-1175, N-1176, N-1177, N-1178, N-1179, N-1180, N-1181, N-1182, N-1183, N-1184, N-1185, N-1186, N-1187, N-1188, N-1189, N-1190, N-1191, N-1192, N-1193, N-1194, N-1195, N-1196, N-1197, N-1198, N-1199, N-1200, N-1201, N-1202, N-1203, N-1204, N-1205, N-1206, N-1207, N-1208, N-1209, N-1210, N-1211, N-1212, N-1213, N-1214, N-1215, N-1216, N-1217, N-1218, N-1219, N-1220, N-1221, N-1222, N-1223, N-1224, N-1225, N-1226, N-1227, N-1228, N-1229, N-1230, N-1231, N-1232, N-1233, N-1234, N-1235, N-1236, N-1237, N-1238, N-1239, N-1240, N-1241, N-1242, N-1243, N-1244, N-1245, N-1246, N-1247, N-1248, N-1249, N-1250, N-1251, N-1252, N-1253, N-1254, N-1255, N-1256, N-1257, N-1258, N-1259, N-1260, N-1261, N-1262, N-1263, N-1264, N-1265, N-1266, N-1267, N-1268, N-1269, N-1270, N-1271, N-1272, N-1273, N-1274, N-1275, N-1276, N-1277, N-1278, N-1279, N-1280, N-1281, N-1282, N-1283, N-1284, N-1285, N-1286, N-1287, N-1288, N-1289, N-1290, N-1291, N-1292, N-1293, N-1294, N-1295, N-1296, N-1297, N-1298, N-1299, N-1300, N-1301, N-1302, N-1303, N-1304, N-1305, N-1306, N-1307, N-1308, N-1309, N-1310 ,N-1311, N-1312, N-1313, N-1314, N-1315, N-1316, N-1317, N-1318, N-1319, N-1320, N-1321, N-1322, N-1323, N-1324, N-1325, N-1326, N-1327, N-1328, N-1329, N-1330, N-1331, N-1332, N-1333, N-1334, N-1335, N-1336, N-1337, N-1338, N-1339, N-1340, N-1341, N-1342, N-1343, N-1344, N-1345, N-1346, N-1347, N-1348, N-1349, N-1350, N-1351, N-1352, N-1353, N-1354, N-1355, N-1356, N-1357, N-1358, N-1359, N-1360, N-1361, N-1362, N-1363, N-1364, N-1365, N-1366, N-1367, N-1368, N-1369, N-1370, N-1371, N-1372, N-1373, N-1374, N-1375, N-1376, N-1377, N-1378, N-1379, N-1380, N-1381, N-1382, N-1383, N-1384, N-1385, N-1386, N-1387, N-1388, N-1389, N-1390, N-1391, N-1392, N-1393, N-1394, N-1395, N-1396, N-1397, N-1398, N-1399, N-1400, N-1401, N-1402, N-1403, N-1404, N-1405, N-1406, N-1407, N-1408, N-2182 and N-2191.

Within the ternary mixtures of table 2, the following mixtures are even more preferred according to the present

invention:
N-81, N-82, N-83, N-84, N-85, N-86, N-87, N-88, N-89, N-90, N-91, N-92, N-93, N-94, N-95, N-96, N-113, N-114, N-115, N-116, N-117, N-118, N-119, N-120, N-121, N-122, N-123, N-124, N-125, N-126, N-127, N-128, N-657, N-658, N-659, N-660, N-661, N-662, N-663, N-664, N-665, N-666, N-667, N-668, N-669, N-670, N-671, N-672, N-689, N-690, N-691, N-692, N-693, N-694, N-695, N-696, N-697, N-698, N-699, N-700, N-701, N-702, N-703, N-704, N-2182, N-2184, N-2192 and N-2193.

Within the ternary mixtures of table 2, the following mixtures are preferred according to the present invention: N-81, N-82, N-83, N-84, N-85, N-86, N-87, N-88, N-89, N-90, N-91, N-92, N-93, N-94, N-95, N-96, N-113, N-114, N-115, N-116, N-117, N-118, N-119, N-120, N-121, N-122, N-123, N-124, N-125, N-126, N-127 and N-128.

Within the ternary mixtures of table 2, the following mixtures are preferred according to the present invention: N-657, N-658, N-659, N-660, N-661, N-662, N-663, N-664, N-665, N-666, N-667, N-668, N-669, N-670, N-671, N-672, N-689, N-690, N-691, N-692, N-693, N-694, N-695, N-696, N-697, N-698, N-699, N-700, N-701, N-702, N-703 and N-704.

Within the ternary mixtures of table 2, the following mixtures are preferred according to the present invention: N-2182, N-2184, N-2192 and N-2193.

Within the ternary mixtures of table 2, the following mixtures are preferred according to the present invention: N-81, N-82, N-83, N-84, N-85, N-86, N-87, N-88, N-89, N-90, N-91, N-92, N-93, N-94, N-95, N-96, N-657, N-658, N-659, N-660, N-661, N-662, N-663, N-664, N-665, N-666, N-667, N-668, N-669, N-670, N-671 and N-672.

Within the ternary mixtures of table 2, the following mixtures are preferred according to the present invention: N-113, N-114, N-115, N-116, N-117, N-118, N-119, N-120, N-121, N-122, N-123, N-124, N-125, N-126, N-127, N-128, N-689, N-690, N-691, N-692, N-693, N-694, N-695, N-696, N-697, N-698, N-699, N-700, N-701, N-702, N-703 and N-704.

Within the ternary mixtures of table 2, the following mixtures are preferred according to the present invention: N-1393, N-1394, N-1395, N-1396, N-1397, N-1398, N-1399, N-1400, N-1401, N-1402, N-1403, N-1404, N-1405, N-1406, N-1407, N-1408, N-2264 and N-2280.

In all mixtures used according to the method of the present invention, compound (I) and at least one of the compound selected from the compounds (II), (IIb) and (III), are employed in amounts to afford a synergistic effect. The weight ratio of compound (I) to a compound selected from the group consisting of compounds (II), (IIb) and (III), is preferably from 200:1 to 1:200, more preferably from 100:1 to 1:100, more preferably from 50:1 to 1:50 and in particular from 20:1 to 1:20. The utmost preferred ratio is 1:10 to 10:1. The weight ratio refers to the total weight of compound (I) and a compound selected from the group consisting of compounds (II), (IIb) and (III) in the mixture.

All mixtures set forth above are also an embodiment of the present invention.

All embodiments of the mixtures set forth above are herein below referred to as "mixtures according to the present invention".

As mentioned above, the compounds (I) or the mixtures according to the present invention are used for improving the health of plants when applied to plant propagules.

Thus, the invention relates to a method for improving the health of plants, which comprises treating the plant propagules from which the plant grows with a compound (I) or with the mixtures according to the present invention.

If a mixture according to the present invention is used in this inventive method, the plant propagules are preferably treated simultaneously (together or separately) or subsequently with the amide compound of the formula I (compound I) and a compound selected from the group consisting of compounds (II), (IIb) and (III).

Of course, the subsequent application is carried out with a time interval which allows a combined action of the applied compounds. Preferably, the time interval for a subsequent application of compound (I) and a compound selected from the group consisting of compounds (II), (IIb) and (III), ranges from a few seconds up to 3 months, preferably, from a few seconds up to 1 month, more preferably from a few seconds up to 2 weeks, even more preferably from a few seconds up to 3 days and in particular from 1 second up to 24 hours.

The term "BBCH principal growth stage" refers to the extended BBCH-scale which is a system for a uniform coding of phenologically similar growth stages of all mono- and di-cotyldedonous plant species in which the entire developmental cycle of the plants is subdivided into clearly recoginizable and distinguishable longer-lasting developmental phases. The abbreviation BBCH dervies from Biologische Bundesanstalt, Bundessortenamt and Chemical industry.

The term "propagules" or "plant propagules" is to be understood to denote all the generative parts of the plant such as seeds and vegetative plant material such as cuttings and tubers (e.g. potatoes), which can be used for the multiplication of the plant. This includes seeds, roots, fruits, tubers, bulbs, rhizomes, shoots, sprouts and other parts of plants. Seedlings and young plants, which are to be transplanted after germination or after emergence from soil, may also be included. These plant propagation materials may be treated prophylactically with a plant protection compound either at or before planting or transplanting. In a preferred embodiment, the term "propagules" or "plant propagules" denotes for seed.

As a matter of course, compound (I) and in case mixtures are employed, a compound selected from the group consisting of compounds (II), (IIb) and (III) are used in an effective and non-phytotoxic amount. This means that they

are used in a quantity which allows to obtain the desired effect but which does not give rise to any phytotoxic symptom on the treated plant or on the plant raised from the treated propagule or treated soil.

The plants to be treated are generally plants of economic importance and/or men-grown plants. Thus, they are preferably selected from agricultural, silvicultural and ornamental plants, more preferably from agricultural plants.

Generally the term "plants" also includes plants which have been modified by breeding, mutagenesis or genetic engineering. Genetically modified plants are plants, which genetic material has been modified by the use of recombinant DNA techniques. The use of recombinant DNA techniques makes modifications possible that cannot readily be obtained by cross breeding under natural circumstances, mutations or natural recombination.

Thus, also the preferred soybeans mentioned herein can be a non-transgenic plant, e.g. as obtained by traditional breeding, or can have at least one transgenic event. In one embodiment it is preferred that the soybean plant be a transgenic plant having preferably a transgenic event that confers resistance to a pesticide, preferably against the herbicide glyphosate. Accordingly, it is preferred that the transgenic plant be one having a transgenic event that provides glyphosate resistance. Some examples of such preferred transgenic plants having transgenic events that confer glyphosate resistance are described in US 5,914,451, US 5,866,775, US 5,804,425, US 5,776,760, US 5,633,435, US 5,627,061, US 5,463,175, US 5,312,910, US 5,310,667, US 5,188,642, US 5,145,783, US 4,971,908 and US 4,940,835. More preferably, the transgenic soybean plant has the characteristics of "Roundup-Ready" (RR) transgenic soybeans (available from Monsanto Company, St. Louis, Mo.).

"Silvicultural plants" in the terms of the present invention are trees, more specifically trees used in reforestation or industrial plantations. Industrial plantations generally serve for the commercial production of forest products, such as wood, pulp, paper, rubber, Christmas trees, or young trees for gardening purposes. Examples for silvicultural plants are conifers, like pines, in particular *Pinus* spec., fir and spruce, eucalyptus, tropical trees like teak, rubber tree, oil palm, willow (*Salix*), in particular *Salix* spec., poplar (cottonwood), in particular *Populus* spec., beech, in particular *Fagus* spec., birch and oak.

In another embodiment of the invention, the plant health of which is to be improved by the treatment with the compound (I) or a mixture of the present invention is an ornamental plant. "Ornamental plants" are plants which are commonly used in gardening, e.g. in parks, gardens and on balconies. Examples are turf, geranium, pelargonia, petunia, begonia, and fuchsia, to name just a few among the vast number of ornamentals.

"Agricultural plants" are plants of which a part (e.g. seeds) or all is harvested or cultivated on a commercial scale or which serve as an important source of feed, food, fibers (e.g. cotton, linen), combustibles (e.g. wood, bioethanol, biodiesel, biomass) or other chemical compounds. Agricultural plants may also include horticultural plants, i.e. plants grown in gardens (and not on fields), such as certain fruits and vegetables. Preferred agricultural plants are for example cereals, e.g. wheat, rye, barley, triticale, oats, sorghum or rice, beet, e.g. sugar beet or fodder beet; fruits, such as pomes, stone fruits or soft fruits, e.g. apples, pears, plums, peaches, almonds, cherries, strawberries, raspberries, blackberries or gooseberries; leguminous plants, such as lentils, peas, alfalfa or soybeans; oil plants, such as rape, oil-seed rape, canola, linseed, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, canola, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e.g. conifers; and on the plant propagation material, such as seeds, and the crop material of these plants.

More preferred agricultural plants are field crops, such as potatoes, sugar beets, cereals such as wheat, rye, barley, oats, sorghum, rice, corn, cotton, rape, oilseed rape and canola, legumes such as soybeans, peas and field beans, sunflowers, sugar cane; ornamentals; or vegetables, such as cucumbers, tomatoes, or onions, leeks, lettuce, squashes, most preferred agricultural plants are potatoes, sugar beets, cereals such as wheat, rye, barley, oats, sorghum, rice, corn, cotton, soybeans, oilseed rape, canola, sunflower and utmost preferred plant is soybean.

In a most preferred embodiment, the aforementioned method for improving the health of a plant comprises treating the plant propagules, preferably the seeds of an agricultural plant selected from the group consisting of transgenic or non-transgenic potatoes, sugar beets, cereals such as wheat, rye, barley, oats, sorghum, rice, corn, cotton, soybeans, oilseed rape, canola, sunflower with an compound (I) or a mixture according to the present invention, wherein soybean is utmost preferred.

"Plant health" is intended to mean a condition of the plant which is determined by several aspects alone or in combination with each other.

One indicator (indicator 1) for the condition of the plant is the yield, which is crop and/or fruit yield. "Crop" and "fruit" are to be understood as any plant product which is further utilized after harvesting, e.g. fruits in the proper sense, vegetables, nuts, grains, seeds, wood (e.g. in the case of silviculture plants), flowers (e.g. in the case of gardening plants, ornamentals) etc., that is anything of economic value that is produced by the plant.

Another indicator (indicator 2) for the condition of the plant is the plant vigour. The plant vigour becomes manifest in several aspects, too, some of which are visual appearance, e.g. leaf color, fruit color and aspect, amount of dead basal leaves and/or extent of leaf blades, plant weight, plant height, extent of plant verse (lodging), number, strongness and productivity of tillers or branches, panicles' length, seed set, extent of root system, strongness of roots, extent of nodulation, in particular of rhizobial nodulation, point of time of germination, emergence, crop establishment, flowering, grain maturity and/or senescence, protein content, sugar content and the like.

Another indicator (indicator 3) for the condition of the plant is the plant's tolerance or resistance to abiotic stress factors. Abiotic stress, especially over longer terms, can have harmful effects on plants. Abiotic stress is caused for example by extremes in temperature such as heat or cold or strong variations in temperature or temperatures unusual for the specific season, drought, extreme wetness like flooding or waterlogging, anaerobic conditions, high salinity, radiation (e.g. increased UV radiation due to the decreasing ozone protective layer), increased ozone levels and organic pollution (e.g. by phytotoxic amounts of pesticides) or inorganic pollution (e.g. by heavy metal contaminants). As a result, the quantity and the quality of the stressed plants, their crops and fruits decrease. As far as quality is concerned, reproductive development is usually severely affected with consequences on the crops which are important for fruits or seeds. Synthesis, accumulation and storage of proteins are mostly affected by temperature; growth is slowed by almost all stresses; polysaccharide synthesis, both structural and storage, is reduced or modified: these effects bring to a decrease in biomass and to changes in the nutritional value of the product.

In one preferred embodiment, the present invention provides the use of compound (I) or a mixture according to the present invention for increasing the yield of a plant, preferably of an agricultural, silvicultural and/or ornamental plant, more preferably of an agricultural plant.

The present invention further provides a method for increasing the yield of a plant, preferably of an agricultural, silvicultural and/or ornamental plant, more preferably of an agricultural plant.

In a more preferred embodiment, the aforementioned method for increasing the yield of the plant comprises treating the plant propagules, more preferably the seed of field crops, such as potatoes, sugar beets, cereals such as wheat, rye, barley, oats, sorghum, rice, corn, cotton, rape, oilseed rape and canola, legumes such as soybeans, peas and field beans, sunflowers, sugar cane; ornamentals; or vegetables, such as cucumbers, tomatoes, or onions, leeks, lettuce, squashes, more preferably agricultural plants are potatoes, sugar beets, cereals such as wheat, rye, barley, oats, sorghum, rice, corn, cotton, soybeans, oilseed rape, canola, sunflower with a compound (I) or a mixture according to the present invention.

In a particular preferred embodiment, the aforementioned method for increasing the yield of the plant comprises treating the plant propagules, more preferably the seed of transgenic or non-transgenic soybean with a compound (I) or a mixture according to the present invention.

According to the present invention, "increased yield" of a plant, in particular of an agricultural, silvicultural and/or ornamental plant, more preferably of an agricultural plant means that the yield of a product of the respective plant is increased by a measurable amount over the yield of the same product of the plant produced under the same conditions, but without the application of the composition of the invention.

According to the present invention, it is preferred that the yield be increased by at least 0,5 %, more preferred at least 1 %, even more preferred at least 2 %, still more preferred at least 4 %.

The improvement of the yield increase according to the present invention particularly means that the improvement of any one or several or all of the above mentioned plant characteristics are improved independently of the pesticidal action of the compound (I) or the mixture according to the present invention.

In another preferred embodiment, the present invention provides the use of the compound (I) or a mixture of the present invention for increasing the yield and/or improving the vigor of a plant, e.g. of an agricultural, silvicultural and/or ornamental plant, more preferably an agricultural plant.

The present invention further provides a method for increasing the yield and/or improving the vigor of a plant, preferably of an agricultural, silvicultural and/or ornamental plant, more preferably of an agricultural plant.

In a more preferred embodiment, the aforementioned method for increasing or improving the vigour of the plant comprises treating the plant propagules, more preferably the seed of field crops, such as potatoes, sugar beets, cereals such as wheat, rye, barley, oats, sorghum, rice, corn, cotton, rape, oilseed rape and canola, legumes such as soybeans, peas and field beans, sunflowers, sugar cane; ornamentals; or vegetables, such as cucumbers, tomatoes, or onions, leeks, lettuce, squashes, more preferably agricultural plants are potatoes, sugar beets, cereals such as wheat, rye, barley, oats, sorghum, rice, corn, cotton, soybeans, oilseed rape, canola, sunflower with a compound (I) or a mixture according to the present invention.

In a particular preferred embodiment, the aforementioned method for increasing the vigour of the plant treating the plant propagules, more preferably the seed of transgenic or non-transgenic soybean with a compound of formula I (compound I) or a mixture according to the present invention.

According to the present invention, "improved plant vigour" means that certain crop characteristics are increased or improved by a measurable or noticeable amount over the same factor of the plant produced under the same conditions,

but without the application of the composition of the present invention.

Improved plant vigour can be characterized, among others, by at least one of the following improved properties of the plant:

- improved vitality of the plant,
- improved quality of the plant and/or of the plant products, e.g. enhanced protein content,
- improved visual appearance,
- delay of senescence,
- enhanced root growth and/or more developed root system,
- enhanced nodulation, in particular rhizobial nodulation,
- longer panicles,
- bigger leaf blade,
- less dead basal leaves,
- increased or improved plant stand density,
- less plant verse (lodging),
- increased plant weight,
- increased plant height,
- tillering increase,
- stronger and/or more productive tillers,
- less non-productive tillers,
- enhanced photosynthetic activity and/or enhanced pigment content and thus greener leaf color,
- earlier and improved germination
- improved emergence and establishment,
- increased shoot growth,
- earlier flowering,
- earlier fruiting,
- earlier grain maturity,
- less fertilizers needed,
- less seeds needed.

The improvement of the plant vigour according to the present invention particularly means that the improvement of any one or several or all of the above mentioned plant characteristics are improved independently of the pesticidal action of the compound (I) or a mixture according to the present invention.

In a more preferred embodiment of the invention, the compound of formula I or a mixture of the present invention is used for enhancing improved vitality of the plant.

In another preferred embodiment of the invention, the compound of formula I or a mixture of the present invention is used for improved quality of the plant and/or of the plant products, e.g. enhanced protein content.

In another more preferred embodiment of the invention, the compound of formula I or a mixture of the present invention is used for enhancing root growth and/or inducing the formation of a more developed root system of a plant.

In another preferred embodiment of the invention, the compound of formula I or a mixture of the present invention is used for enhancing nodulation, in particular rhizobial nodulation.

In another preferred embodiment of the invention, the compound of formula I or a mixture of the present invention is used for bigger leaf blades.

In another preferred embodiment of the invention, the compound of formula I or a mixture of the present invention is used for less dead basal leaves.

In another preferred embodiment of the invention, the compound of formula I or a mixture of the present invention is used for increased or improved plant stand density.

In another preferred embodiment of the invention, the compound of formula I or a mixture of the present invention is used for increased plant weight.

In another preferred embodiment of the invention, the compound of formula I or a mixture of the present invention is used for increased plant height.

In another preferred embodiment of the invention, the compound of formula I or a mixture of the present invention is used for stronger and/or more productive tillers.

In another preferred embodiment of the invention, the compound of formula I or a mixture of the present invention is used for enhanced photosynthetic activity and/or enhanced pigment content and thus greener leaf color.

In another preferred embodiment of the invention, the compound of formula I or a mixture of the present invention is used for earlier and improved germination.

In another preferred embodiment of the invention, the compound of formula I or a mixture of the present invention

is used for improved emergence and plant establishment.

In another preferred embodiment of the invention, the compound of formula I or a mixture of the present invention is used for increased shoot growth.

In a most preferred embodiment of the invention, the compound of formula I or a mixture of the present invention is used for enhancing improved vitality of the plant.

In another most preferred embodiment of the invention, the compound of formula I or a mixture of the present invention is used for enhancing root growth and/or inducing the formation of a more developed root system of a plant.

In another most preferred embodiment of the invention, the compound of formula I or a mixture of the present invention is used for enhancing nodulation, in particular rhizobial nodulation.

In another most preferred embodiment of the invention, the compound of formula I or a mixture of the present invention is used for bigger leaf blades.

In another most preferred embodiment of the invention, the compound of formula I or a mixture of the present invention is used for less dead basal leaves.

In another most preferred embodiment of the invention, the compound of formula I or a mixture of the present invention is used for increased or improved plant stand density. In another most preferred embodiment of the invention, the compound of formula I or a mixture of the present invention is used for increased plant weight.

In another most preferred embodiment of the invention, the compound of formula I or a mixture of the present invention is used for increased plant height.

In another most preferred embodiment of the invention, the compound of formula I or a mixture of the present invention is used for earlier and improved germination

In another most preferred embodiment of the invention, the compound of formula I or a mixture of the present invention is used for increased shoot growth.

In yet another preferred embodiment, the present invention provides the use of the compound of formula I or a mixture of the present invention for enhancing the plant's tolerance or resistance to abiotic stress factors.

The present invention further provides a method for enhancing a plant's tolerance or resistance to abiotic stress factors, which comprises treating the plant propagules, preferably the seed of the plant with a compound (I) or a mixture according to the present invention.

In a more preferred embodiment, the afore-mentioned method for enhancing a plant's tolerance or resistance to abiotic stress factors comprises treating the plant propagules, more preferably the seed of field crops, such as potatoes, sugar beets, cereals such as wheat, rye, barley, oats, sorghum, rice, corn, cotton, rape, oilseed rape and canola, legumes such as soybeans, peas and field beans, sunflowers, sugar cane; ornamentals; or vegetables, such as cucumbers, tomatoes, or onions, leeks, lettuce, squashes, more preferably agricultural plants are potatoes, sugar beets, cereals such as wheat, rye, barley, oats, sorghum, rice, corn, cotton, soybeans, oilseed rape, canola, sunflower with a compound (I) or a mixture according to the present invention.

In a particular preferred embodiment, the afore-mentioned method for enhancing a plant's tolerance or resistance to abiotic stress factors treating the plant propagules, more preferably the seed of transgenic or non-transgenic soybean with a compound (I) or a mixture according to the present invention.

Abiotic stress factors have been defined above.

According to the present invention, "enhanced plant's tolerance or resistance to abiotic stress factors" means (1.) that certain negative factors caused by abiotic stress are diminished in a measurable or noticeable amount as compared to plants exposed to the same conditions, but without being treated with the and (2.) that the negative effects are not diminished by a direct action of the composition on the stress factors, e.g. by its fungicidal or insecticidal action which directly destroys the microorganisms or pests, but rather by a stimulation of the plants' own defensive reactions against said stress factors.

Negative factors caused by abiotic stress are also well-known and can often be observed as reduced plant vigor (see above), e.g. dotted leaves, "burned leaves", reduced growth, less flowers, less biomass, less crop yields, reduced nutritional value of the crops, later crop maturity, to give just a few examples.

In a preferred embodiment, the tolerance of and/or resistance against abiotic stress factors is enhanced. Thus, according to a further embodiment of the present invention, the inventive compositions are used for stimulating a plant's own defensive reactions against abiotic stress such as extremes in temperature, e.g. heat or cold or strong variations in temperature or temperatures unusual for the specific season, drought, extreme wetness, high salinity, radiation (e.g. increased UV radiation due to the decreasing ozone protective layer), increased ozone levels, organic pollution (e.g. by phythotoxic amounts of pesticides) and/or inorganic pollution (e.g. by heavy metal contaminants).

In a more preferred embodiment, the compound (I) or a mixture according to the present invention is used for stimulating a plant's own defensive reactions against abiotic stress, where the abiotic stress factors are preferably selected from extremes in temperature, drought and extreme wetness.

In an especially preferred embodiment of the invention, the tolerance against cold stress is enhanced.

During the present invention, it has been found that certain mixtures selected from the mixtures according to

the present invention as described above, have not yet been explicitly described in prior art - these mixtures however, have not only synergistic plant health effects as described herein above, but also provide synergistic fungicidal effects.

Thus, we also found a method for controlling pythopathogenic fungi, wherein the fungi, their habitat, breeding grounds, their locus or the plants to be protected against fungal attack, the soil or seed are treated with a pesticidally effective amount of these mixtures.

"Locus" means a plant, seed, soil, area, material or environment in which a pest is growing or may grow.

In general, "pesticidally effective amount" means the amount of the inventive mixtures or of compositions comprising the mixtures needed to achieve an observable effect on growth, including the effects of necrosis, death, retardation, prevention, and removal, destruction, or otherwise diminishing the occurrence and activity of the target organism. The pesticidally effective amount can vary for the various mixtures / compositions used in the invention. A pesticidally effective amount of the mixtures / compositions will also vary according to the prevailing conditions such as desired pesticidal effect and duration, weather, target species, locus, mode of application, and the like.

These mixtures comprise

(1) an amide of the formula I (compound I); and

(2) a further fungicide II (compound II) selected from the group consisting ipoconazole, ethaboxam, mefenoxam, metalaxyl, fludioxinil, difenocona-zole, myclobutanil, hymexazol, triadimenol, famoxadone, fenamidone and fosetly-aluminium.

This subset of mixtures is herein below defined as "novel mixtures according to the present invention". Naturally this subset is comprised by the mixtures according to the present invention. Thus, this term is mentioned only, if this subset needs to be addressed separately.

The weight ratio of the compound (I) to the compound (II) is preferably from 200:1 to 1:200, more preferably from 100:1 to 1:100, more preferably from 50:1 to 1:50 and in particular from 20:1 to 1:20. The utmost preferred ratio is 1:10 to 10:1. The weight ratio refers to the total weight of compounds (I) and compounds (II) in the mixture.

With respect to their intended use, the following secondary mixtures of compound (I) and compound (II) listed in the table 3 below are especially preferred.

Table 3

| No. | (I) | (II) |
|---|---|---|
| O-1 | Ia | ipoconazole |
| O-2 | Ia | ethaboxam |
| O-3 | Ia | mefenoxam |
| O-4 | Ia | epoxiconazole |
| O-5 | Ia | dimethomorph |
| O-6 | Ia | fludioxonil |
| O-7 | Ia | metalaxyl |
| O-8 | Ia | fludioxinil |
| O-9 | Ia | difenoconazole |
| O-10 | Ia | flutriafol |
| O-11 | Ia | myclobutanil |
| O-12 | Ia | hymexazol |
| O-13 | Ia | triadimenol |
| O-14 | Ib | ipoconazole |
| O-15 | Ib | ethaboxam |
| O-16 | Ib | mefenoxam |
| O-17 | Ib | epoxiconazole |
| O-18 | Ib | dimethomorph |

(continued)

| No. | (I) | (II) |
|---|---|---|
| O-19 | Ib | fludioxonil |
| O-20 | Ib | metalaxyl |
| O-21 | Ib | fludioxinil |
| O-22 | Ib | difenoconazole |
| O-23 | Ib | flutriafol |
| O-24 | Ib | myclobutanil |
| O-25 | Ib | hymexazol |
| O-26 | Ib | triadimenol |
| O-27 | Ic | ipoconazole |
| O-28 | Ic | ethaboxam |
| O-29 | Ic | mefenoxam |
| O-30 | Ic | epoxiconazole |
| O-31 | Ic | dimethomorph |
| O-32 | Ic | fludioxonil |
| O-33 | Ic | metalaxyl |
| O-34 | Ic | fludioxinil |
| O-35 | Ic | difenoconazole |
| O-36 | Ic | flutriafol |
| O-37 | Ic | myclobutanil |
| O-38 | Ic | hymexazol |
| O-39 | Ic | triadimenol |
| O-40 | Id | ipoconazole |
| O-41 | Id | ethaboxam |
| O-42 | Id | mefenoxam |
| O-43 | Id | epoxiconazole |
| O-44 | Id | dimethomorph |
| O-45 | Id | fludioxonil |
| O-46 | Id | metalaxyl |
| O-47 | Id | fludioxinil |
| O-48 | Id | difenoconazole |
| O-49 | Id | flutriafol |
| O-50 | Id | myclobutanil |
| O-51 | Id | hymexazol |
| O-52 | Id | triadimenol |
| O-53 | Ie | ipoconazole |
| O-54 | Ie | ethaboxam |
| O-55 | Ie | mefenoxam |
| O-56 | Ie | epoxiconazole |

(continued)

| No. | (I) | (II) |
|---|---|---|
| O-57 | Ie | dimethomorph |
| O-58 | Ie | fludioxonil |
| O-59 | Ie | metalaxyl |
| O-60 | Ie | fludioxinil |
| O-61 | Ie | difenoconazole |
| O-62 | Ie | flutriafol |
| O-63 | Ie | myclobutanil |
| O-64 | Ie | hymexazol |
| O-65 | Ie | triadimenol |
| O-66 | If | ipoconazole |
| O-67 | If | ethaboxam |
| O-68 | If | mefenoxam |
| O-69 | If | epoxiconazole |
| O-70 | If | dimethomorph |
| O-71 | If | fludioxonil |
| O-72 | If | metalaxyl |
| O-73 | If | fludioxinil |
| O-74 | If | difenoconazole |
| O-75 | If | flutriafol |
| O-76 | If | myclobutanil |
| O-77 | If | hymexazol |
| O-78 | If | triadimenol |
| O-79 | Ig | ipoconazole |
| O-80 | Ig | ethaboxam |
| O-81 | Ig | mefenoxam |
| O-82 | Ig | epoxiconazole |
| O-83 | Ig | dimethomorph |
| O-84 | Ig | fludioxonil |
| 0-85 | Ig | metalaxyl |
| O-86 | Ig | fludioxinil |
| O-87 | Ig | difenoconazole |
| O-88 | Ig | flutriafol |
| O-89 | Ig | myclobutanil |
| O-90 | Ig | hymexazol |
| O-91 | Ig | triadimenol |
| O-92 | Ia | famoxadone |
| O-93 | Ib | famoxadone |
| O-94 | Ic | famoxadone |

(continued)

| No. | (I) | (II) |
|---|---|---|
| O-95 | Id | famoxadone |
| O-96 | Ie | famoxadone |
| O-97 | If | famoxadone |
| O-98 | Ig | famoxadone |
| O-99 | Ia | fenamidone |
| O-100 | Ib | fenamidone |
| O-101 | Ic | fenamidone |
| O-102 | Id | fenamidone |
| O-103 | Ie | fenamidone |
| O-104 | If | fenamidone |
| O-105 | Ig | fenamidone |
| O-106 | Ia | fosetly-aluminium |
| O-107 | Ib | Foselty-aluminium |
| O-108 | Ic | fosetly-aluminium |
| O-109 | Id | fosetly-aluminium |
| O-110 | Ie | fosetly-aluminium |
| O-111 | If | fosetly-aluminium |
| O-112 | Ig | fosetyl-aluminium |

Within the mixtures of table 3, the following mixtures are especially preferred: O-1, O-2, O-3, O-4, O-5, O-6, O-7, O-8, O-9, O-10, O-11, O-12, O-13, O-27, O-28, O-29, O-30, O-31, O-32, O-33, O-34, O-35, O-36, O-37, O-38, O-39, O-40, O-41, O-42, O-43, O-44, O-45, O-46, O-47, O-48, O-49, O-50, O-51, O-52, O-53, O-54, O-55, O-56, O-57, O-58, O-59, O-60, O-61, O-62, O-63, O-64, O-65, O-66, O-67, O-68, O-69, O-70, O-71, O-72, O-73, O-74, O-75, O-76, O-77, O-78, O-79, O-80, O-81, O-82, O-83, O-84, O-85, O-86, O-87, O-88, O-89, O-90, O-91, O-92, O-99, O-106, O-94, O-101, O-108, O-95, O-102, O-109, O-96, O-103, O-110, O-97, O-104, O-111, O-98, O-105, O-112.

Within this subset, the following mixtures are preferred: O-1, O-2, O-3, O-4, O-5, O-6, O-7, O-8, O-9, O-10, O-11, O-12, O-13, O-40, O-41, O-42, O-43, O-44, O-45, O-46, O-47, O-48, O-49, O-50, O-51, O-52, O-53, O-54, O-55, O-56,O-57, O-58, O-59, O-60, O-61, O-62, O-63, O-64, O-65, O-79, O-80, O-81, O-82, O-83, O-84, O-85, O-86, O-87, O-88, O-89, O-90, O-91, 0-92, O-99, O-106, 0-92, O-99, O-106, O-95, O-102, O-109, O-96, O-103, O-110, O-98, O-105.

The following mixtures are more preferred: O-1, O-2, O-3, O-4, O-5, O-6, O-7, O-8, O-9, O-10, O-11, O-12, O-13, O-40, O-41, O-42, O-43, O-44, O-45, O-46, O-47, O-48, O-49, O-50, O-51, O-52, O-53, O-54, O-55, O-56, O-57, O-58, O-59, O-60, O-61, O-62, O-63, O-64 and O-65, 0-92, O-99, O-106, 0-92, O-99, O-106, O-95, O-102, O-109, O-96, O-103.

The following mixtures are most preferred: O-1, O-2, O-3, O-4, O-5, O-6, O-7, O-8, O-9, O-10, O-11, O-12, O-13, 0-92, O-99 and O-106.

Utmost preference is given to O-11, 0-92, O-99 and O-106.

Herein, we have found that simultaneous, that is joint or separate, application of compound (I) and compound (II) or successive application of compound (I) and compound (II) allows enhanced control of pests, that means harmful plant diseases, compared to the control rates that are possible with the individual compounds (synergistic mixtures).

Advantageously, the inventive mixtures are suitable for controlling the following plant diseases: *Albugo* spp. (white rust) on ornamentals, vegetables (e. g. *A. candida*) and sunflowers (e. g. *A. tragopogonis*); *Alternaria* spp. (Alternaria leaf spot) on vegetables, rape (*A. brassicola* or *brassicae*), sugar beets (*A. tenuis*), fruits, rice, soybeans, potatoes (e. g. *A. solani* or *A. alternate*), tomatoes (e. g. *A. solani* or *A. alternate*) and wheat; *Aphanomyces* spp. on sugar beets and vegetables; *Ascochyta* spp. on cereals and vegetables, e. g. *A. tritici* (anthracnose) on wheat and A. *hordei* on barley; *Bipolaris* and *Drechslera* spp. (teleomorph: *Cochliobolus* spp.) on corn (e. g. *D. maydis*), cereals (e. g. *B. soro-*

*kiniana*: spot blotch), rice (e. g. *B. oryzae*) and turfs; *Blumeria* (formerly *Erysiphe*) *graminis* (powdery mildew) on cereals (e. g. on wheat or barley); *Botrytis cinerea* (teleomorph: *Botryotinia fuckeliana*: grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn, rice, sugar beets (e. g. *C. beticola*), sugar cane, vegetables, coffee, soybeans (e. g. *C. sojina* or *C. kikuchii*) and rice; *Cladosporium* spp. on tomatoes (e. g. *C. fulvum*: leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus,* anamorph: B. *sorokiniana*) and rice (e. g. *C. miyabeanus,* anamorph: *H. oryzae*); *Colletotrichum* (teleomorph: *Glomerella*) spp. (anthracnose) on cotton (e. g. *C. gossypii*), corn (e. g. *C. graminicola*), soft fruits, potatoes (e. g. *C. coccodes*: black dot), beans (e. g. *C. lindemuthianum*) and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri,* teleomorph: *Neonectria liriodendri:* Black Foot Disease) and ornamentals; *Dematophora* (teleomorph: *Rosellinia*) necatrix (root and stem rot) on soybeans; *Diaporthe* spp., e. g. *D. phaseolorum* (damping off) on soybeans; *Drechslera* (syn. *Helminthosporium,* teleomorph: *Pyrenophora*) spp. on corn, cereals, such as barley (e. g. *D. teres,* net blotch) and wheat (e. g. *D. tritici-repentis*: tan spot), rice and turf; Esca (dieback, apoplexy) on vines, caused by *Formitiporia* (syn. *Phellinus*) *punctata, F. mediterranea, Phaeomoniella chlamydospora* (earlier *Phaeoacremonium chlamydosporum*), *Phaeoacremonium aleophilum* and/or *Botryosphaeria obtusa; Elsinoe* spp. on pome fruits (*E. pyri*), soft fruits (*E. veneta:* anthracnose) and vines (*E. ampelina*: anthracnose); *Entyloma oryzae* (leaf smut) on rice; *Epicoccum* spp. (black mold) on wheat; *Erysiphe* spp. (powdery mildew) on sugar beets (*E. betae),* vegetables (e. g. *E. pisi),* such as cucurbits (e. g. *E. cichoracearum*)*,* cabbages, rape (e. g. *E. cruciferarum); Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum*); *Fusarium* (teleomorph: *Gibberella)* spp. (wilt, root or stem rot) on various plants, such as *F. graminearum* or *F. culmorum* (root rot, scab or head blight) on cereals (e. g. wheat or barley), *F. oxysporum* on tomatoes, *F. solani* on soybeans and *F. verticillioides* on corn; *Gaeumannomyces graminis* (take-all) on cereals (e. g. wheat or barley) and corn; *Gibberella* spp. on cereals (e. g. *G. zeae*) and rice (e. g. *G. fujikuroi:* Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e.g. *G. sabinae* (rust) on pears; *Helminthosporium* spp. (syn. *Drechslera,* teleomorph: *Cochliobolus*) on corn, cereals and rice; *Hemileia* spp., e.g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e.g. wheat or barley); *Microsphaera diffusa* (powdery mildew) on soybeans; *Monilinia* spp., e.g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e.g. *M. graminicola* (anamorph: *Septoria tritici,* Septoria blotch) on wheat or *M. fijiensis* (black Sigatoka disease) on bananas; *Peronospora* spp. (downy mildew) on cabbage (e.g. *P. brassicae),* rape (e.g. *P. parasitica),* onions (e.g. *P. destructor*)*,* tobacco (*P. tabacina)* and soybeans (e.g. *P. manshurica); Phakopsora pachyrhizi* and P. *meibomiae* (soybean rust) on soybeans; *Phialophora* spp. e. g. on vines (e. g. *P. tracheiphila* and P. *tetraspora*) and soybeans (e. g. *P. gregata:* stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola:* can and leaf spot) and soybeans (e. g. stem rot: *P. phaseoli,* teleomorph: *Diaporthe phaseolorum); Physoderma maydis* (brown spots) on corn; *Phytophthora* spp. (wilt, root, leaf, fruit and stem root) on various plants, such as paprika and cucurbits (e. g. *P. capsici),* soybeans (e. g. *P. megasperma*, syn. *P. sojae),* potatoes and tomatoes (e. g. *P. infestans:* late blight) and broad-leaved trees (e. g. *P. ramorum:* sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis*) and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or ‚rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, and asparagus (e. g. *P. asparagi*); *Pyrenophora* (anamorph: *Drechslera) tritici-repentis* (tan spot) on wheat or P. *teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum*); *Ramularia* spp., e. g. *R. collo-cygni* (Ramularia leaf spots, Physiological leaf spots) on barley and *R. beticola* on sugar beets; *Rhizoctonia* spp. on

cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum*) and soybeans (e. g. *S. rolfsii* or *S. sclerotiorum*); *Septoria* spp. on various plants, e. g. *S. glycines* (brown spot) on soybeans, *S. tritici* (Septoria blotch) on wheat and S. (syn. *Stagonospora*) nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S. turcicum,* syn. *Helminthosporium turcicum*) and turf; *Sphacelotheca* spp. (smut) on corn, (e. g. S. *reiliana:* head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria*] *nodorum*) on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans); Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli*) and sugar beets (e. g. *U. betae); Ustilago* spp. (loose smut) on cereals (e. g. *U. nuda* and *U. avaenae*), corn (e. g. *U. maydis:* corn smut) and sugar cane; *Venturia* spp. (scab) on apples (e. g. *V. inaequalis*) and pears; and *Verticillium* spp. (wilt) on various plants, such as fruits and ornamentals, vines, soft fruits, vegetables and field crops, e. g. *V. dahliae* on strawberries, rape, potatoes and tomatoes.

The inventive mixturs are also suitable for controlling harmful fungi in the protection of materials (e. g. wood, paper, paint dispersions, fiber or fabrics) and in the protection of stored products. As to the protection of wood and construction materials, the particular attention is paid to the following harmful fungi: Ascomycetes such as Ophiostoma spp., Ceratocystis spp., Aureobasidium pullulans, Sclerophoma spp., Chaetomium spp., Humicola spp., Petriella spp., Trichurus spp.; Basidiomycetes such as Coniophora spp., Coriolus spp., Gloeophyllum spp., Lentinus spp., Pleurotus spp., Poria spp., Serpula spp. and Tyromyces spp., Deuteromycetes such as Aspergillus spp., Cladosporium spp., Penicillium spp., Trichorma spp., Alternaria spp., Paecilomyces spp. and Zygomycetes such as Mucor spp., and in addition in the protection of stored products the following yeast fungi are worthy of note: Candida spp. and Saccharomyces cerevisae.

They are particularly important for controlling a multitude of fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers; and on the plant propagation material, such as seeds, and the crop material of these plants.

Preferably, these mixtures are used for controlling a multitude of fungi on field crops, such as potatoes sugar beets, tobacco, cereals such as wheat, rye, barley, oats, sorghum, rice, corn, cotton, rape, canola, legumes such as soybeans, peas and field beans, sunflowers, coffee or sugar cane; fruits; vines; ornamentals; or vegetables, such as cucumbers, tomatoes, onions, leeks, lettuce, beans or squashes.

The treatment of a plant or its growth locus or its propagation material, such as a seed, with the compound of formula I or a mixture according to the present invention of the invention can be accomplished in several ways. The components (I) and (II or III) may be applied directly to the propagules, especially the seed, and/or to the soil in which the seed is to be planted or before planting or transplanting, or for example, at the time of planting along with the seed (for example in-furrow application).

The compound (I) or a mixture according to the present invention may also comprise a solvent or solid carrier and compound (I) and in case a mixture is used compounds (II), (IIb) and (III) (and/or their salts) can be converted into customary types of agrochemical formulations, e.g. solutions, emulsions, suspensions, dusts, powders, pastes and granules together or separately. The formulation type depends on the particular intended purpose; in each case, it should ensure a fine and uniform distribution of the compound according to the invention.

Examples for formulation types are suspensions (SC, OD, FS), pastes, pastilles, wettable powders or dusts (WP, SP, SS, WS, DP, DS) or granules (GR, FG, GG, MG), which can be water-soluble or wettable, as well as gel formulations for the treatment of plant propagation materials such as seeds (GF).

Usually the formulation types (e.g. SC, OD, FS, WG, SG, WP, SP, SS, WS, GF) are employed diluted. Formulation types such as DP, DS, GR, FG, GG and MG are usually used undiluted.

The formulations are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).

The agrochemical formulations may also comprise auxiliaries which are customary in agrochemical formulations. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e.g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e.g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e.g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e.g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wtters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalene-sulfonic acid (Nekal® types, BASF, Germany),and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol® types, Clariant, Switzerland), polycarboxylates (Sokolan® types, BASF, Germany), polyalkoxylates, polyvinylamines (Lupasol® types, BASF, Germany), polyvinylpyrrolidone and the copolymers therof.

Examples for thickeners (i.e. compounds that impart a modified flowability to formulations, i. e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, U.S.A).

Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie).

Examples for suitable anti-freezing agents are ethylene glycol, propylene glycol, urea and glycerin.

Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Examples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples for tackifiers or binders are polyvinylpyrrolidons, polyvinylacetates, polyvinyl alcohols and cellulose ethers (Tylose®, Shin-Etsu, Japan).

Powders, materials for spreading and dusts can be prepared by mixing or concomitantly grinding the compounds

I (and optionally compound II) and, if appropriate, further active substances, with at least one solid carrier.

Granules, e.g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e.g., ammonium sulfate, ammonium phosphate, ammonium nitrate, ureas, and products of vegetable origin, such as cereal meal, tree bark meal, wood meal and nutshell meal, cellulose powders and other solid carriers.

Examples for formulation types are:

1. Composition types for dilution with water

i) Water-soluble concentrates (SL, LS)

10 parts by weight of compound (I), and optionally one compound selected from the group consisting of compounds (II), (IIb) and (III), according to the invention are dissolved in 90 parts by weight of water or in a water-soluble solvent. As an alternative, wetting agents or other auxiliaries are added. The active substance dissolves upon dilution with water. In this way, a formulation having a content of 10% by weight of active substance is obtained.

ii) Dispersible concentrates (DC)

20 parts by weight of compound (I), and optionally one compound selected from the group consisting of compounds (II), (IIb) and (III), according to the invention are dissolved in 70 parts by weight of cyclohexanone with addition of 10 parts by weight of a dispersant, e. g. polyvinylpyrrolidone. Dilution with water gives a dispersion. The active substance content is 20% by weight.

iii) Emulsifiable concentrates (EC) 15 parts by weight of compound (I), and optionally one compound selected from the group consisting of compounds (II), (IIb) and (III), according to the invention are dissolved in 75 parts by weight of xylene with addition of calcium dodecylbenzenesulfonate and castor oil ethoxylate (in each case 5 parts by weight). Dilution with water gives an emulsion. The composition has an active substance content of 15% by weight.

iv) Emulsions (EW, EO, ES)

25 parts by weight of compound (I), and optionally one compound selected from the group consisting of compounds (II), (IIb) and (III), according to the invention are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultraturrax) and made into a homogeneous emulsion. Dilution with water gives an emulsion. The composition has an active substance content of 25% by weight.

v) Suspensions (SC, OD, FS)

In an agitated ball mill, 20 parts by weight of compound (I), and optionally one compound selected from the group consisting of compounds (II), (IIb) and (III), according to the invention are comminuted with addition of 10 parts by weight of dispersants and wetting agents and 70 parts by weight of water or an organic solvent to give a fine active substance suspension. Dilution with water gives a stable suspension of the active substance. The active substance content in the composition is 20% by weight.

vi) Water-dispersible granules and water-soluble granules (WG, SG)

50 parts by weight of compound (I), and optionally one compound selected from the group consisting of compounds (II), (IIb) and (III), according to the invention are ground finely with addition of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substance. The composition has an active substance content of 50% by weight.

vii) Water-dispersible powders and water-soluble powders (WP, SP, SS, WS) 75 parts by weight of compound (I), and optionally one compound selected from the group consisting of compounds (II), (IIb) and (III), according to the invention are ground in a rotor-stator mill with addition of 25 parts by weight of dispersants, wetting agents and silica gel. Dilution with water gives a stable dispersion or solution of the active substance. The active substance content of the composition is 75% by weight.

viii) Gel (GF)

In an agitated ball mill, 20 parts by weight of compound (I), and optionally one compound selected from the group consisting of compounds (II), (IIb) and (III), according to the invention are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.

2. Composition types to be applied undiluted

ix) Dustable powders (DP, DS)
5 parts by weight of compound (I), and optionally one compound selected from the group consisting of compounds (II), (IIb) and (III), according to the invention are ground finely and mixed intimately with 95 parts by weight of finely divided kaolin. This gives a dustable composition having an active substance content of 5% by weight.
x) Granules (GR, FG, GG, MG)
0.5 parts by weight of compound (I), and optionally one compound selected from the group consisting of compounds (II), (IIb) and (III), according to the invention is ground finely and associated with 99.5 parts by weight of carriers. Current methods are extrusion, spray-drying or the fluidized bed. This gives granules to be applied undiluted having an active substance content of 0.5% by weight.
xi) ULV solutions (UL)
10 parts by weight of compound (I), and optionally one compound selected from the group consisting of compounds (II), (IIb) and (III), according to the invention are dissolved in 90 parts by weight of an organic solvent, e. g. xylene. This gives a composition to be applied undiluted having an active substance content of 10% by weight.

The agrochemical formulations generally comprise between 0.01 and 95%, preferably between 0.1 and 90%, most preferably between 0.5 and 90%, by weight of active substance(s). The active substance(s) are employed in a purity of from 90% to 100%, preferably from 95% to 100% (according to NMR spectrum).
Compositions, which are especially useful for the purposes of treatment of plant propagation materials, particularly seeds seed treatment are e.g.:

A Soluble concentrates (SL, LS)
D Emulsions (EW, EO, ES)
E Suspensions (SC, OD, FS)
F Water-dispersible granules and water-soluble granules (WG, SG)
G Water-dispersible powders and water-soluble powders (WP, SP, WS)
H Gel-Formulations (GF)
I Dustable powders (DP, DS)

These compositions can be applied to plant propagation materials, particularly seeds, diluted or undiluted.
The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the compounds or the compositions thereof, respectively, are applied on to the plant propagation material by a method such that germination is not induced, e.g. by seed dressing, pelleting, coating and dusting.
The compounds of formula I or the compounds mixtures of the present invention can be used as such or in the form of their compositions, e.g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compounds of formula I or the compounds mixtures of the present invention.
Aqueous application forms can be prepared from emulsion concentrates, pastes or wettable powders (sprayable powders, oil dispersions) by adding water. To prepare emulsions, pastes or oil dispersions, the compounds of formula I or the compounds mixtures of the present invention, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.
The active substance concentrations in the ready-to-use preparations can be varied within relatively wide ranges. In general, they are from 0.0001 to 10%, preferably from 0.001 to 1% by weight of compounds of formula I or the compounds mixtures of the present invention.
The compounds (I) or the compound mixtures of the present invention may also be used successfully in the ultra-low-volume process (ULV), it being possible to apply compositions comprising over 95% by weight of active substance, or even to apply the active substance without additives.
In another embodiment, the inventive composistions according to the present invention are used for reducing

or inhibiting the injury caused to plants by phythotoxic amounts of pesticides such as fungicides, herbicides and/or insecticides.

The compositions according to the present invention comprise a plant health effective amount of a compound (I) or a plant health effective amount of compound (I) and at least one compound selected from the group consisting of compounds (II), (IIb) and (III), wherein compound (I) and at least one compound selected from the group consisting of compounds (II), (IIb) and (III) provide synergistic plant health effects.

The compositions according to the present invention comprising the novel mixtures according to the present invention comprise a pesticidally effective amount of compound (I) and compound (II), wherein compound (I) and (II) provide synergistic pesticidal effects.

In the methods according to the invention, the application rates of the novel mixtures according to the invention are from 0,3 g/ha to 2000 g/ha, preferably 5 g/ha to 2000 g/ha, more preferably from 20 to 1000 g/ha, in particular from 20 to 500 g/ha, depending on the type of compound and the desired effect.

In the treatment of plant propagules, preferably seed, application rates of compound (I) are generally from 0,001 to 1000 g per 250 kg of plant propagules, preferably seed, preferably from 0,01 to 500 g per 100 kg, in particular from 0,1g to 250 g per 100 kg of plant propagules, preferably seed.

In the treatment of plant propagules, preferably seed, application rates of mixture of the present invention are generally from 0,001 to 1000 g per 250 kg of plant propagules, preferably seed, preferably from 0,01 to 500 g per 100 kg, in particular from 0,1g to 250 g per 100 kg of plant propagules, preferably seed.

Various types of oils, wetters, adjuvants, herbicides, bactericides, other fungicides and/or pesticides may be added to the active substance(s) or the compositions comprising them, if appropriate not until immediately prior to use (tank mix). These agents can be admixed with the compound I or the mixtures according to the invention according to the invention in a weight ratio of 1:100 to 100:1, preferably 1:10 to 10:1.

Adjuvants which can be used are in particular organic modified polysiloxanes such as Break Thru S 240®; alcohol alkoxylates such as Atplus 245®, Atplus MBA 1303®, Plurafac LF 300® and Lutensol ON 30@; EO/PO block polymers, e.g. Pluronic RPE 2035® and Genapol B®; alcohol ethoxylates such as Lutensol XP 80®; and dioctyl sulfosuccinate sodium such as Leophen RA®.

The compound (I) according to the invention or the mixtures according to the invention can, in the use form as fungicides, also be present together with other active substances, e.g. with herbicides, insecticides, growth regulators, fungicides or else with fertilizers or inoculants, as premix or, if appropriate, not until immediately prior to use (tank mix).

If a mixture according to the present invention is used, the compound (I) and the compounds selected from the group consisting of compounds (II), (IIb) and (III) can be used individually or already partially or completely mixed with one another to prepare the composition according to the invention. It is also possible for them to be packaged and used further as combination composition such as a kit of parts.

In one embodiment of the invention, the kits may include one or more, including all, components that may be used to prepare the composition e.g. in form of an agrochemical formulation. These kits may include compound (I) and/or an adjuvant component and/or a insecticide component and/or a growth regulator component and/or a herbicide and/or an inoculant. One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i.e. not pre-formulated. As such, kits may include one or more separate containers such as vials, cans, bottles, pouches, bags or canisters, each container containing a separate component for an agrochemical composition. In both forms, a component of the kit may be applied separately from or together with the further components or as a component of a combination composition according to the invention for preparing the composition according to the invention.

The user applies the composition according to the invention usually from a predosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquor or the agrochemical composition according to the invention is thus obtained. Usually, 50 to 500 liters of the ready-to-use spray liquor are applied per hectare of agricultural useful area, preferably 80 to 400 liters.

According to one embodiment, individual components of the composition according to the invention such as parts of a kit or parts of a binary or ternary mixture may be mixed by the user himself in a spray tank and further auxiliaries may be added, if appropriate (tank mix).

The following examples are intended to illustrate the invention, but without imposing any limitation.

**Examples**

Example 1

Corn (*Zea maydis* var. M314A10) seeds were treated in a Hege 11 seed treater in a total slurry volume of 1000 ml/100kg seed. Treatments comprised:

1) Water (control)
2) Pyraclostrobin (S8) (2,5 g a.i./100kg);
3) Compound Ia (1g a.i./100kg);
4) Pyraclostrobin (S8) (2,5g a.i./100kg) + compound Ia (1g a.i./100kg).

CF Clear Binder (19 ml/100 kg seed) and color coat blue (13 ml/100 kg seed) were added to all treatments including the check. Following seed treatment, seeds were allowed to dry overnight. Seeds were planted in plastic pots (10 cm x 10 cm x 12 cm). Experiments were conducted using natural soil (sandy loam soil,source NC, U.S.A). Pots were placed inside the greenhouse in a completely randomized design. Seedlings were grown at 25°C, until they reached growth stages 10 (first leaf through coleoptile, BBCH Scale). At growth stages 10, seedlings were placed in a completely randomized design in a low temperature incubator (Thermo Electron Corporation) and exposed to - 5 °C during 3 hrs. At the time of cold exposure, pots were at field capacity. Percentage of seedling mortality for each treatment was recorded 3 days after the cold treatment.

The efficacy of induced cold tolerance (E) was calculated as % decrease of seedling mortality in the treatments compared to the untreated control:

$$E = 1\text{-}a/b \cdot 100$$

a corresponds to the seedling mortality (%) of the treated plants and
b corresponds to the seedling mortality (%) of the untreated (control) plants

An efficacy of 0 means the seedling mortality of the treated plants corresponds to that of the untreated control plants; an efficacy of 100 means the treated plants showed a decrease in seedling mortality of 100%.

The expected efficacy of the combination of the active compounds were estimated using Colby's formula (Colby, S.R., Calculating synergistic and antagonistic responses of herbicide combinations, Weeds, 15, pp. 20-22, 1967) and compared with the observed efficacy.

$$\text{Colby´s formula:} \qquad E = x + y - x \cdot y/100$$

E expected efficacy, expressed in % of the untreated control, when using the mixture of the active compounds A and B at the concentrations a and b
x efficacy, expressed in % of the untreated control, when using the active ingredient A at the concentration a
y efficacy, expressed in % of the untreated control, when using the active ingredient B at the concentration b

Table 4: Mortality of seedlings (%) after exposure to cold temperature

| Compound applied | Application rate (g a.i./100kg seed) | Seedling mortality (mean %) |
|---|---|---|
| | | GS 10 (3 hrs) |
| Water (control) | 0 | 27 (a) |
| Pyraclostrobin (S8) | 2,5 | 21 (c) |
| Compound Ia | 1 | 23 (b) |
| Pyraclostrobin + compound Ia | 2,5<br>1 | 14 (d) |

Means followed by the same letter (a), (b), (c) or (d) do not significantly differ (P = 0,05).

As can be seen in table 4, after the application of compound Ia the seedling mortality, as an indicator of plant

vigor, was significantly decreased, demonstrating the applicablitiy of the compound Ia for increasing the health of plants according to the present invention.

The mixture (which corresponds to the above defined mixture M-2 in table 1) of pyraclostrobin (S8) and compound Ia provided even greater protection against cold temperatures (abiotic stress) than each component individually (tables 4 and 5). The observed protection against cold temperature (increase in cold stress tolerance) based on the combination (mixture) of pyraclostrobin (S8) and compound Ia was greater than the expected values based on the Colby equation, thus demonstrating a synergistic plant health effect of the fungicide mixture (S8 + compound Ia).

Table 5: Efficacy (%) of cold tolerance after cold temperature exposure.

| Compound applied | Application rate (g a.i./100kg seed) | Expected efficacy (%) | Observed efficacy (%) GS 10 (3 hrs) |
|---|---|---|---|
| Water (control) | 0 | | 0 |
| Pyraclostrobin (S8) | 2,5 | | 22 |
| Compound Ia | 1 | | 15 |
| Pyraclostrobin + compound Ia | 2,5<br>1 | 33,7 | 48 |

Example 2

Soybeans were grown in 2008 in the Rondonopolis region, Mato Grosso, Brazil. The variety TMG 103 RR was planted at a seeding rate of 45 kg/ha. The trial was setup as randomized bloc design with 4 replications. Plot size was 10 $m^2$. The soybean seed was treated prior to planting with either orysastrobin (S6), compound Ia or was left untreated (Control). Compound Ia was used as an FS formulation (100 g a.i./L) with a dose rate of 500 ml/100kg seed (50 g a.i./100 kg). Orysastrobin (S6) was applied as an FS formulation (250 g a.i./L) with a dose rate of 300 ml per 100 kg seed (75 g a.i./100 kg). In the combination treatments of compound Ia and orysastrobin, both formulations were applied in a sequence. The formulations were applied in a total slurry volume of 600 ml/100 kg of seed.

The observed efficacy (E) of the compounds on crop emergence and crop establishment as an indicator of plant vitality and plant vigor was determined by counting the plants in a row on a distance of 5 m at 12 and 33 days after planting.

The efficacy of the fungicidal treatments was calculated as the increase in the number of plants in the treatments compared to the control (%):

$$E = (a/b - 1) \cdot 100$$

a corresponds to the number in the treated and
b corresponds to the number of plants in the untreated (control) plots

The expected efficacy of the combination of the active compounds was estimated using Colby's formula (see example 1 above)

As can be seen in table 6, after the application of compound Ia the number of plants, as an indicator of plant vigor, was significantly increased, demonstrating the applicablitiy of the compound Ia for increasing the health of plants according to the present invention.

The combination (mixture) of orysastrobin and compound Ia (which corresponds to the above defined mixture M-1 in table 1) provided even greater improvement of crop emergence (number of plants 12 days after planting) and crop establishment (number of plants 33 days after planting) than each component individually (table 6).

The observed efficacy for crop emergence, as an indicator of plant vigor, for the mixture of orysastrobin and compound Ia was greater than expected values based on the Colby equation, thus demonstrating a synergistic effect of the fungicide mixture according to the present invention (table 7).

Table 6: Emergance and crop establishement determined as plant population density

| Fungicide treatment | Application rate (g a.i./ 100kg seed) | Number of plants per 5 m distance (mean) | Number of plants per 5 m distance (mean) |
|---|---|---|---|
| | | 12 days after planting | 33 days after planting |
| (Control (untreated) | 0 | 35 (c) | 34 (d) |
| Orysastrobin (S6) | 75 | 55 (ab) | 52 (ab) |
| Compound Ia | 50 | 49 (b) | 45 (bc) |
| Orysastrobin + compound Ia | 75<br>50 | 62 (a) | 58 (a) |
| Means followed by the same letter (a), (b), (c) or (d) do not significantly differ (P = 0,05, Tukey's HSD) | | | |

Table 7: Efficacy of the treatments

| Fungicide treatment | Application rate (g a.i./100kg seed) | Expected efficacy (%) | Observed efficacy (%) | Expected efficacy (%) | Observed efficacy (%) |
|---|---|---|---|---|---|
| | | 12 days after planting | | 33 days after planting | |
| Control (untreated) | 0 | | 0 | | 0 |
| Orysastrobin (S6) | 75 | | 57,1 | | 52,9 |
| Compound Ia | 50 | | 40,0 | | 32,3 |
| Orysastrobin +compound Ia | 75<br>50 | 74,3 | 77,1 | 68,1 | 70,6 |

## Claims

1. Mixture, comprising

   (I) N-(3',4'-dichloro-5-fluorobiphenyl-2-yl)-3-difluoromethyl-1-methylpyrazole-4-carboxamide (common name bixafen); and
   (II) prothioconazole.

2. The mixture according to claim 1, wherein N-(3',4'-dichloro-5-fluorobiphenyl-2-yl)-3-difluoromethyl-1-methylpyrazole-4-carboxamide and prothioconazole are present in a weight ratio of from 100:1 to 1:100.

3. The mixture according to claim 2, wherein N-(3',4'-dichloro-5-fluorobiphenyl-2-yl)-3-difluoromethyl-1-methylpyrazole-4-carboxamide and prothioconazole are present in a weight ratio of from 50:1 to 1:50.

4. The mixture according to claim 3, wherein N-(3',4'-dichloro-5-fluorobiphenyl-2-yl)-3-difluoromethyl-1-methylpyrazole-4-carboxamide and prothioconazole are present in a weight ratio of from 20:1 to 1:20.

5. The mixture according to claim 4, wherein N-(3',4'-dichloro-5-fluorobiphenyl-2-yl)-3-difluoromethyl-1-methylpyrazole-4-carboxamide and prothioconazole are present in a weight ratio of 1:10 to 10:1.

6. The mixture according to any of the preceding claims, wherein N-(3',4'-dichloro-5-fluorobiphenyl-2-yl)-3-difluoromethyl-1-methylpyrazole-4-carboxamide and prothioconazole are present in synergistically effective amounts.

7. A method for controlling pests, wherein the pests, their habitat, breeding grounds, their locus or the plants to be protected against pest attack, the soil or seed are treated with an effective amount of the mixture as defined in any of the preceding claims.

**8.** Seed, comprising the mixture as defined in any of claims 1 to 6 in an amount of from 0,001 to 1000 g per 250 kg of seeds.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0182701 A
- EP 2008051672 W
- WO 07104658 A
- WO 05018324 A
- WO 07017416 A
- EP 2008051331 W
- EP 2008051375 W
- WO 08000377 A
- WO 07128756 A
- EP 08152059
- EP 08155881
- EP 07119858
- EP 2008051955 W
- EP 545099 A
- EP 589301 A
- EP 737682 A
- EP 824099 A
- WO 9909013 A
- WO 03010149 A
- WO 03070705 A
- WO 03074491 A
- WO 04005242 A
- WO 04035589 A
- WO 04067515 A
- WO 06087343 A
- US 5914451 A
- US 5866775 A
- US 5804425 A
- US 5776760 A
- US 5633435 A
- US 5627061 A
- US 5463175 A
- US 5312910 A
- US 5310667 A
- US 5188642 A
- US 5145783 A
- US 4971908 A
- US 4940835 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A


### Non-patent literature cited in the description


- The Pesticide Manual. British Crop Protection Council, 2003
- **BROWNING.** Agglomeration. *Chemical Engineering,* 04 December 1967, 147-48
- Perry's Chemical Engineer's Handbook. McGraw-Hill, 1963, 8-57
- **KLINGMAN.** Weed Control as a Science. J. Wiley & Sons, 1961
- **HANCE et al.** Weed Control Handbook. Blackwell Scientific, 1989
- **MOLLET, H ; GRUBEMANN, A.** Formulation technology. Wiley VCH Verlag, 2001
- **COLBY, S.R.** Calculating synergistic and antagonistic responses of herbicide combinations. *Weeds,* 1967, vol. 15, 20-22